# EUROPEAN PATENT APPLICATION

(11) **EP 0 366 145 A2**
(43) Date of publication of application: **02.05.1990**
(21) Application number: 89120011.5
(22) Date of filing: 27.10.1989
(51) Int. Cl.: G03C 1/83

(54) **Silver halide photographic material**

(30) Priority: 27.10.1988 JP 271614/88
(71) Applicant: FUJI PHOTO FILM CO., LTD., Kanagawa (JP)
(72) Inventor: Adachi, Keiichi, Minami Ashigara-shi Kanagawa (JP); Katoh, Kazunobu, Minami Ashigara-shi Kanagawa (JP); Ito, Tadashi, Minami Ashigara-shi Kanagawa (JP); Arakawa, Jun, Minami Ashigara-shi Kanagawa (JP); Shiba, Keisuke, Minami Ashigara-shi Kanagawa (JP)
(74) Representative: Patentanwälte Dr. Solf & Zapf

(57) **Abstract**

A silver halide photographic material is diclosed, comprising a support having thereon at least a photographic emulsion layer and a non-photosensitive hydrophilic colloid layer, the emulsion layer or colloid layer containing at least one type of dye represented by the following general formula (I): 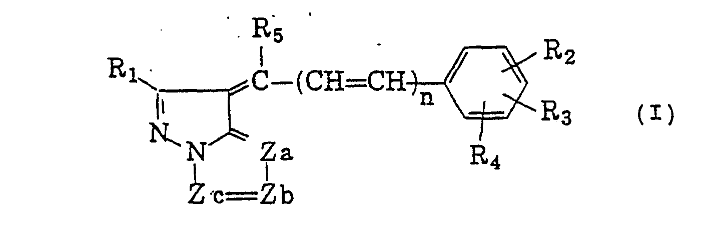 wherein:
R₁ represents an alkyl group, aryl group, alkoxy group, aryloxy group, acyl group, carboxyl group, alkoxycarbonyl group, aryloxycarbonyl group, amido group, carbamoyl group, alkylcarbamoyl group, dialkylcarbamoyl group, alkylsulfonamido group, arylsulfonamido group, sulfamoyl group, alkylsulfamoyl group, dialkylsulfamoyl group, arylsulfamoyl group, mono- or dialkylamino group, arylamino group, ureido group, alkylsulfonyl group, arylsulfonyl group, hydroxyl group, cyano group or halogen atom;
R₂, R₃ and R₄ each independently represents a hydrogen atom, halogen atom, alkyl group, alkoxy group, alkylamino group, dialkylamino group, arylamino group or diarylamino group;.
Rs represents a hydrogen atom, alkyl group or benzyl group; Za, Zb and Zc each represents -N = or 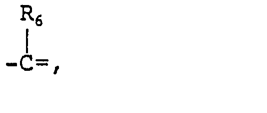 wherein R₆ represents an alkyl group or aryl group;
n represents 0 or 1; and

at least one carboxyl group, alkylsulfonamido group or arylsulfonamido group is contained in the molecule. The material is irreversibly decolored by photographic processing and the dye has no adverse effect on the photographic characteristics of the emulsion even after the dyed layers have aged.

## Description

### FIELD OF THE INVENTION

This invention relates to silver halide photographic materials having a dyed hydrophilic colloid layer, and in particular to silver halide photographic materials having a hydrophilic colloid layer containing dyes which decolor and/or elute easily in the photographic processing stage in addition to being photographically inert.

### BACKGROUND OF THE INVENTION

In silver halide photographic materials, photographic emulsion layers or other layers are often colored in order to absorb light of a specific wavelength region.

When it is necessary to control the spectral composition of the light incident upon the photographic emulsion layer, a colored layer is provided on the photographic material on the side further from the support than the photographic emulsion layer. A colored layer of this kind is known as a filter layer. When there is a plurality of photographic emulsion layers as in multilayer color photosensitive materials, filter layers may also be positioned between these.

Colored layers are provided between the photographic emulsion layers and the support or on the other side to the photographic emulsion layers on the support with a view to preventing image fading, which is to say halation. This is caused by light which is scattered while passing through or after passing through the photographic emulsion that is reflected at the interface between the emulsion layer and the support or at the surface of the photosensitive material on the opposite side to the emulsion layer and ia again made incident upon the photographic emulsion. A colored layer of this kind is known as an antihalation layer. With multilayer color photosensitive materials, antihalation layers are sometimes placed between each layer.

Moreover, with X-ray photosensitive materials, colored layers are provided as crossover cutout filters of a kind which reduce crossover light in order to improve sharpness.

Photographic emulsion layers are also colored in order to prevent the reduction in image sharpness which is caused by the scattering of light in the photographic emulsion layers (this phenomenon is generally known as irradiation).

There are many cases when such layers for coloring will be composed of hydrophilic colloids and therefore dyes are commonly included in such layers in order to color them. Such a dye has to satisfy the following conditions:
(1) It must have an appropriate spectral absorption for the intended use.
(2) It must be photochemically inert. Meaning, it must not exert any adverse influence, in the chemical sense, on the performance of the silver halide photographic emulsion layer. For example, it should not cause reduction in speed, latent image fading, or fogging.
(3) It must not retain a color by discoloration or dissolution during the photographic processing and after the processing, be eliminated by dissolution without any harmful discoloration in the photographic material.

Those in the industry have expended much effort in the discovery of dyes which satisfy these conditions, and the dyes mentioned below are known. For example, the oxonol dyes having a pyrazolone nucleus or a barbituric acid nucleus disclosed, for example, in British Patents 506,385, 1,177,429, 1,311,884, 1,338,799, 1,385,371, 1,467,214, 1,433,102 and 1,553,516, JP-A-48-85130, JP-A-49-114420, JP-A-50-147712, JP-A-55-161233, JP-A-58-143342, JP-A-59-38742, JP-A-59-111641, JP-A-59-111640 (the term "JP-A" as used herein means an "unexamined published Japanese patent application) and U.S. Patents 3,247,127, 3,469,985 and 4,078,933; other oxonol dyes disclosed, for example, in U.S. Patents 2,533,472 and 3,379,533 and British Patent 1,278,621; the azo dyes disclosed, for example, in British Patents 575,691, 680,631, 599,623, 786,907, 907,125 and 1,045,609, U.S. Patent 4,255,326 and JP-A-59-211043; the azomethine dyes disclosed, for example, in JP-A-50-100116, JP-A-54-118247 and British Patents 2.014,598 and 750,031; the anthraquinone dyes disclosed in U.S. Patent 2,865,752; the arylidene dyes disclosed, for example, in U.S. Patents 2,538,009, 2,688,541 and 2,538,008, British Patents 584,609 and 1,210,252, JP-A-50-40625, JP-A-51-3623, JP-A-51-10927, JP-A-54-118247, JP-B-48-3286 and JP-B-59-37303 (the term "JP-B" as used herein means an "examined Japanese patent publication"); the styryl dyes disclosed, for example, in JP-B-28-3082, JP-B-44-16594 and JP-B-59-28898: the triarylmethane dyes disclosed, for example. in British Patents 446,583 and 1,335,422 and JP-A-59-228250: the merocyanine dyes disclosed, for example, in British Patents 1,075,653, 1,153,341, 1,284,730, 1,475,288 and 1.542.807: and the cyanine dyes disclosed, for example, in U.S. Patents 2,843,486 and 3,294,539.

Of these, oxonol dyes having two pyrazolone nuclei have come to be used as useful dyes in photosensitive materials since they have properties whereby they are decolored in developing solutions containing sulfites and have little adverse effect on photographic emulsions.

There are problems, however, among the dyes belonging to this family. Even though they have little effect on the photographic emulsion in itself, they bring about spectral sensitization in unwanted regions in spectrally sensitized emulsions and they cause speed reduction which is thought to originate in the fact that they desorb sensitizing dyes.

Further, they have been known to remain after processing due to the increasing rapidity of the development processes which have come to be used in recent years. The use of dyes which are highly reactive with sulfite ions has been proposed in order to overcome this problem. But in this case, the loss of stability in the photographic film and a reduction in speed are brought about upon ageing and the combination prevents the desired photographic effects from being obtained.

When the colored layer is a filter layer or when it is an antihalation layer placed on the same side as the photographic emulsion layer on the support, it is normally considered necessary that such a layer is selectively colored and that the coloration essentially does not extend into other layers. The reason for selective coloring is that, when it is not done, not only is the effect of the filter layer or the antihalation layer reduced, but harmful spectral effects are also exerted on other layers.

There are a number of methods for the selective coloration of specific hydrophilic colloid layers. The most frequently used is the method in which a hydrophilic polymer containing a moiety having an opposite charge to that of the dye ion is concomitantly introduced into the hydrophilic colloid layer as a mordant. This localizes the dye in a specific layer by the synergistic action between the hydrophilic polymer and the dye molecule (which can be regarded as a hydrophobic bond and the attraction due to the charge).

If the layer to which the dye has been added and another hydrophilic colloid layer touch in the wet state when a mordanting method has been used, however, a portion of the dye will frequently be diffused from the former to the latter. Such dye diffusion depends on the chemical structure of the mordant, and it can also depend on the chemical structure of the dye.

Further, when macromolecular mordants are used, some coloration is particularly liable to remain on the photosensitive material after photographic processing, particularly with shortened processing times. It is thought that this is because dyes and reversible leuco products remain in the layers containing the mordants. This apparently results because a certain degree of bonding power between mordant and dye remains even though this bonding power is very weak in alkaline solutions such as developing solutions.

Further, by way of other means of retaining dyes in specific layers in the photographic material, it is known to introduce the dye as a dispersing solid as disclosed in JP-A-56-12639, JP-A-55-155350, JP-A-55-155351, JP-A-52-92716, JP-A-63-197943, European Patents 0,015,60181 and 0,276,566A1 and World Patent 88/04794. But, according to our experiments, if dyes are observed to diffuse to other layers or if rapid processing is carried out, the dyes are seen to remain in photosensitive materials after photographic processing and the desired effects are not obtained.

### SUMMARY OF THE INVENTION

Thus, an object of this invention is to provide silver halide photographic materials in which the hydrophilic colloid layers are colored by dyes that are irreversibly decolored by photographic processing and have no adverse effect on the photographic characteristics of photographic emulsions.

Another object of this invention is to provide silver halide photographic materials in which only the desired hydrophilic colloid layers are sufficiently dyed by the dyes, and moreover, have outstanding decoloration properties upon photographic processing.

Another object of this invention is to provide silver halide photographic materials having dyed hydrophilic colloid layers which do not exert any harmful effects on the photographic characteristics of the silver halide emulsion layers even after the dyed hydrophilic colloid layers have aged.

### DETAILED DESCRIPTION OF THE INVENTION

The abovementioned objects are achieved by the following materials.
(1) A silver halide photographic material comprising a support having thereon at least a photographic emulsion layer and a non-photosensitive hydrophilic colloid layer, the emulsion layer or colloid layer containing at least one type of dye represented by the following general formula (I): 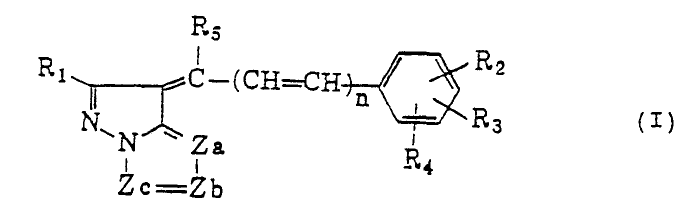 wherein:
   R₁ represents an alkyl group, aryl group, alkoxy group, aryloxy group, acyl group, carboxyl group, alkoxycarbonyl group, aryloxycarbonyl group, amido group, carbamoyl group, alkylcarbamoyl group, dialkylcarbamoyl group, alkylsulfonamido group, arylsulfonamido group, sulfamoyl group, alkylsulfamoyl group, dialkylsulfamoyl group, arylsulfamoyl group, mono- or dialkylamino group, arylamino group, ureido group, alkylsulfonyl group, arylsulfonyl group, hydroxyl group, cyano group or halogen atom;
   R₂, R₃ and R₄ each independently represents a hydrogen atom, halogen atom, alkyl group, alkoxy group, alkylamino group, dialkylamino group, arylamino group or diarylamino group;.
   Rs represents a hydrogen atom, alkyl group or benzyl group;
   Za, Zb and Zc each represents -N = or 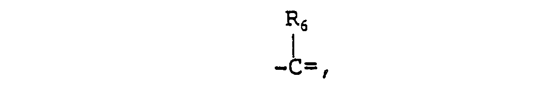 wherein Rs represents an alkyl group or aryl group;
   n represents 0 or 1; and

   at least one carboxyl group, alkylsulfonamido group or arylsulfonamido group is contained in the molecule.
(2) A silver halide photographic material containing a dye of the abovementioned general formula (I) dispersed in the form of a fine powder.

The dyes represented by general formula (I) are explained in more detail.

In the formula, R₁ represents an alkyl group with 1 - 4 carbon atoms (for example, methyl, ethyl, 2-methoxyethyl, 2-cyanoethyl, 2-hydroxyethyl, 3-carboxypropyl, benzyl); aryl group with 6 - 10 carbon atoms (for example, phenyl, p-carboxyphenyl, m-hydroxyphenyl, p-methylphenyl, p-methanesulfonamidophenyl); alkoxy group with 1 - 4 carbon atoms (for example, methoxy, ethoxy, 2-methoxyethoxy); aryloxy group with 6 - 10 carbon atoms (for example, phenoxy, p-methylphenoxy, p-carboxyphenoxy); acyl group with 2 - 10 carbon atoms (for example, acetyl, benzoyl); carboxyl group; alkoxycarbonyl group with 2 - 6 carbon atoms (for example, methoxycarbonyl, ethoxycarbonyl, 2-methoxyethoxycarbonyl); aryloxycarbonyl group with 7 - 10 carbon atoms (for example, phenoxycarbonyl, p-methylphenoxycarbonyl); amido group with 1 - 6 carbon atoms (for example, acylamino, N-methylacylamino); carbamoyl group, alkylcarbamoyl group with 2 - 6 carbon atoms (for example, methylcarbamoyl, 2-hydroxyethylcarbamoyl); dialkylcarbamoyl group with 3 - 7 carbon atoms (for example, dimethylcarbamoyl, di-2-hydroxyethylcarbamoyl); alkylsulfonamido group with 1 - 6 carbon atoms (for example, methanesulfonamido, n-propylsulfonamido, N-methylmethanesulfonamido); arylsulfonamido group with 6 -10 carbon atoms (for example, benzenesulfonamido, p-methylbenzenesul- fonamido); sulfamoyl group; alkylsulfamoyl group with 1 - 6 carbon atoms (for example, methylsulfamoyl, ethylsulfamoyl); dialkylsulfamoyl group with 2 - 6 carbon atoms (for example, dimethylsulfamoyl, diethylsulfamoyl); arylsulfamoyl group with 6 - 10 carbon atoms (for example, phenylsulfamoyl, tolylsulfamoyl); mono-or dialkylamino group with 1 - 6 carbon atoms (for example, methylamino, dimethylamino); arylamino group (for example, phenylamino, p-methoxyphenylamino); ureido group (for example, ureido, methylureido); alkylsulfonyl group with 1 - 6 carbon atoms (for example, methanesulfonyl, n-propylsulfonyl); arylsulfonyl group (for example, phenylsulfonyl); hydroxyl group; cyano group; or halogen atom (for example, chlorine, bromine, fluorine).
R₂, R₃ and R₄ each independently represents a hydrogen atom; halogen atom (for example, chlorine, bromine. fluorine); alkoxy group with 1 - 4 carbon atoms (for example, methoxy, ethoxy); alkyl group with 1
- 4 carbon atoms (for example, methyl, ethyl); alkylamino group with 1 - 6 carbon atoms (for example, methylamino, ethylamino); dialkylamino group with 1 -6 carbon atoms (for example, dimethylamino, diethylamino, dicarboxymethylamino, N-methyl-N-carboxymethylamino, dihydroxyethylamino, N-ethyl-N-methanesulfonamidoethyl); arylamino group (for example, N-methyl-N-phenylamino, N-methyl-N-p-carboxyphenyl); or diarylamino group (for example, diphenylamino). Further, R₂, R₃ and R4. may form 5 to 6- membered rings via nitrogen atoms (for example, julolidine).
R₅ represents a hydrogen atom; an alkyl group with 1 - 4 carbon atoms (for example, methyl, ethyl); or a benzyl
Za, Zb and Zc each represents -N = or 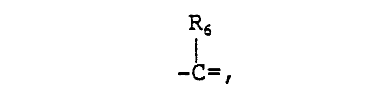 wherein R₆ represents an alkyl group with 1 - 10 carbon atoms (for example, methyl, ethyl, carboxyethyl); or aryl group with 6 -10 carbon atoms (for example, phenyl, p-carboxyphenyl).
n represents 0 or 1.
At least one carboxyl group, alkylsulfonamido group, or arylsulfonamido group is contained in the molecule.

Specific examples of general formula (1) used in this invention are now given, but the invention is not limited to these.

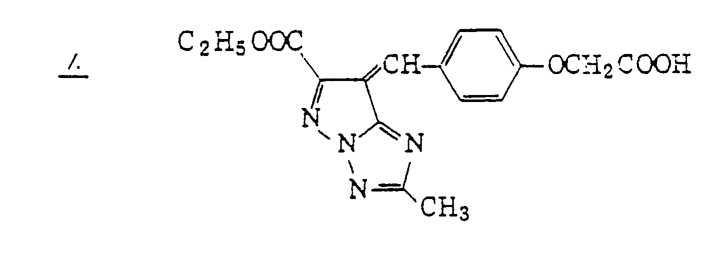

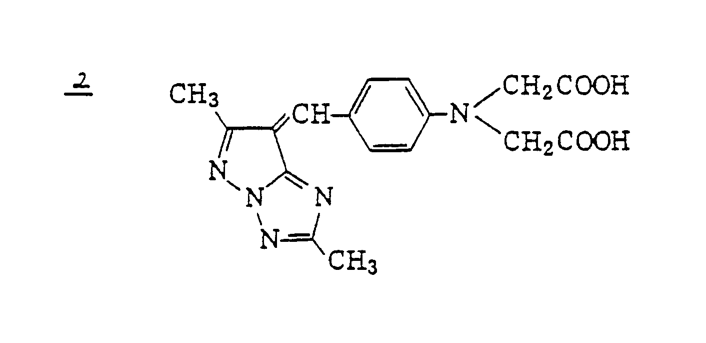

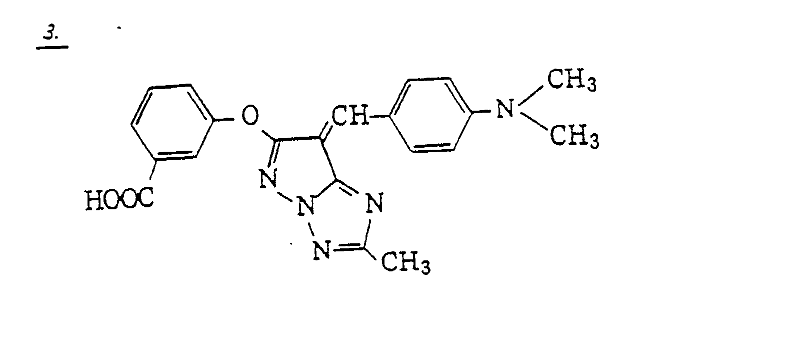

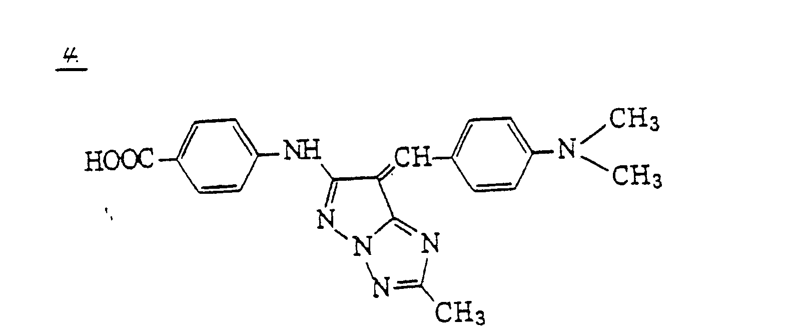

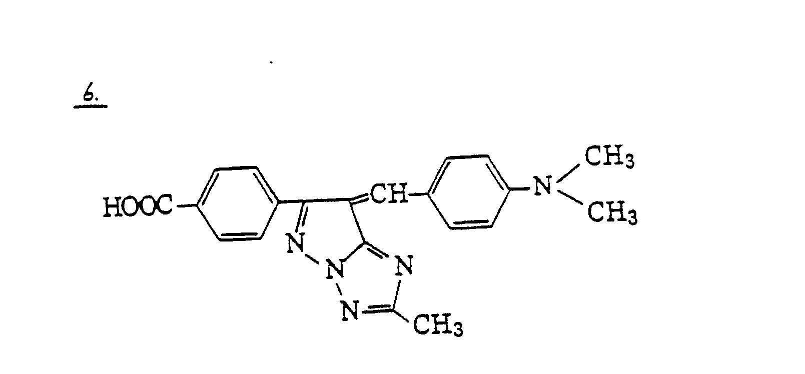

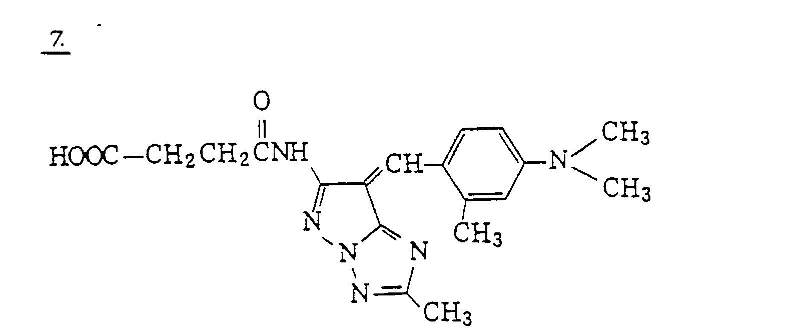

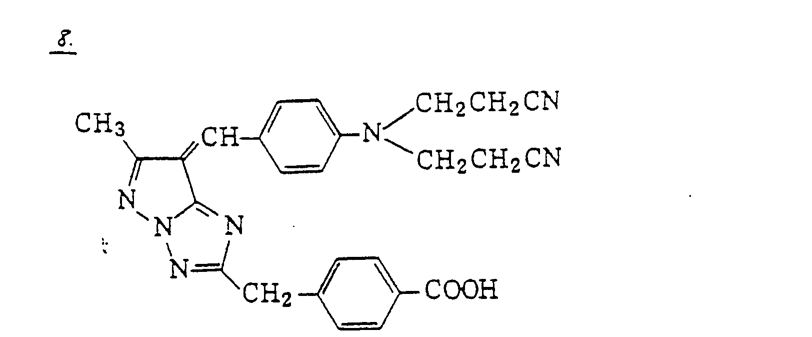

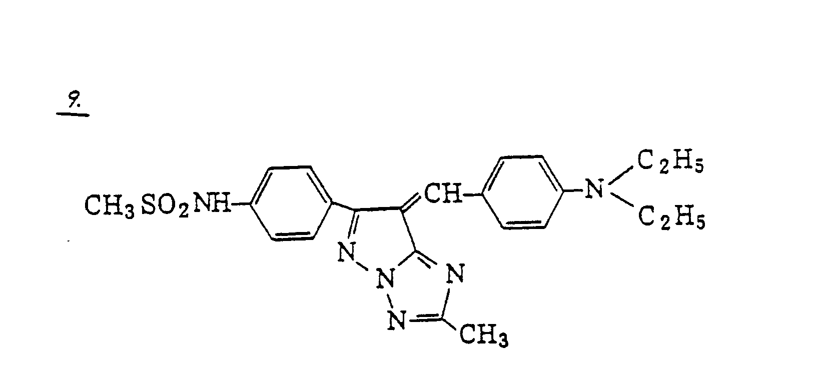

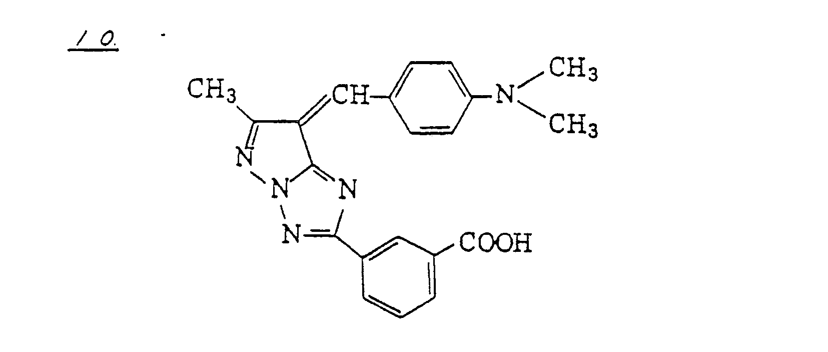

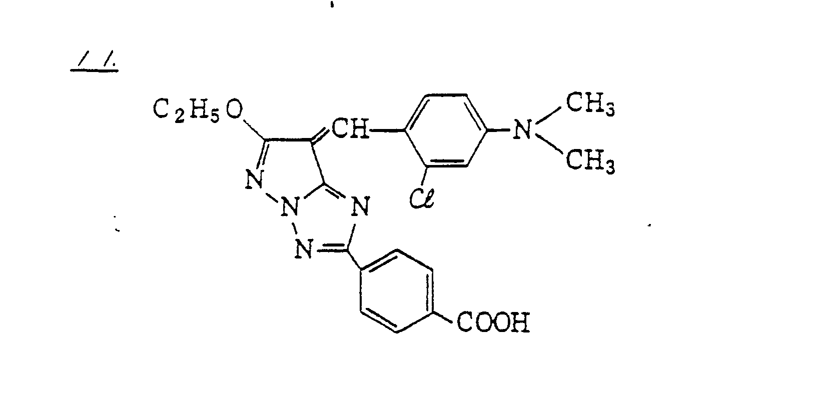

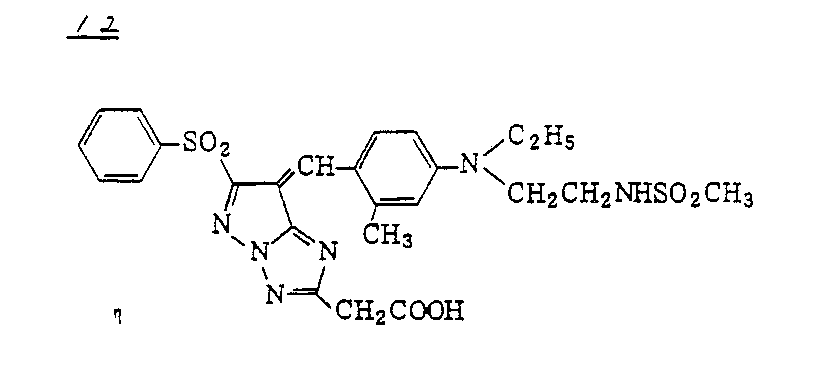

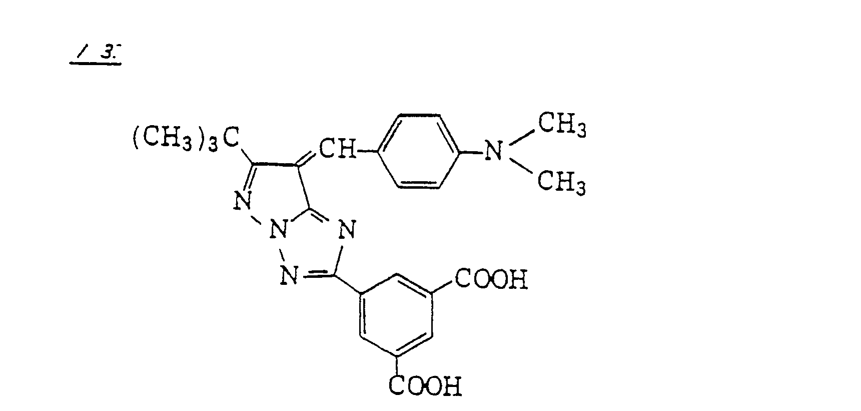

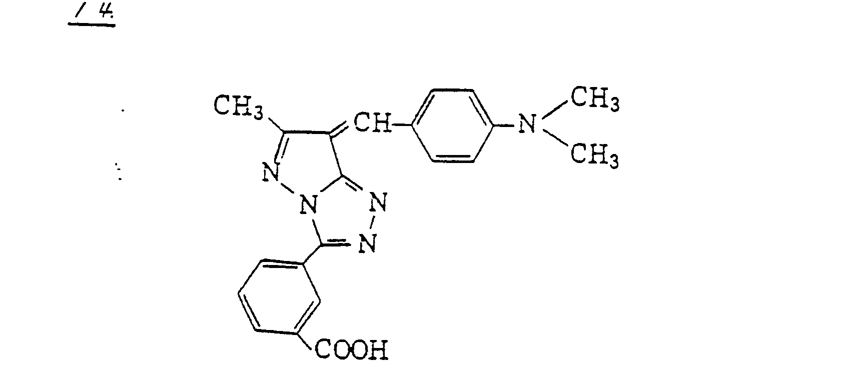

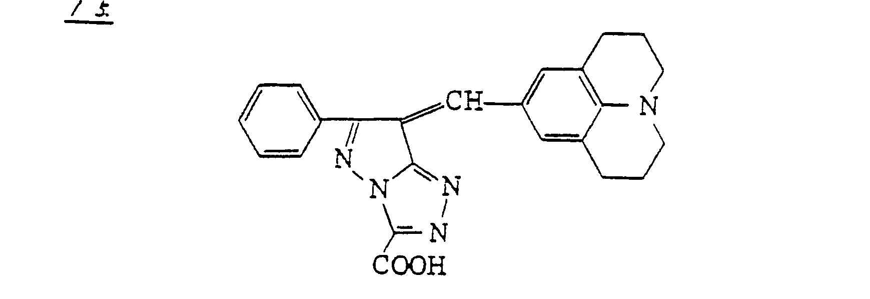

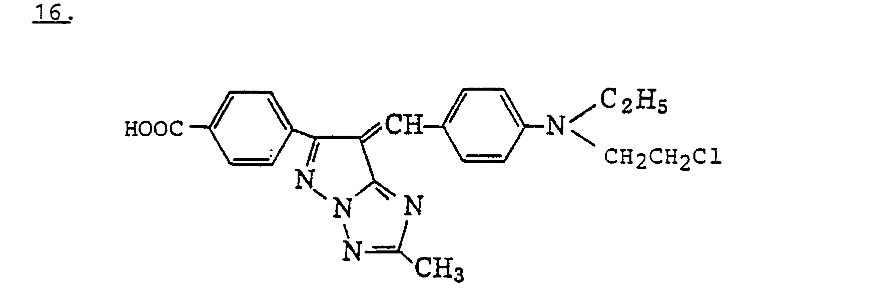

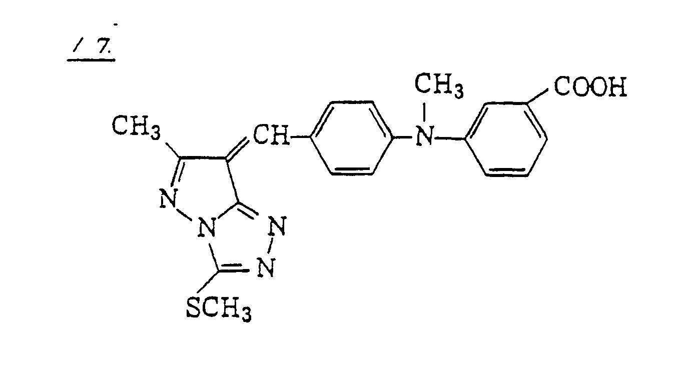

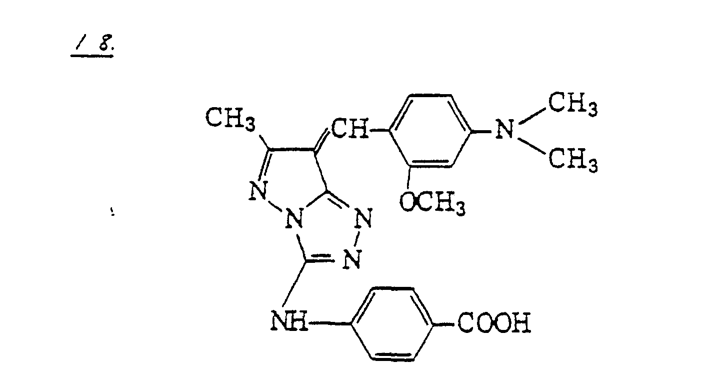

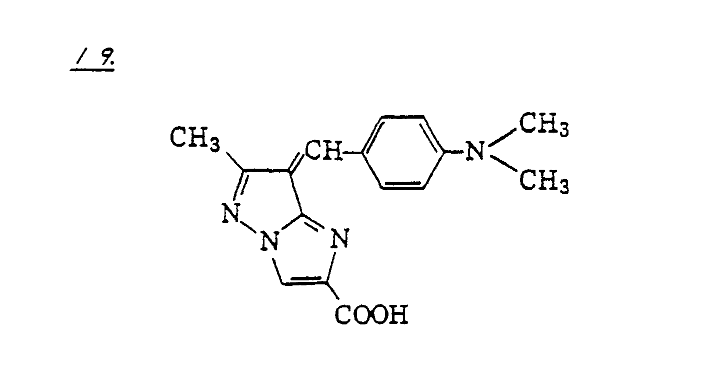

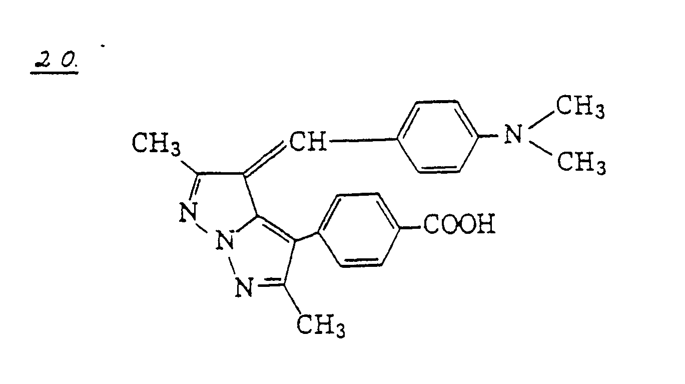

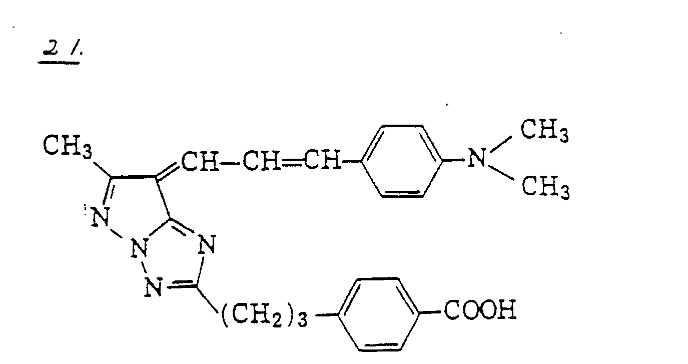

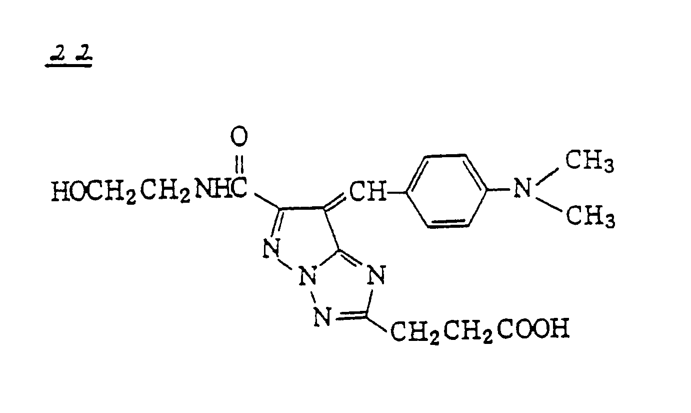

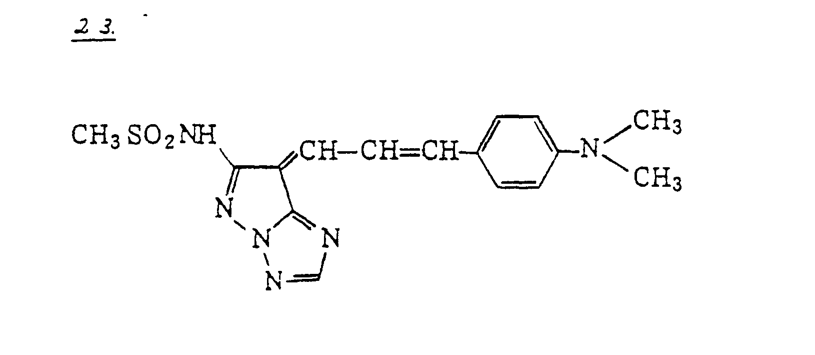

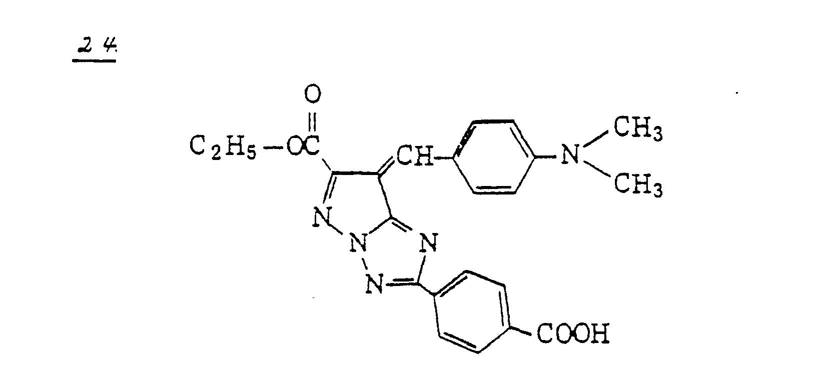

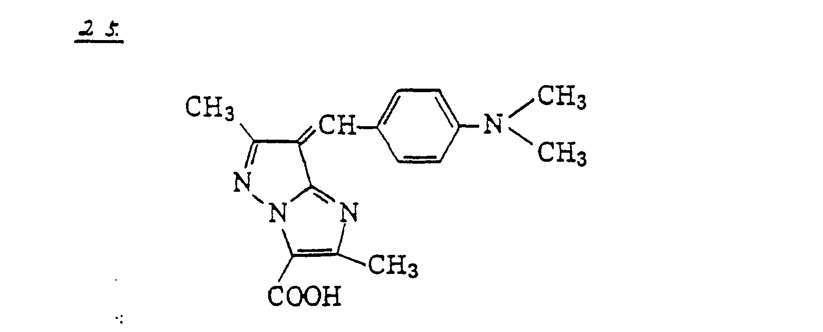

As disclosed in U.S. Patents 3,705,896, 3,758,309 and 3,810,761 and JP-A-60-213937, the compounds used in this invention are obtained by reacting compounds represented by general formula (11) and general formula (III) by heating in a polar organic solvent.

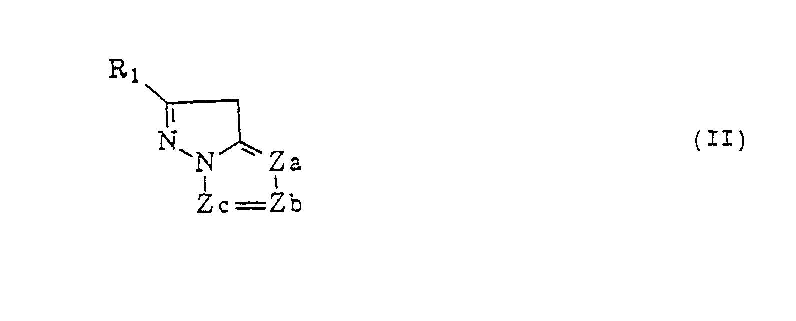

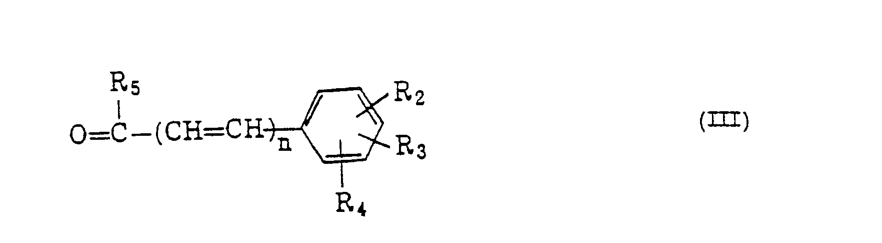

In the foregoing formulae, R₁, R₂, R₃, R₄, R₅, Za, Zb, Zc and n represent the same groups identified above.

### Synthesis Example 1 (Compound 2)

5 g of 2,6-dimethyl-1H-pyrazolo(1.5-b)(1,2,4) triazole and 8 g of 4-N,N-dicarboxymethylaminobenzal- dehyde were dissolved in 200 ml of ethanol, 2 ml of acetic acid were added and this was heated under reflux. After cooling, the crystals which had precipitated were collected by filtration and 4 g of compound 2 were obtained upon washing with cold ethanol. m.p.: 280" C or above, 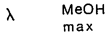 : 511 nm.

### Synthesis Example 2 (Compound 10)

3 g of 2-m-carboxyphenyl-6-methyl-1 H-pyrazolo(1,5-b)(1,2,4)triazole and 1.9 g of 4-N,N-dimethylaminobenzaldehyde were dissolved in 100 ml of ethanol, 0.5 ml of acetic acid was added and this was heated under reflux for 2 hours. After cooling, the crystals which had precipated were collected by filtration and 1.1 g of compound 10 were obtained upon washing with cold ethanol. m.p.: 280° C or above, 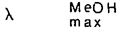 : 515 nm.

In general, dyes of general formula (I) are used in an amount of about 1 to 1,000 mg per square meter of surface area of photosensitive material, preferably in an amount of about 1 to 800 mg per square meter.

When the dyes represented by general formula (I) are used as filter dyes or antihalation dyes, it is possible to use any desired amount which has an effect, but it is preferable to use them in an optical density range of 0.05 to 3.5. The time at which they are added may be at any stage before coating.

Dyes according to this invention can be used in any of the emulsion layers and other hydrophilic colloid layers according to the following methods:
(1) Methods of dispersing the dyes of this invention as a fine powder dispersion, include the method in which a fine powder dispersion is produced by dissolving the dyes in a slightly alkaline solution, adding this to a hydrophilic colloid layer and then rendering this weakly acidic by adjusting the pH, or a known milling method, in the presence of a dispersant, such as ball milling, sand milling, colloid milling or the like. Additionally, the dyes can be added to the emulsion in the form of a solution having been dissolved in a suitable solvent such as methyl alcohol, ethyl alcohol, propyl alcohol, methyl cellosolve, the halogenated alcohols disclosed in JP-A-48-9715 and U.S. Patent 3,756,830, acetone, water or pyridine or in a mixed solvent thereof.

The dye particles in the dispersion have an average particle size less than 10 µm or less and preferably less than 1 µm.

(2) A method whereby a solution in which the compound has been dissolved in an oil, i.e., a high-boiling solvent which is essentially water-insoluble and which has a boiling point of about 160° C or greater, is added to the hydrophilic colloid solution. As this high-boiling solvent, it is possible to use, as described in U.S. Patent 2,322,027, for example, phthalic acid alkyl esters (for example, dibutyl phthalate, dioctyl phthalate); phosphoric acid esters (for example, diphenyl phosphate, triphenyl phosphate, tricresyl phosphate, dioctylbutyl phosphate); citric acid esters (for example, tributyl acetylcitrate); benzoic acid esters (for example, octyl benzoate); alkylamides (for example, diethyl laurylamide); fatty acid esters (for example, dibutoxyethyl succinate, diethyl azelate); and trimesic acid esters (for example, tributyl trimesate). Further, it is also possible to use organic solvents with boiling points of about 30 C to about 150°C such as lower alkyl acetates (for example, ethyl acetate, butyl acetate); ethyl propionate; secondary butyl alcohol; methyl isobutyl ketone; ,6-ethoxyethyl acetate; methyl cellosolve acetate; and solvents which are readily soluble in water such as methanol or ethanol or other such alcohols.

In this method, the ratio of dye to high-boiling solvent is preferably 10 - 1/10 (weight ratio).

(3) A method in which the dye of this invention and other additives are included in photographic emulsion layers and other hydrophilic colloid layers as charged polymer latex compositions.

By way of the abovementioned polymer latex, it is possible to mention, for example, polyurethane polymers, and polymers polymerized from vinyl monomers.

Some suitable vinyl monomers are acrylic acid esters (for example, methyl acrylate, ethyl acrylate, butyl acrylate, hexyl acrylate, octyl acrylate, dodecyl acrylate, glycidyl acrylate); a-substituted acrylic acid esters (for example, methyl methacrylate, butyl methacrylate, octyl methacrylate, glycidyl methacrylate); acrylamides (for example, butyl acrylamide, hexyl acrylamide); a-substituted acrylamides (butyl methacrylamide, dibutyl methacrylamide); vinyl esters (for example, vinyl acetate, vinyl butyrate); vinyl halides (for example, vinyl chloride); vinylidene halides (for example, vinylidene chloride); vinyl ethers (for example, vinyl methyl ether, vinyl octyl ether); styrene, X-substituted styrenes (for example, a-methylstyrene); nucleus-substituted styrenes (for example, hydroxystyrene, chlorostyrene, methylstyrene); ethylene, propylene; butylene; butadiene; and acrylonitrile. These may be used singly or in combinations of 2 or more and other vinyl monomers may be mixed in as minor components. By way of such other vinyl monomers, it is possible to mention, itaconic acid, acrylic acid, methacrylic acid, hydroxyalkyl acrylates, hydroxyalkyl methacrylates, sulfoalkyl acrylates, sulfoalkyl methacrylates and styrenesulfonic acid.

These charged polymer latexes can be produced in accordance with the methods described in JP-B-51-39853, JP-A-51-59943, JP-A-53-137131, JP-A-54-32552, JP-A-54-107941, JP-A-55-133465, JP-A-56-19043, JP-A-56-19047, JP-A-56-126830 and JP-A-58-149038.

In this method, the ratio of dye to polymer latex is preferably 10 - 1/10 (weight ratio).

(4) A method in which the compound is dissolved using surfactants. Oligomers and polymers are acceptable as useful surfactants. Details of such polymers are described in JP-A-60-158437.

(5) A method in which a hydrophilic polymer is used conjointly with or instead of the high-boiling solvent in (2) above. Such methods are described, for example, in U.S. Patent 3,619,195 and West German Patent 1,957,467.

(6) A microcapsule method using a polymer having, for example, a carboxyl group or sulfonic acid group in a side chain as described in JP-A-59-113434.

Further, hydrosols of lipophilic polymers as described in JP-B-51-39835 may, for example, be added to the hydrophilic colloid dispersions which are obtained as described above.

Gelatin is a representative hydrophilic colloid, for the above methods, but it is also possible to use any substance which is conventionally known to be applicable in photography.

The silver halide emulsions used in this invention may be any of the following: silver bromide, silver iodobromide, silver iodochlorobromide, silver chlorobromide or silver chloride. Preferred silver halides are silver bromide, silver chlorobromide, silver iodobromide or silver iodochloride.

The silver halide grains in the photographic emulsion layers may be cubic, octahedral or other such regular crystal form or be spherical, tabular or other such irregular crystal form or they may be a complex form of these crystal forms. They may also comprise mixtures of grains of various crystal forms.

The silver halide grains may have different phases on the surface or inside or they may comprise a uniform phase. Further, they may be grains in which the latent image forms mainly on the surface (for example, negative emulsions), or they may be grains in which it forms mainly on the inside of the grain (for example, internal latent image emulsions and prefogged direct reversal emulsions).

The silver halide emulsions used in this invention may also comprise tabular grains of a kind whereby 50% or more of the total projected surface area is occupied by grains with a thickness of 0.5 micron or less and preferably 0.3 micron or less, a diameter of preferably 0.6 micron or more and an average aspect ratio of 5 or more. Further, tabular emulsions and their usage are discussed in detail in Research Disclosure, Item 22534, pp. 20 - 58, (Jan., 1983), and Research Disclosure, Item 22530, pp. 237 - 240, (May, 1985).

Further, the silver halide emulsions used in this invention may be monodisperse emulsions of a kind whereby grains with a grain size within ± 40% of the average grain size constitute 95% or more of the total number of grains.

The photographic emulsions used in this invention can be prepared using the methods described, for example, in Chimie et Physique Photograghique by P. Glafkides (Paul Montel, 1967), Photographic Emulsion Chemistry by G.F. Duffin (Focal Press, 1966), and in Making and Coating Photographic Emulsions by V.L. Zelikman (Focal Press, 1964).

Further, in order to control the growth of the grains during the silver halide grain formation, it is possible to use, for example, ammonia, potassium thiocyanate, ammonium thiocyanate, thioether compounds (for example, U.S. Patents 3,271,157, 3,574,628, 3,704,130, 4,297,439 and 4,276,374), thione compounds (for example, JP-A-53-144319, JP-A-53-82408, JP-A-55-77737), and amine compounds (for example, JP-A-54-100717) as silver halide solvents.

Cadmium salts, zinc salts, thallium salts, iridium salts or complex salts thereof, rhodium salts or complex salts thereof, iron salts or complex iron salts and the like may be present together during the silver halide grain formation or physical ripening stage.

The silver halide emulsions are normally chemically sensitized. For the chemical sensitization, it is possible to use the methods described on pp. 675 - 734 of Die Grundlagen der photographischen Prozesse mit Silberhalogeniden (The fundamentals of photographic processing using silver halides) edited by H. Frieser (Akademische Verlagsgesellschaft, 1968).

Thus, it is possible to use, either singly or in combination, a sulfur sensitization method using compounds containing sulfur which are able to react with active gelatin and silver (for example, thiosulfates, thioureas, mercapto compounds, rhodanines); reduction sensitization methods using reducing substances (for example, stannous salts, amines, hydrazine derivatives, formamidinesulfinic acid, silane compounds); or a noble metal sensitization method using precious metal compounds (for example, in addition to gold complex salts, complex salts of metals in Group VIII of the Periodic Table such as Pt, Ir, and Pd).

The photographic emulsions used in this invention can contain various compounds for the purposes of stabilizing the photographic performance or preventing fogging during the production, storage or photographic processing of the photosensitive material. Thus, it is possible to add many compounds which are known as antifoggants or stabilizing agents such as azoles (for example, benzothiazolium salts, nitroin- dazoles, triazoles, benzotriazoles, and benzimidazoles (such as nitro or halogen-substituted compounds in particular)); heterocyclic mercapto compounds (for example, mercaptothiazoles, mercaptobenzothiazoles, mercaptobenzimidazoles, mercaptothiadiazoles, mercaptotetrazoles (such as 1 phenyl-5-mercaptotetrazole in particular), mercaptopyrimidines); the abovementioned heterocyclic mercapto compounds having water-soluble groups such as carboxyl groups or sulfo groups; thioketo compounds such as oxazolinethione; azaindenes (for example, tetraazaindenes (4-hydroxy- substituted-(1,3,3a,7)tetraazaindenes in particular)); benzenethiosulfonic acids; and benzenesulfinic acid.

Various color couplers can be used in this invention and specific examples of these are described in the patents cited in Research Disclosure (RD), No. 17643, VII-C to G. Couplers which give the three substractive primaries (i.e., yellow, magenta and cyan) upon color development are needed for the color-forming couplers. In addition to the couplers described in the patents cited in the abovementioned RD No. 17643, sections VII-C and D, it is preferred to use the couplers mentioned below as specific examples of non-diffusible 4-equivalent or 2-equivalent couplers.

Known oxygen atom elimination type yellow couplers or nitrogen atom elimination type yellow couplers can be mentioned as representative examples of yellow couplers which can be used. With a-pivaloylacetoanilide-based couplers the fastness, in particular the light fastness, of the color-forming dye is outstanding, and with a-benzoylacetoanilide-based couplers there is a high color density.

By way of magenta couplers which can be used in this invention, it is possible to mention hydrophobic 5-pyrazolone-based and pyrazoloazole-based couplers having ballast groups. With 5-pyrazolone-based couplers, those couplers in which the 3-position has been substituted by an arylamino group or an acylamino group are preferred from the standpoint of the hue and color density of the color-forming dye.

By way of cyan couplers which can be used in this invention, there are hydrophobic non-diffusible naphtholic and phenolic couplers. Preferred representative examples, are oxygen atom elimination type 2- equivalent naphtholic couplers. Further, it is preferable to use couplers which are able to form a cyan dye which is fast to humidity and temperature. Typical examples of these are phenolic cyan couplers having ethyl or higher alkyl groups in the meta-position of the phenol nucleus, 2,5-diacylamino-substitubed phenolic couplers and phenolic couplers having a phenylureido group in the 2-position and an acylamino group in the 5-position as described in U.S. Patent 3,772,002.

Graininess can be improved by the conjoint use of couplers in which the color-forming dye has a suitable degree of diffusibility. As regards such couplers, specific examples of magenta couplers are described, for example, in U.S. Patent 4,366,237, and specific examples of yellow, magenta and cyan couplers are described in, for example, European Patent 96,570.

The dye-forming couplers and the specific couplers mentioned above may form dimers or higher polymers. Typical examples of polymerized dye-forming couplers are described in, for example, in U.S. Patent 3,451,820. Specific examples of polymerized magenta couplers are described in, for example, in U.S. Patent 4,367,282.

Couplers which release photographically useful radicals upon coupling are also preferred for use in this invention. As regards DIR couplers which release development inhibitors, the couplers of the patents cited in the abovementioned RD No. 17643, section VII-F are effective.

It is possible to use couplers which imagewise release nucleating agents or development accelerators or precursors thereof during developing in the photosensitive materials of this invention. Specific examples of such compounds are described in British Patents 2,097,140 and 2,131,188.

For the purpose of speed enhancement, contrast enhancement or development acceleration, for example, polyalkylene oxides or ethers, esters and amines or other such derivatives thereof, thioether compounds, thiomorpholines, quaternary ammonium salt compounds, urethane derivatives, urea derivatives, imidazole derivatives, 3-pyrazolidones and the like may be included in the photographic emulsions of this invention.

For the purpose of irridation prevention or other such similar purpose, known water-soluble dyes other than the dyes disclosed in this invention (for example, oxonol dyes, hemioxonol dyes and merocyanine dyes) may be conjointly used as filter dyes in the silver halide photographic emulsions of this invention. Further, known cyanine dyes, merocyanine dyes and hemicyanine dyes other than the dyes disclosed in this invention may be used conjointly as spectral sensitizers.

The photographic emulsions of this invention may contain various surfactants for various purposes such as auxiliary coating, static prevention, improving slip properties, emulsification and dispersion, preventing sticking and improving the photographic characteristics (for example, development acceleration, harder gradation and sensitization).

Further, various additives for the photosensitive materials of this invention such as color-fading preventives, film hardeners, color-fogging preventives, ultraviolet absorbers, gelatin and other such protective colloids are described in detail in, for example, the abovementioned RD No. 17643.

The finished emulsions are coated onto an appropriate support such as baryta paper, resin-coated paper, synthetic paper, triacetate film, polyethylene terephthlate film, or onto a plastic base or glass plate.

By way of silver halide photographic materials of this invention, it is possible to mention, for example, color positive film; color paper; color negative film; color reversal materials (both with and without couplers); photomechanical photographic materials (for example, lithographic films and lithographic duplicating films); photosensitive materials for cathode ray tube displays (for example, emulsion X-ray recording materials, direct and indirect photographic materials using screens); photosensitive materials for the silver salt diffusion transfer process; photosensitive materials for the color diffusion transfer process; photosensitive materials for the dye transfer process (inhibition transfer process); and heat developable photosensitive materials.

Exposure is carried out using a normal method to obtain the photographic image. Thus, it is possible to use any of a variety of known light sources such as natural light (daylight); tungsten lamp; fluorescent lamp; mercury vapor lamp; xenon arc lamp; carbon arc lamp; xenon flash lamp; or a cathode ray tube flying spot. For the exposure time, obviously an exposure time of 1/1000 second to 1 second as used in a normal camera may be employed, but it is also possible to employ an exposure shorter than 1/1000 second, for example 1/10^{4 -} 1/10⁶ second using a xenon flash lamp or cathode ray tube, or to employ an exposure longer than 1 second. If required, it is possible to adjust the spectral composition of the light used for the exposure by means of a color filter. It is also possible to use laser light for the exposure. Further, the exposure may also be made by means of the light emitted from a fluorescent material stimulated by electron beams, X-rays, y-rays, a-rays, or the like.

It is possible to employ any known method and any known processing solution, as described in the abovementioned RD-17643, in the photographic processing of the photosensitive materials produced using this invention. The processing temperature is normally selected between 18 and 50 C, but a temperature lower than 18° C or a temperature in excess of 50' C may be adopted.

The color developing solution is generally composed of an aqueous alkaline solution containing color developing agents. For the color developing agent, it is possible to use known aromatic primary amine developing agents such as phenylenediamines (for example, 4-amino-N,N-diethylaniline, 3-methyl-4-amino-N,N-diethylaniline, 4-amino-N-ethyl-N-β-hydroxyethylaniline. 3-methyl-4-amino-N-ethyl-N-β-hydroxyethylaniline, 3-methyl-4-amino-N-ethyl-N-p-methanesulfonamidoethylaniline and 4-amino-3-methyl-N-ethyl-N-β-methoxyethylaniline).

In addition, the substances disclosed, for example, in Photographic Processing Chemistry by L.F.A. Mason (Focal Press, 1966) pp. 226 - 229, U.S. Patents 2,193,015 and 2,592,364 and JP-A-48-64933 may be used.

Apart from these, the developing solution may contain alkali metal sulfites, bisulfites. carbonates, borates and phosphates and other such pH buffers, bromine compounds, iodine compounds and organic antifoggants and other such development inhibitors and antifoggants. Further. it may also contain, as required, water softeners, hydroxylamines and other such preservatives, benzyl alcohol, diethylene glycol and other such organic solvents, polyethylene glycol, quaternary ammonium salts, amines and other such development accelerators, dye-forming couplers, competing couplers, sodium borohydride and other such fogging agents, 1-phenyl-3-pyrazolidone and other such auxiliary developers, viscosity-imparting agents, the polycarboxylic acid-based chelating agents described in U.S. Patent 4,083,723, and the antioxidants described in West German Patent Application (OLS) 2,622,950.

The pH of the developing solution is preferably 8 or more and more preferably 9 or more. Further, the concentration of sulfites or bisulfites in the developing solution is preferably 10-³ moletliter or more and more preferably 10-² moleiliter or more.

The fixing solution or bleach-fixing solution preferably contains sulfites or bisulfites.

By way of bleach accelerators in the bleaching solution, bleach-fixing solution or the baths preceding these. it is possible to make conjoint use of known compounds such as the compounds having mercapto groups or disulfide groups described in U.S. Patent 3,893.858, West German Patents 1,290.812 and 2,059.988, JP-A-53-32736, JP-A-53-57831, JP-A-53-37418, JP-A-53-65732, JP-A-53-72623, JP-A-53-95630, JP-A- 53-95631, JP-A-53-104232, JP-A-53-124424, JP-A-53-141623, JP-A-53-28426 and Research Disclosure, No. 17129; the thiazolidine derivatives described in JP-A-50-140129; the thiourea derivatives described in JP-B-45-8506, JP-A-52-20832, JP-A-53-32735 and U.S. Patent 3.706,561. the iodine compounds disclosed in West German Patent 1,127,715 and JP-A-58-16235, the polyethylene oxides described in West German Patents 966,410 and 2,748,430; the polyamine compounds described in JP-B-45-8836; and the compounds described in JP-A-49-42434, JP-A-49-59644, JP-A-53-94927, JP-A-54-35727, JP-A-55-26506 and JP-A-58-163940.

The processing method of this invention comprises processing stages such as fixing in addition to the abovementioned color development and bleaching. Here, processing stages such as water washing and stabilization are generally carried out after the fixing process or bleach-fixing process, but it is possible to use a simple processing method such as only carrying out the water washing stage or, conversely, only carrying out the stabilization processing stage essentially without providing a water washing stage.

Processing solutions which stabilize the color image are used as stabilizing solutions for use in the stabilization stage. For example, it is possible to use a solution containing an aldehyde (for example, formalin), or a solution having a buffering capacity of pH 3 - 6. As required, it is possible to use fluorescent whiteners, chelating agents, bactericides, fungicides, film hardeners, surfacants and the like in the stabilizing solution.

Further, the stabilization stage may be carried out using 2 or more tanks as required, and it is possible to economize on stabilizing solution by adopting a multistage countercurrent stabilization (for example, with 2 - 9 stages) or to omit the water washing stage.

The washing water used in the washing stage can contain known additives as required. For example, it is possible to use inorganic phosphoric acid, an aminopolycarboxylic acid, an organic phosphonic acid and other such chelating agents; bactericides and fungicides agents which prevent the propagation of various bacteria and algae; magnesium salts, aluminum salts and other such film hardeners; surfactants for preventing unevenness and drying load; and the like. Further, it is also possible to use the compounds described, for example, in "Water Quality Criteria" by L.E. West in Photographic Science and Engineering, Vol. 9, No. 6, pp. 344 - 359 (1965).

Further, the water washing stage may be carried out using 2 or more tanks as required and the washing water may be economized by adopting a multistage countercurrent wash (for example, with 2 - 9 stages).

With the silver halide photographic materials of this invention, the dyes for the dye layer provide the outstanding advantages that they have the appropriate spectral absorption and selectively dye the dye layer without diffusing to other layers.

Silver halide photographic materials containing the compounds of general formula (I) of this invention have the advantages that they decolor or are eluted easily upon photographic processing, that they do not reduce the speed although at the same time providing a low Dmin and that there is little reduction in speed due to storage.

Moreover, the silver halide photographic materials of this invention provide images with improved sharpness. Further, the photographs obtained from silver halide photographic materials of this invention do not stain and, being stable, their photographic performance is not reduced even when stored for a long time.

This invention is now explained in further detail making use of the following, non-limiting examples.

### EXAMPLE 1

### Preparation of emulsion A

A monodisperse silver chloride emulsion with an average grain size of 0.07 µm was produced by using the double jet method to mix an aqueous silver nitrate solution and an aqueous sodium chloride solution containing 0.5 x 10-⁴ mole, per mole of silver, of ammonium hexachlororhodate(III), in a gelatin solution at 35⁰ C while controlling the pH to 6.5.

After grain formation, the soluble salts were removed by a known flocculation method and 4-hydroxy-6-methyl-1,3,3a,7-tetraazaindene and 1-phenyl-5-mercaptotetrazole were added as stabilizers. 1 kg of emulsion contained 55 g of gelatin and 105 g of silver. (Emulsion A)

### Preparation of a photosensitive material

The nucleating agents and nucleation accelerators shown below were added to the abovementioned emulsion A and then a poly(ethyl acrylate) latex (300 mg/m²) was added with the further addition of sodium 2,4-dichloro-6-hydroxy-1,3,5-triazine as a film hardener and the silver halide emulsion layer was coated onto a transparent polyethylene terephthalate support to a silver amount of 3.5 g per square meter.

In the following description, the numerals in the parentheses after the respective compounds means the amounts added.

### Nucleating agent

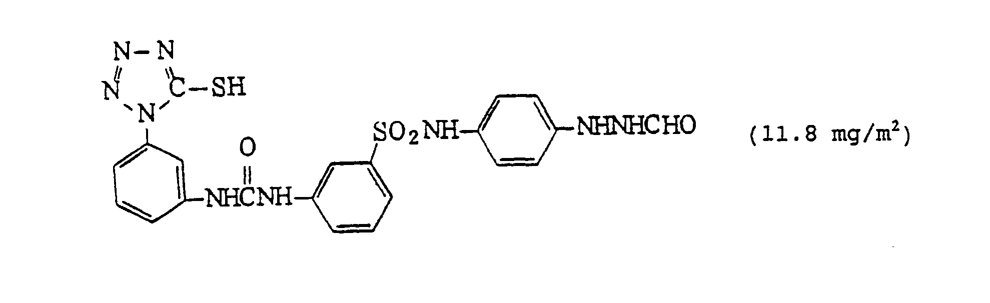

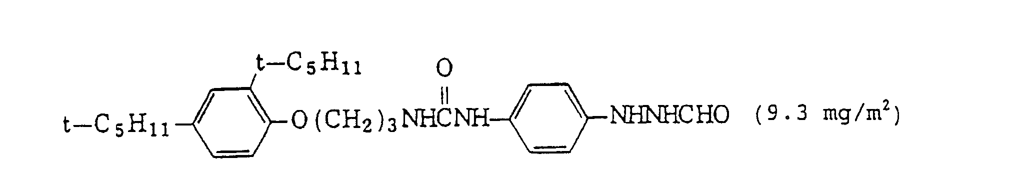

### Nucleation accelerator

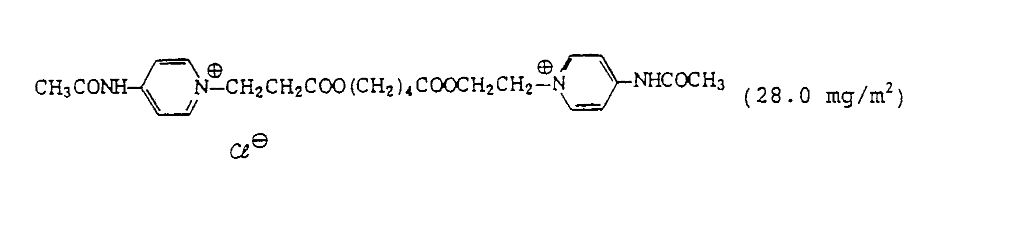

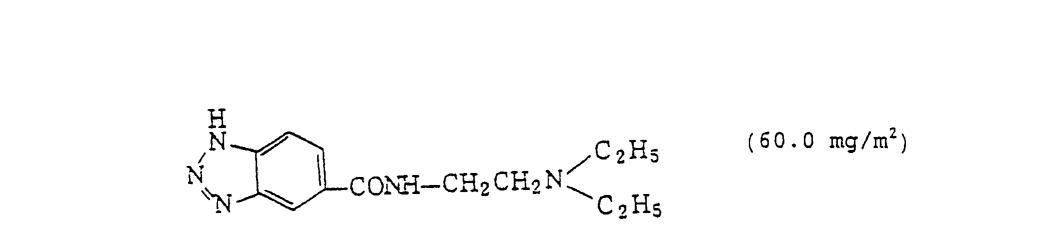

Then, a protective layer containing gelatin (1.3 g/m²), compound 10 of this invention (0.1 g_{/}m²), the following 3 surfactants as auxiliary coating agents, stabilizers and matting agents was coated onto the top layer and drying was carried out. (Sample 1)

### Surfactant

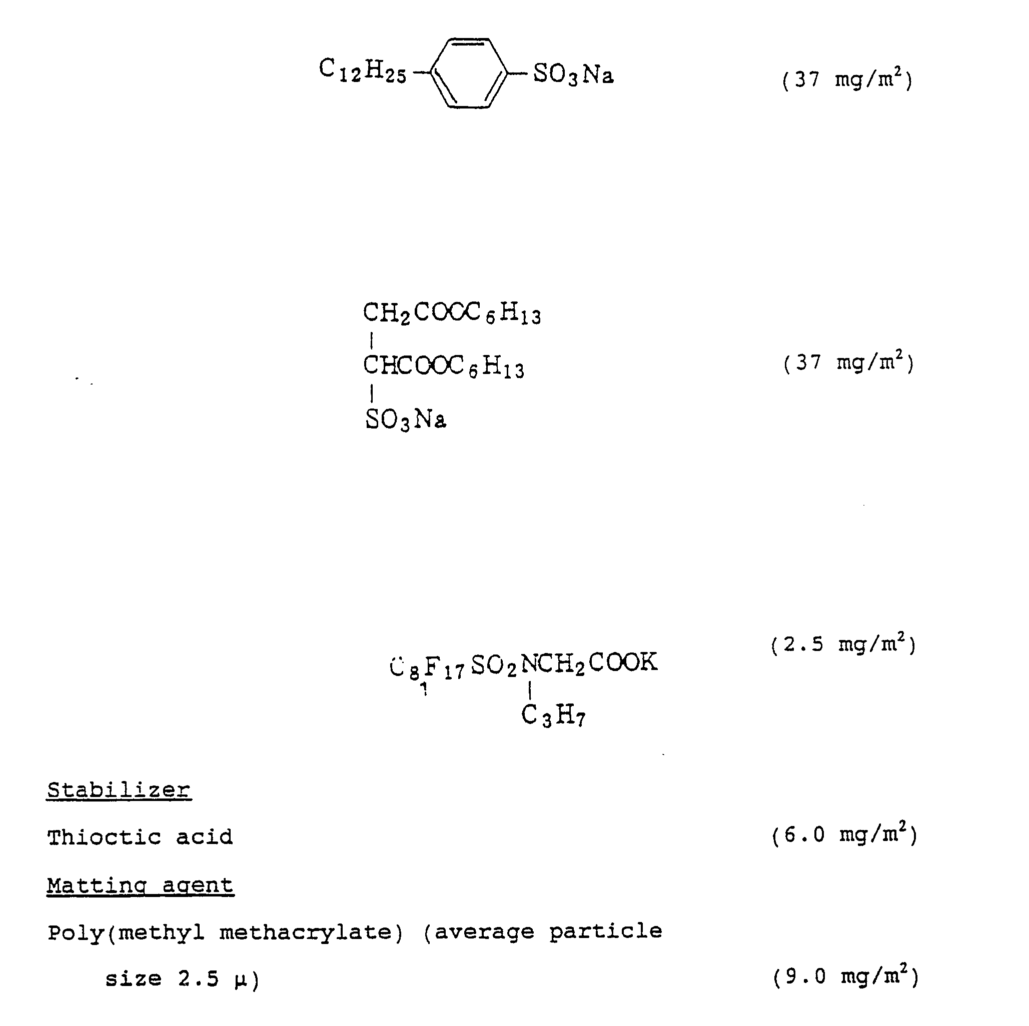

Moreover, the compound 10 of this invention was used by producing a dispersion using the following procedure.

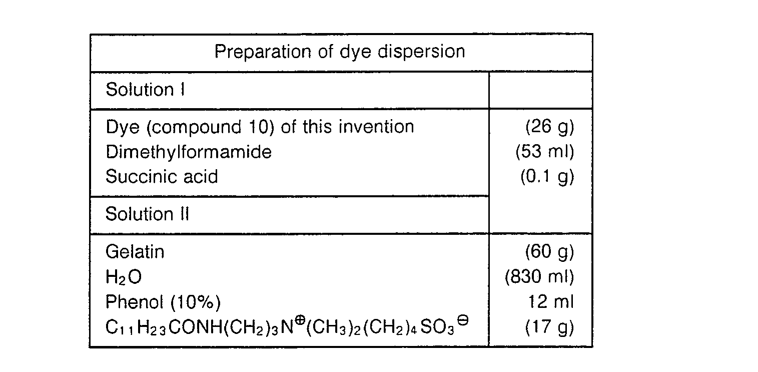

Solution I was gradually added while stirring solution II at 40° C.

### Production of comparative samples

1) A sample was produced by the preceding procedure using the following dye instead of compound 10 in Example 1 (Comparative Sample 1-A)

### Dye

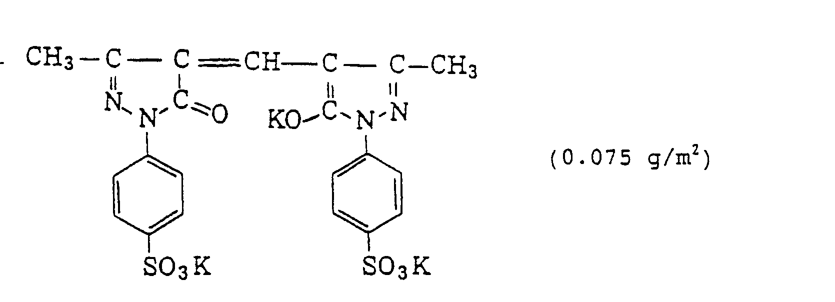

2) The following dye was used instead of compound 10 of Example 1. (Comparative Sample 1-B) This dye is listed in WO 88/04794.

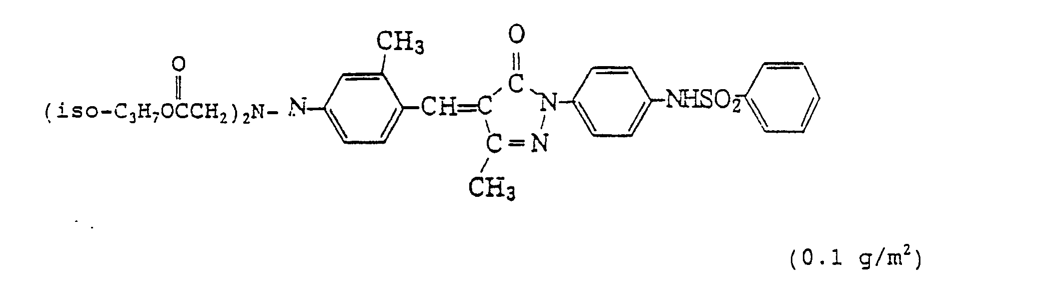

3) Comparative Sample 1-C was prepared using the following protective layer instead of the protective layer containing compound 10 of this invention in Example 1.

Acid-treated gelatin (2.0 g/m²)

### Mordant

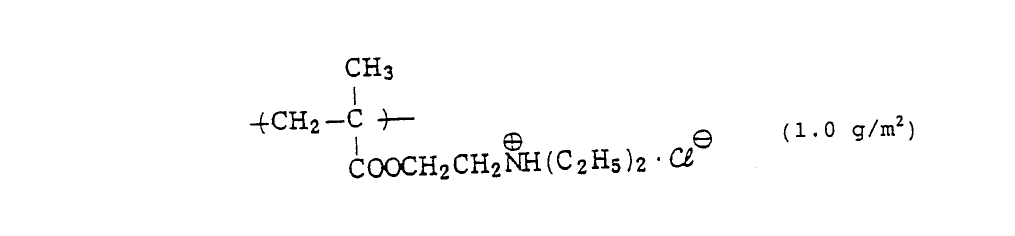

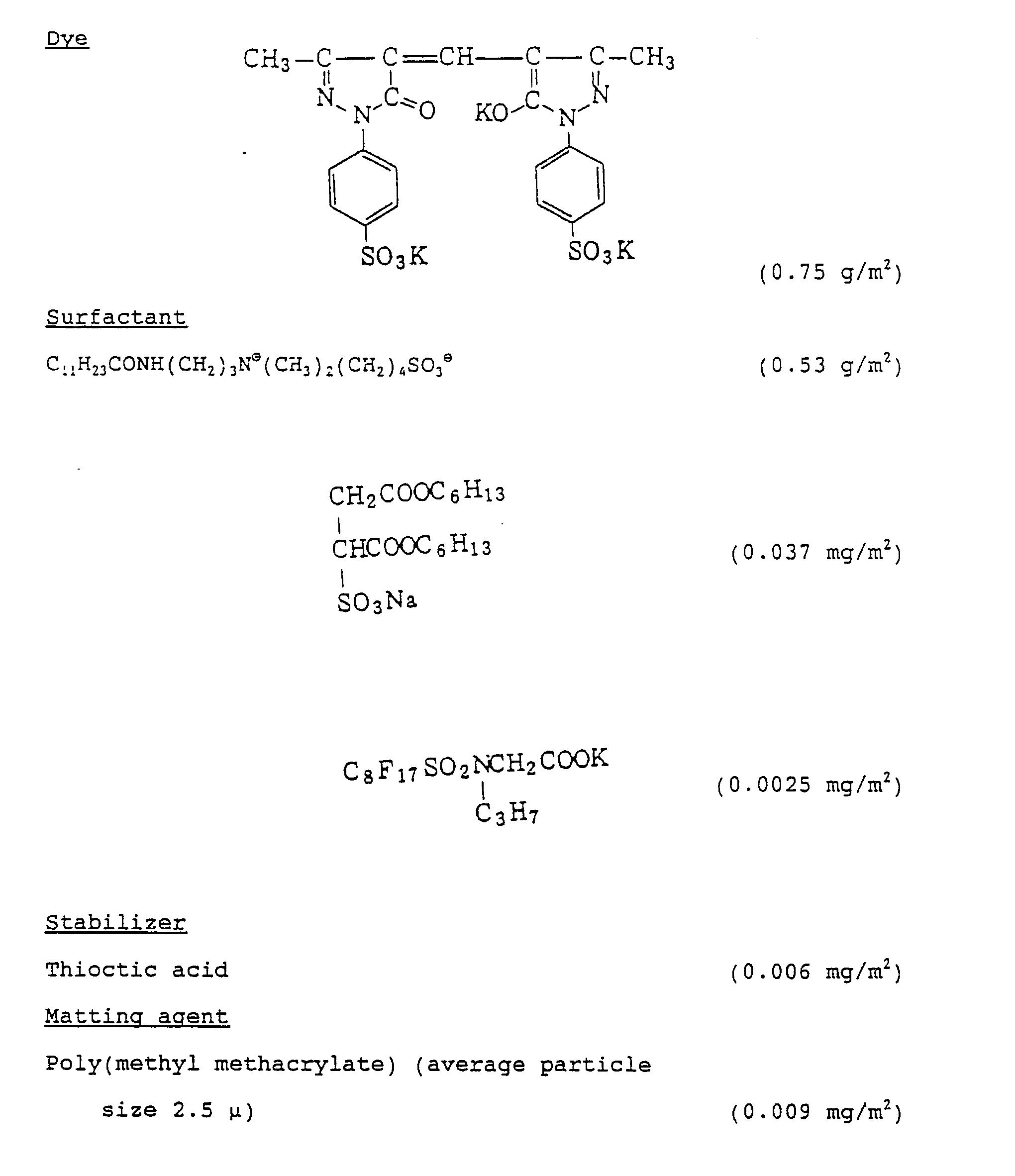

### Assessment of performance

### (1) Exposure Test:

The abovementioned 4 samples were subjected to exposures via an optical wedge using the Meishitsu (light room) printer P-607 made by Dainippon Screen Co. Ltd., and developed for 20 sec. at 38 C in the following developing solution, and fixing, water washing and drying were carried out using the normal method.

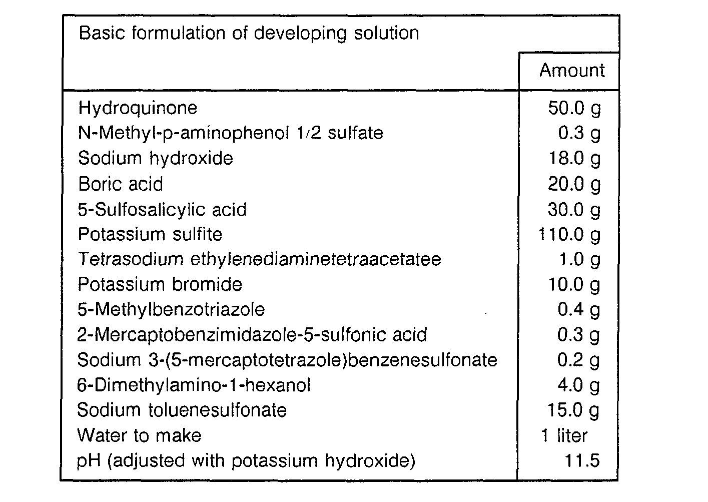

As a result, Sample 1 and Comparative Sample 1-A were completely decolored, but with Comparative Samples 1-B and 1-C there remained a yellow stain. Comparative Sample 1-B was completely decolored when the developing time was extended to 30 seconds. As described above, the compound of this invention was rapidly decolored on processing.

### (2) Tone variability test:

The abovementioned 4 samples were subjected to development processing in the same way as in test (1) except that they were exposed via a flat mesh screen using the abovementioned printer. After determining the exposure duration in which the mesh dot surface area returned to 1:1 with respect to the respective samples, exposures of 2 times and 4 times that duration were made. The expansion of the mexh dots' surface area was determined and an investigation was carried out into whether the mesh dot surface area expanded by the same extent for each sample. The larger the expansion, the more outstanding the tone variability. The results are shown in Table 1. It is clear from Table 1 that Sample 1 of this invention has a high tone variability. In contrast, the tone variability of Comparative Sample 1-A was markedly reduced. This is because the expansion of the mesh dot surface area due to the antiirradiation effect of the dye used in Comparative Sample 1-A is restrained, even when the exposure duration is increased, since this dye is water-soluble and diffusible and is therefore uniformly diffused from the layer to which it has been added to the photosensitive emulsion layers during storage.

On the other hand, compound 10 of this invention is fixed to the layer to which it has been added and exhibits a high tone variability.

Comparative Samples 1-B and 1-C also exhibited good tone variability.

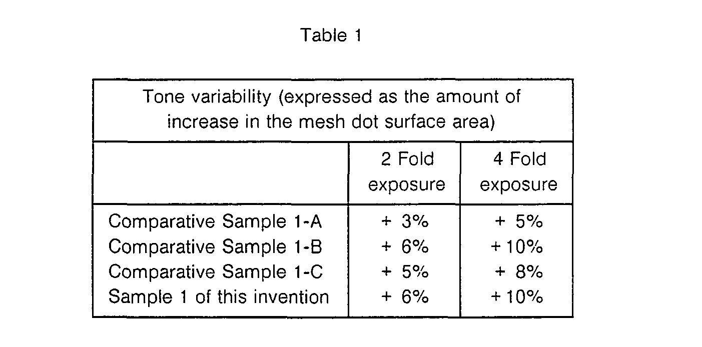

### (3) Assessment of staining due to reducing solution:

Strips of the comparative samples and the sample of this invention obtained by processing in (2) mentioned above were immersed in the following Farmer's reducing solution for 60 seconds at 20 C and then washed with water and dried. As a result, a mesh dot surface area of 50% had been reduced to about 33% in each of the samples. A severe brown stain occurred over the entire surface of Comparative Sample 1-C. Staining was not observed in the sample of this invention nor in Comparative Samples 1-A and 1-B.

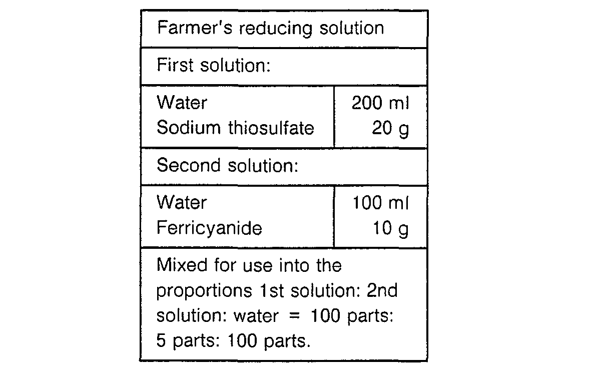

As shown above, the sample of this invention was advantageous in terms of its decoloring properties, tone variability and reducing properties relative to the comparative samples.

### EXAMPLE 2

Compounds 14 and 24 were used instead of compound 10 in the precedures of Example 1.

The decoloring properties, tone variability and reducing properties were outstanding as with Example 1.

### EXAMPLE 3

Together with a surface protective layer and the emulsion layers whose details are given below, a fine crystal dispersion which had been prepared in the same way as that mentioned in the abovementioned Examples 1 and 2 was coated onto both sides of a 175 µm polyethyleneterephthalate film which had been colored blue and had been undercoated to be used as a dye layer the details of which are given below.

Thus, photographic materials 3 - 1 to 3 - 6 were prepared.

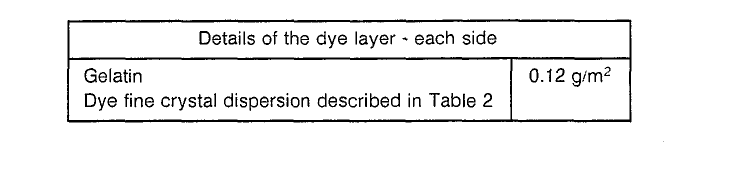

### Details of the emulsion layers

### Preparation of emulsion layer coating solutions

5 g of potassium bromide, 0.05 g of potassium iodide, 30 g of gelatin and 2.5 cc of a 5% aqueous solution of the thioether [HO(CH₂)₂S(CH₂)₂S(CH₂)₂0H] were added to 1 liter of water, this solution was maintained at 75 C and the double jet method was used to add an aqueous solution of 8.33 g of silver nitrate and an aqueous solution containing 5.94 g of potassium bromide and 0.726 g of potassium iodide over 45 seconds while stirring. Following this, 2.5 g of potassium bromide were added and then an aqueous solution containing 8.33 g of silver nitrate was added over 7 minutes and 30 seconds in such a way that the flow rate at the end of addition was twice that at the beginning of addition. Following on from this, the controlled double jet method was used to add an aqueous solution of 153.34 g of silver nitrate and an aqueous solution of potassium bromide while maintaining the potential at pAg 8.1. On this occasion, the flow rate was accelerated in such a way that the flow rate at the end of addition was 8 times that at the start of addition. After addition had been completed, 15 cc of a 2N potassium thiocyanate solution was added with the further addition, over 30 seconds, of 50 cc of a 1% aqueous potassium iodide solution. After this, the temperature was lowered to 35 C, the soluble salts were removed by precipitation after which the temperature was raised to 40 C, 68 g of gelatin, 2 g of phenol and 7.5 g of trimethylolpropane were added and the pH was adjusted to 6.55 and the pAg to 8.10 using caustic soda and potassium bromide.

The temperature was raised to 56⁰ C and 735 mg of the sensitizing dye (I) with the following structure were added. Ten minutes later, 5.5 mg of sodium thiosulfate pentahydrate, 163 mg of potassium thiocyanate and 3.6 mg of chloroauric acid were added and solidification was effected by rapid cooling 5 minutes later. The emulsion obtained was composed of grains with an aspect ratio of 3 or more occupying 93% of the total of the projected surface areas of all the grains, and all the grains with an aspect ratio of 2 or more had an average projected surface area diameter of 0.83 µm, a standard deviation of 18.5%, an average thickness of 0.161 µm and an aspect ratio of 5.16.

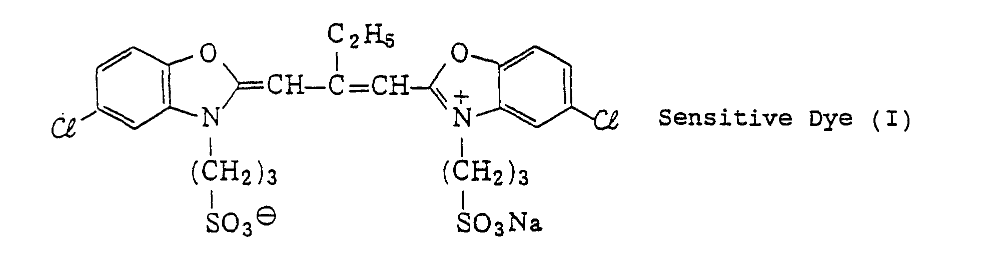

A coating solution was obtained by adding the following chemicals to this emulsion, the figures being given with respect to 1 mole of silver halide.

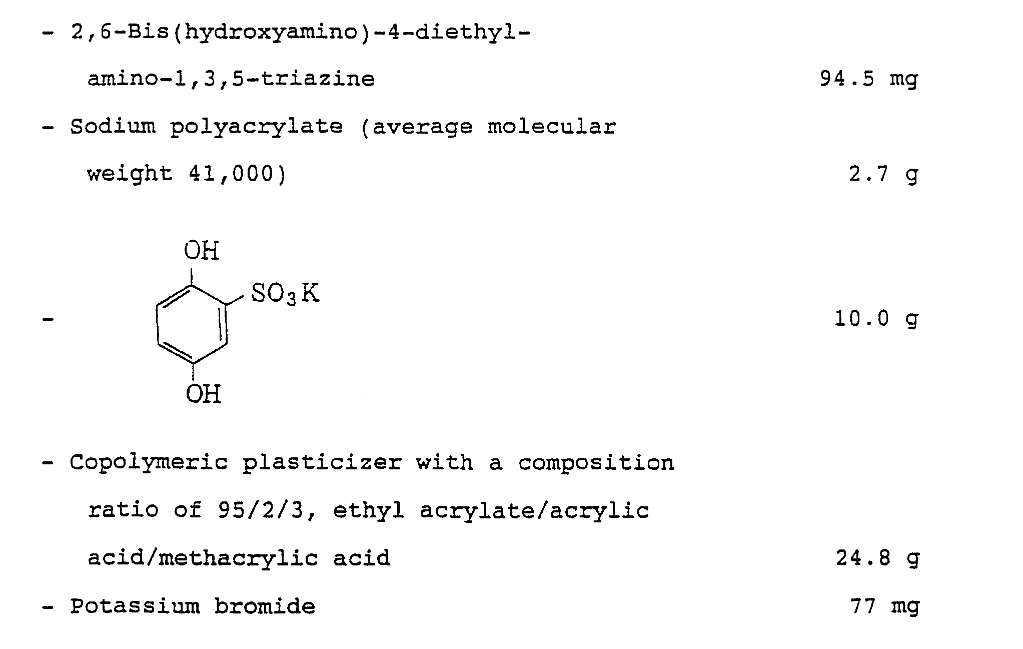

The emulsion layer coated amounts are, for each side:

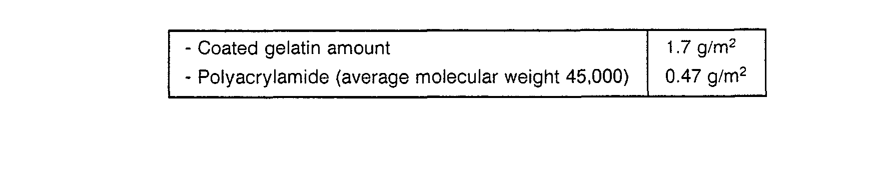

### Details of the surface protective layer

The coated amounts for the surface protective layer were made up of the following amounts on each side:

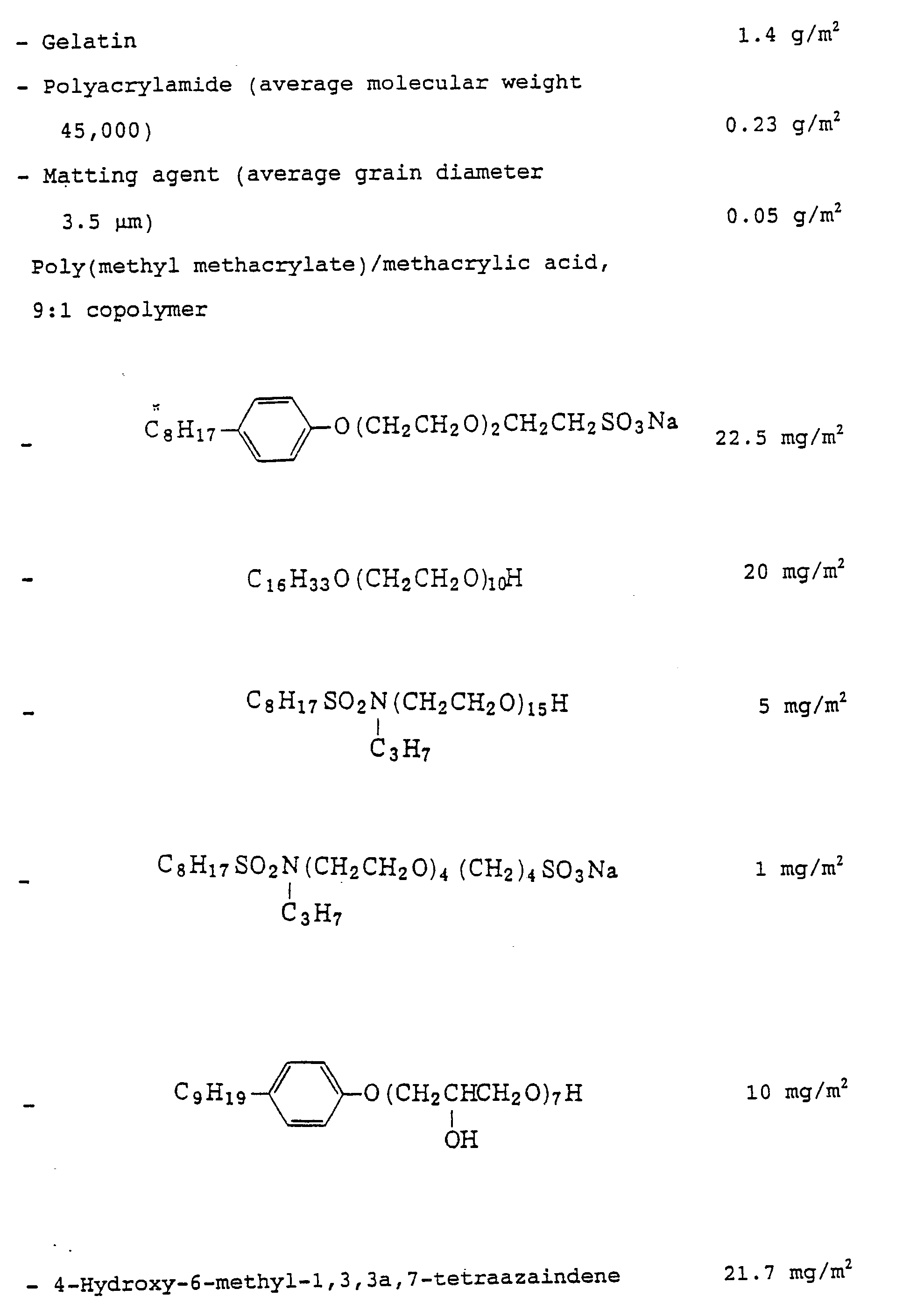

1,2-Bis(sulfonylacetamido)ethane was coated as a film hardening agent to amounts of 57 mg/m² on each side

### Assessment of photographic performance

The G-4 screen of the GRENEX series from Fuji Photo Film Co., Ltd. was used as the screen in the exposure of the photographic materials 3-1 to 3-6. X-ray exposures were carried out by inserting the photographic materials 3-1 to 3-6 tightly between two G-4 screens and passing a 10 cm water phantom.

An automatic processor process was effected for the processing after exposure making use of the FPM-4000 made by Fuji Photo Film Co., Ltd. and employing RD-III made by the same company as the developing solution and employing Fuji F made by the same company in a fixing solution at 35 C.

The speed is shown as a relative speed taking photographic material 3-1 as 100.

### Measurement of the sharpness (MTF)

The MTF was measured by combining the abovementioned G-4 screen and automatic processor process. The measurement was made with an aperture of 30 µm x 500 µm and the optical density was evaluated in the 1.0 region using an MTF value at a vacant frequency of 1.0 cycle_{!}mm.

### Evaluation of residual color

Further, the residual color levels were empirically evaluated upon carrying out the abovementioned processing on unexposed films of the abovementioned photosensitive material.
A denotes that residual color is hardly detectable,
C denotes that residual color is noticeable but this is not objectionable for practical purposes,
E denotes clear residual color which is objectionable for practical purposes,

and B and D denote intermediate states between A and C, and C and E, respectively.

The results of the above evaluations are shown in Table 2 together with details of the samples.

As is clear from Table 2, the photographic materials 3-4 to 3-6 of this invention are outstanding in their relative speed, sharpness (MTF) and residual color balance.

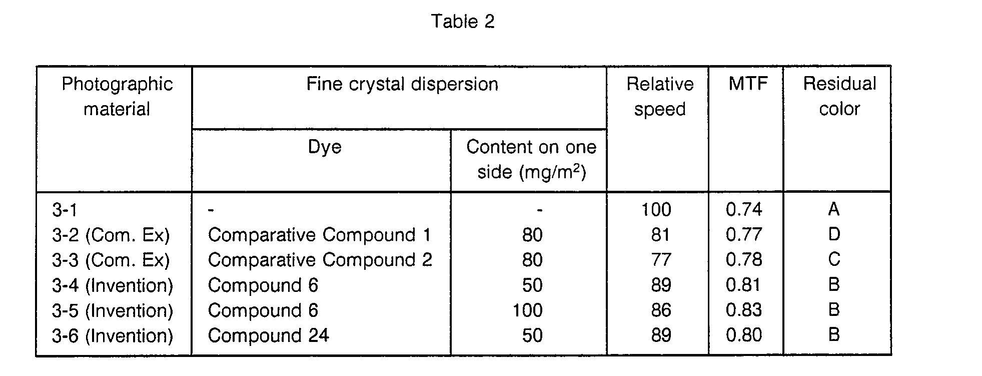

### Comparative compound 1:

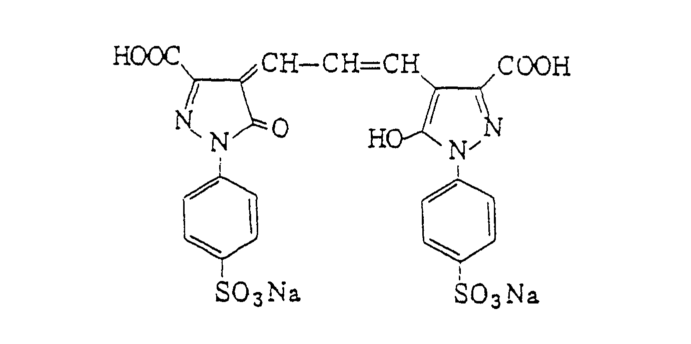

### Comparative compound 2:

C.I. Acid Violet 19 (C.I. 42,685)

### EXAMPLE 4

A corona discharge treatment was carried out on paper supports which had been laminated on both sides with polyethylene and then a gelatin undercoating layer and the following dye dispersion were used to obtain the paper support samples A, B and C.

### Dye dispersion method

The dye crystals shown below were turned into fine particles by milling using a sand mill. The resulting particles were dispersed in 25 ml of an aqueous 10% lime-treated gelatin solution in which 0.5 g of citric acid had been dissolved. The sand used was removed using a glass filter, as was the dye which had stuck to the sand on the glass filter, then, 100 ml of a 7% gelatin solution were added. (The average particle size of the fine dye particles was 0.15 µm).

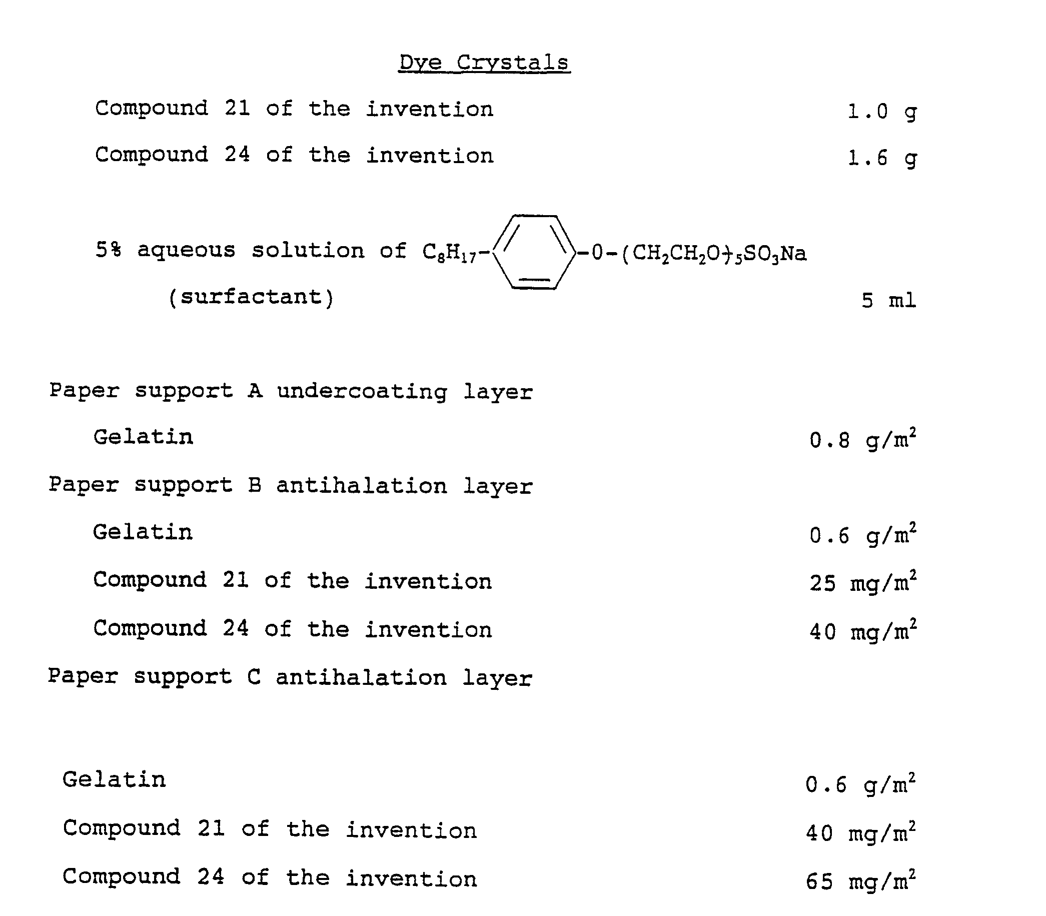

The multilayer color printing paper samples 4-1 to 4-4, which had the layer structures described below, were obtained on the paper support samples A, B and C.

Coating solutions were prepared as described below.

### Preparation of the coating solution for the first layer

19.1 g of the yellow coupler (ExY), 4.4 g of the color image stabilizer (Cpd-1) and 1.8 g of the color image stabilizer (Cpd-7) were dissolved by the addition of 4.1 g respectively of the solvents (Solv-3) and (Solv-6). This solution was emulsified and dispersed in 185 cc of a 10% gelatin aqueous solution containing 8 cc of 10% sodium dodecylbenzenesulfonate. Meanwhile, a preparation was obtained in which the dye added to the blue-sensitive emulsion layer shown below had been added in an amount of 5.0 x 10-⁴ mole per mole of silver to a sulfur sensitized silver chlorobromide emulsion (a mixture of an emulsion comprising 80.0 mol% silver bromine, cubic, average grain size 0.85 µ, variation coefficient 0.08, and an emulsion comprising 80.0 mol% silver bromide, cubic, average grain size 0.62 u., variation coefficient 0.07 in proportions of 1:3 (silver molar ratio)). The abovementioned emulsified dispersion and this emulsion were mixed and dissolved and the coating solution for the first layer was prepared to the composition shown below. The coating solutions for the second layer to the seventh layer were also prepared by the same method as the first coating solution. Sodium 1-oxy-3,5-dichloro-s-triazine was used as a gelatin hardener for each layer.

The following substances were used as spectrally sensitizing dyes in the indicated layers:

### Blue-sensitive emulsion layer

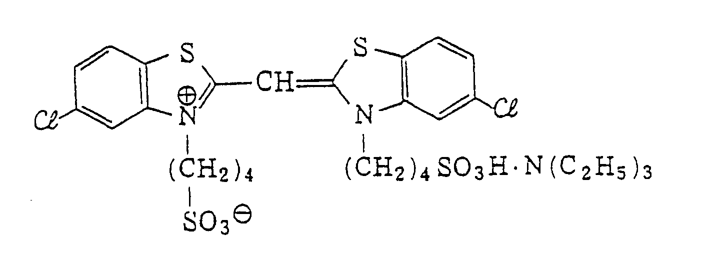

(5.0 x 10-⁴ mole per mole of silver halide)

### Green-sensitive emulsion layer

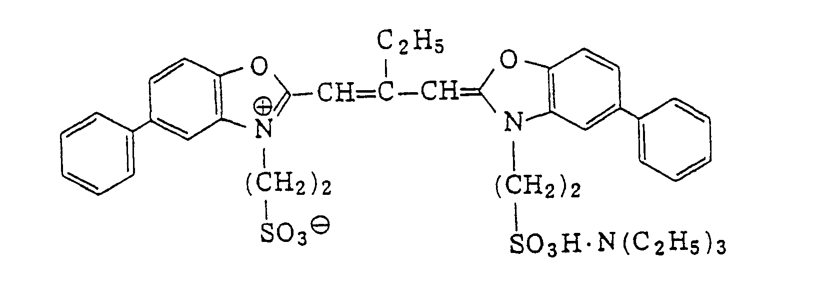

(4.0 x 10-⁴ mole per mole of silver halide) and 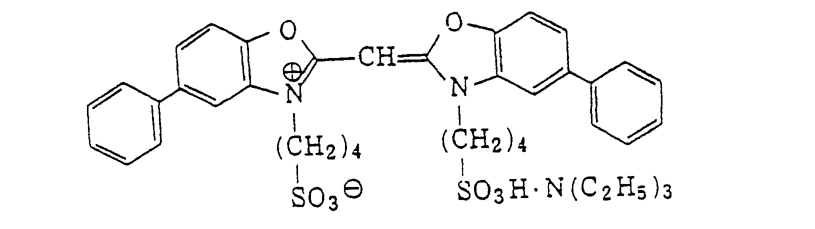 (7.0 x 10-⁵ mole per mole of silver halide)

### Red-sensitive emulsion layer

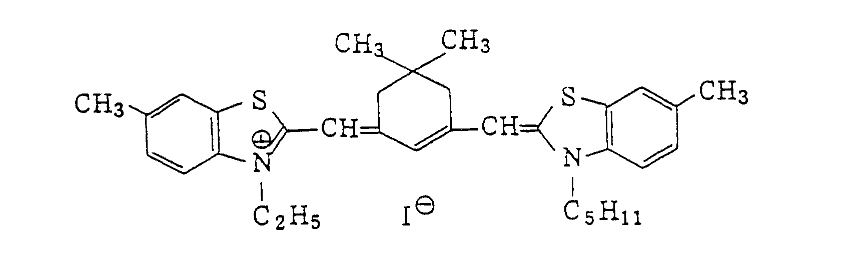

(0.9 x 10⁻⁴ mole per mole of silver halide)

The following compound was also added to the red-sensitive emulsion layer in an amount of 2.6 x 10s mole per mole of silver halide.

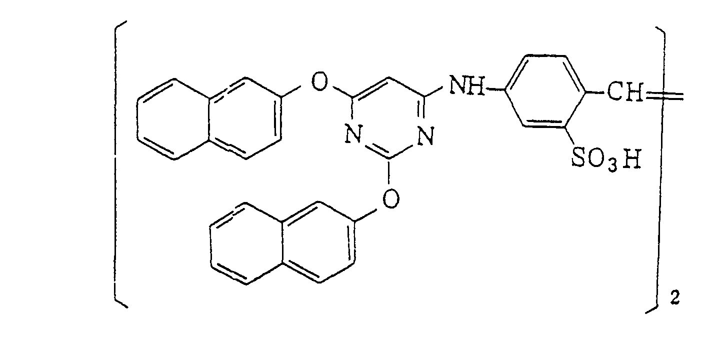

1-(5 Methylureidophenyl)-5-mercaptotetrazolewas added to the blue-sensitive emulsion layer, green-sensitive emulsion layer and red-sensitive emulsion layer in respective amounts of 4.0 x 10-⁶ mole, 3.0 x ₁0-⁵ mole and 1.0 x 10-⁵ mole per mole of silver halide, and 2-methyl-5-t-octylhydroquinone was added to these layers in respective amounts of 8 x 10-³ mole, 2 x 10-² mole and 2 x 10-² mole per mole of silver halide.

Further, 4-hydroxy-6-methyl-1,3,3a,7-tetraazaindene was added to the blue-sensitive emulsion layer and the green-sensitive emulsion layer in respective amounts of 1.2 x 10-² mole and 1.1 x 10-² mole per mole of silver halide.

The following comparative dyes were added to the antihalation layer of one of the paper support samples A in place of the dyes of the present invention (sample 4-2).

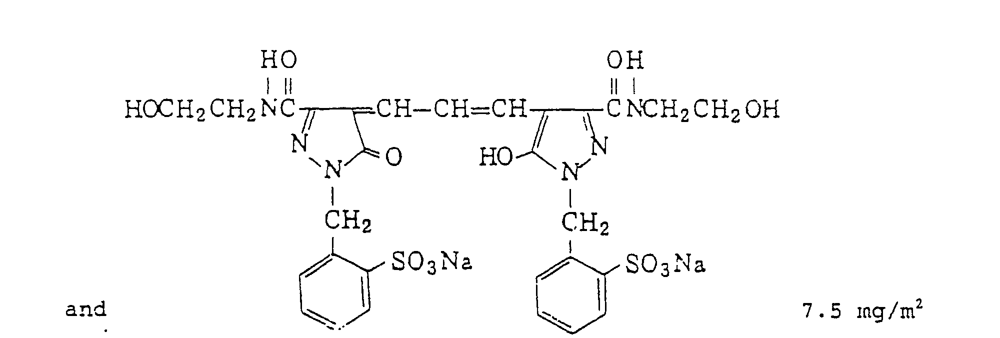

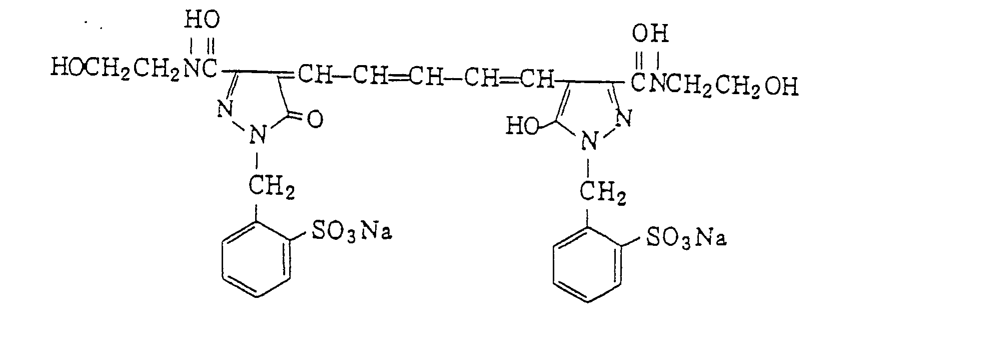

### Layer structure

The structures of the various layers and the compounds incorporated therein are given below. The figures represent coated amounts (g/m²). For the silver halide emulsions, they represent the coated amount calculated as silver.

### Support

The four samples A, A, B, C each had a pigment (Ti0₂) and blue dye (ultramarine) in the polyethylene on the side of the first layer in addition to an undercoating layer and an antihalation layer.

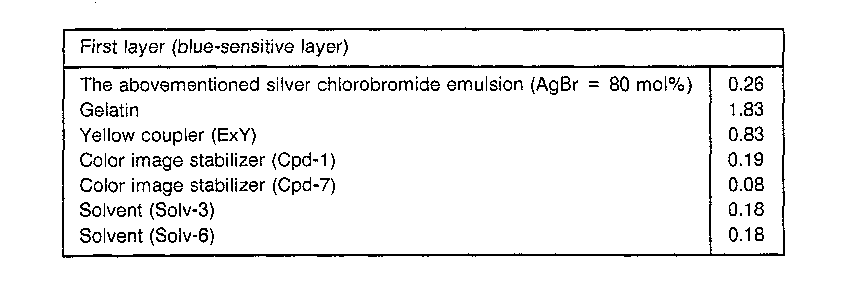

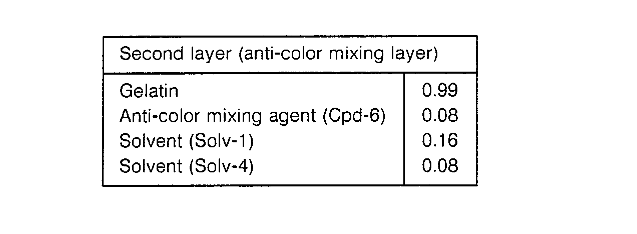

### Third layer (green-sensitive layer)

Silver chlorobromide emulsion (a mixture of an emulsion comprising AgBr 90 mol%, cubic, average grain size 0.47 µ, variation coefficient 0.12, and an emulsion comprising AgBr 90 mol%, cubic, average grain size 0.36 µ, variation coefficient 0.09 in a proportion of

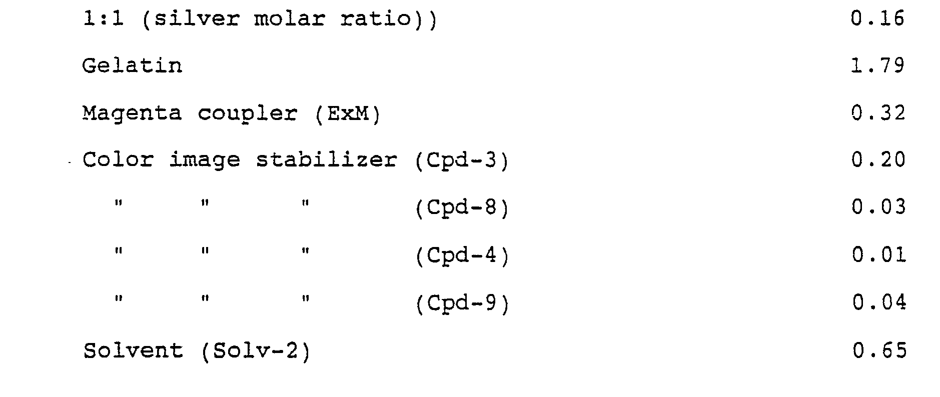

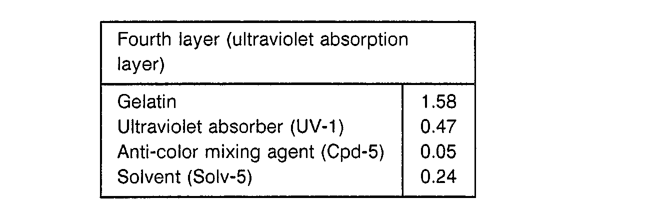

### Fifth layer (red-sensitive laver)

Silver chlorobromide (a mixture of an emulsion comprising AgBr 70 mol%, cubic, average grain size 0.49 µ, variation coefficient 0.08, and an emulsion comprising AgBr 70 mol%, cubic, average grain size 0.34 µ, variation coefficient 0.10 in a proportion of 1:2

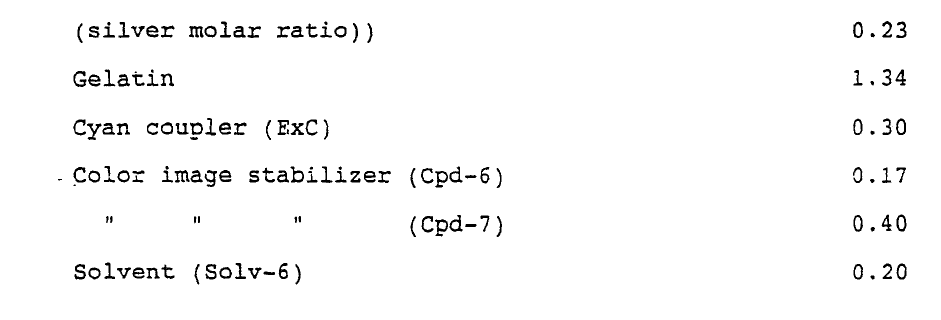

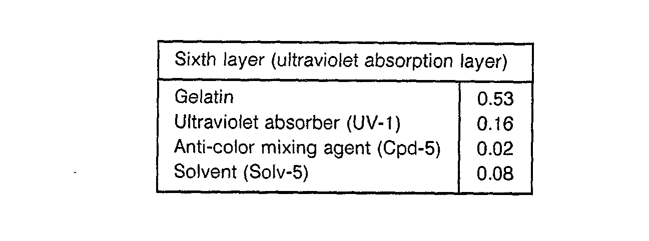

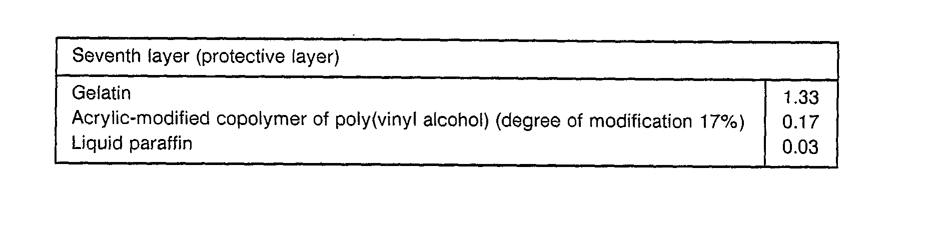

(Cpd 1) color image stabilizer 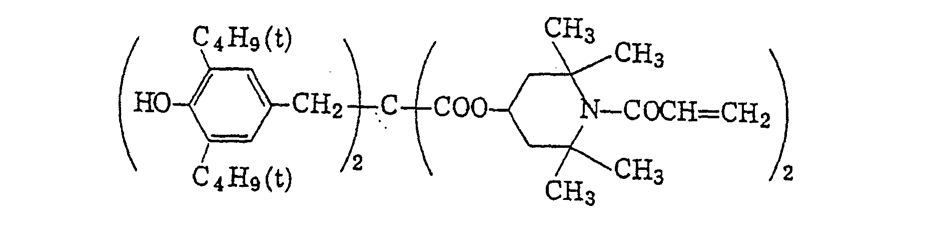 (Cpd 3) color image stabilizer 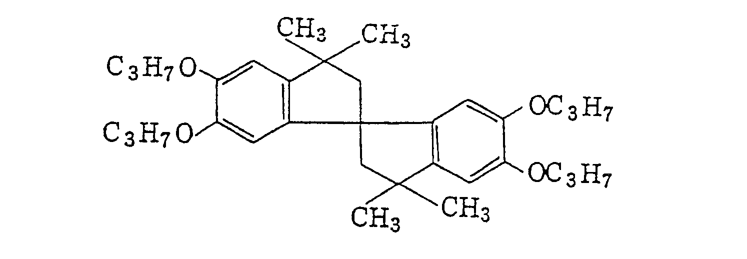 (Cpd-4) color image stabilizer 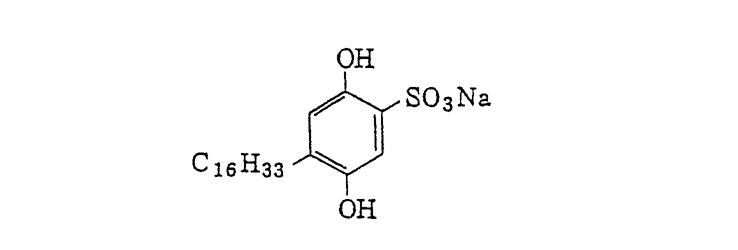 (Cpd-5) anti-color mixing agent 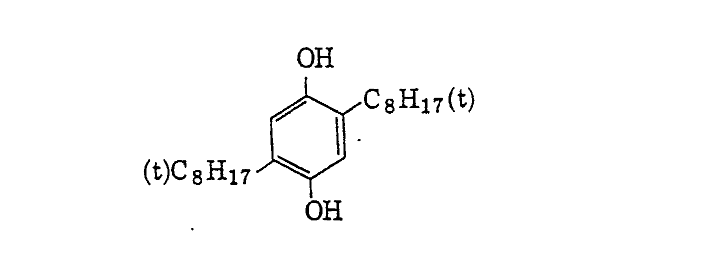 (Cpd-6) color image stabilizer

A 2:4:4 mixture (weight ratio) of 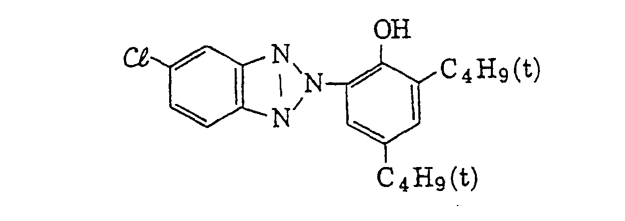 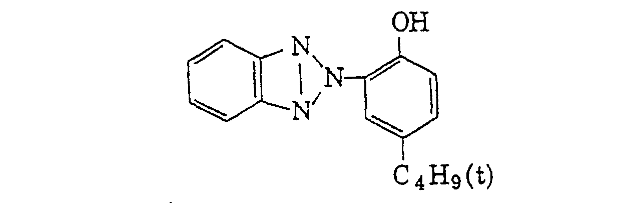 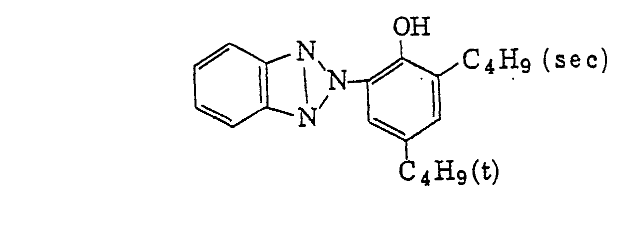 (Cpd-7) color image stabilizer 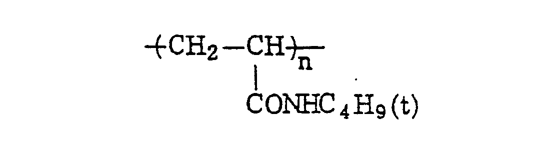 average molecular weight 80,000 (Cpd-8) color image stabilizer 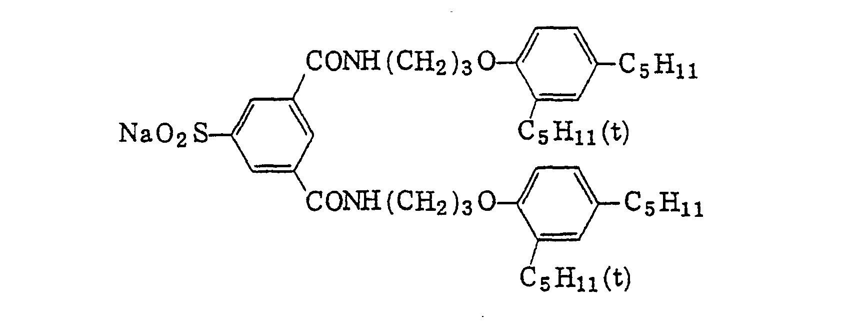 (Cpd-9) color image stabilizer 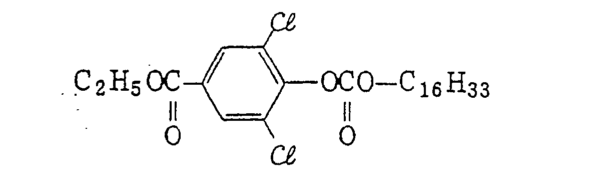 (UV-1) ultraviolet absorber

A 4:2:4 mixture (weight ratio) of 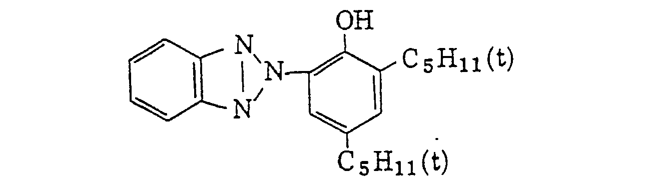 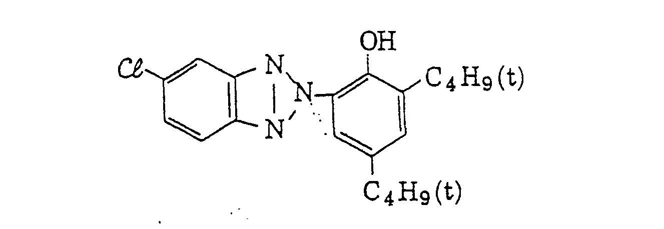 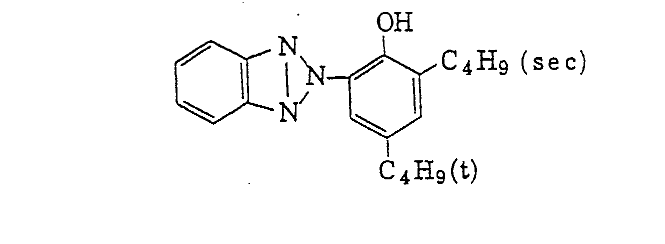 (Solv-1) solvent 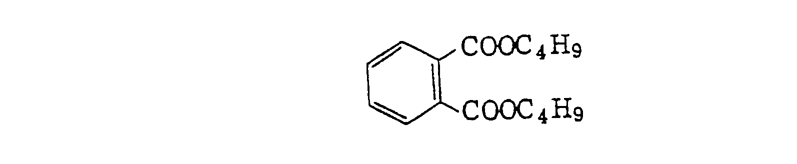 (Solv-2) solvent

A 2:1 mixture (by volume) of 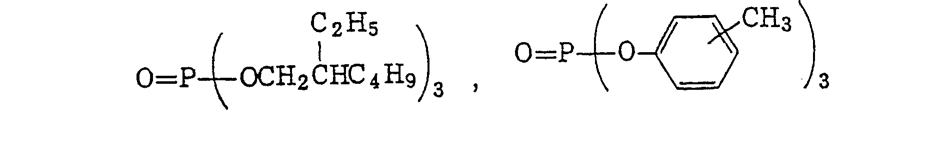 (Solv-3) solvent O=P(̵O-C₉H₁₉(iso))₃ (Solv-4) solvent 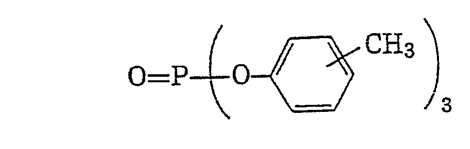 (Solv-5) solvent 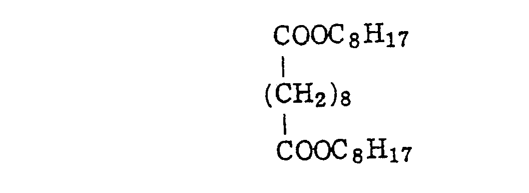 (Solv-6) solvent 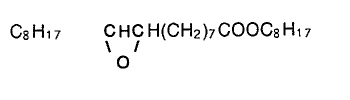 (ExY) yellow coupler 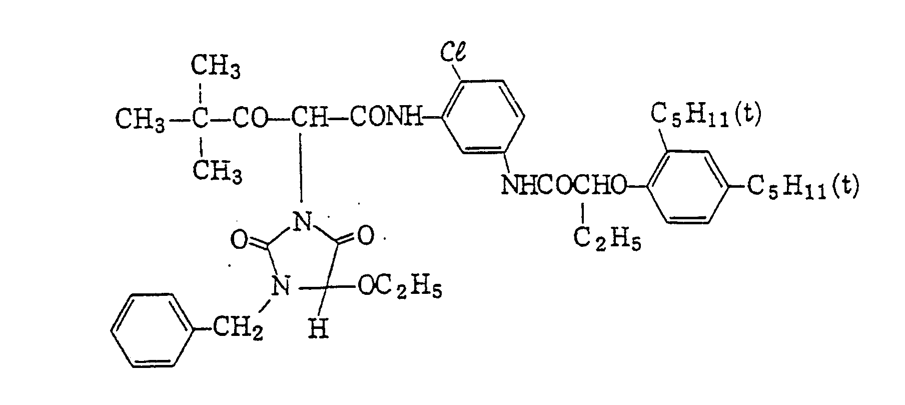 (ExM) magenta coupler 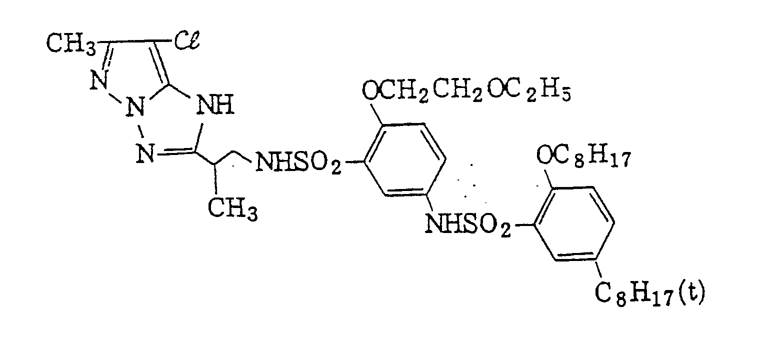 (ExC) cyan coupler

A 1:1 mixture (molar ratio) of

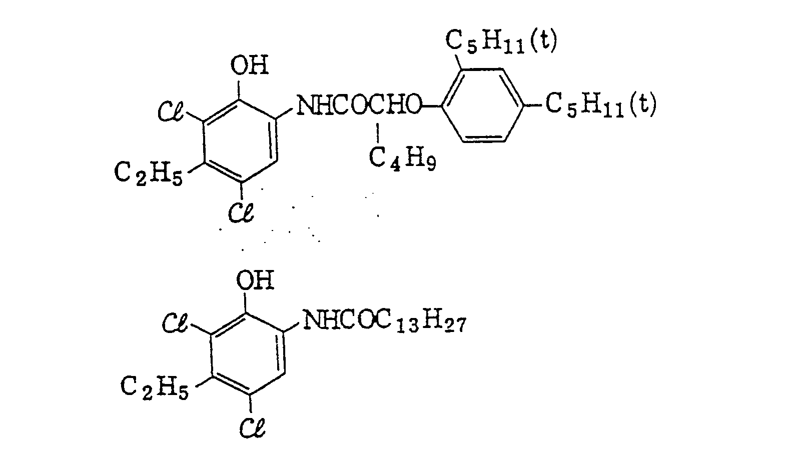

Sensitometric stepwise exposures were made on the samples 4-1 to 4-4 obtained in this way through blue, green and red filters using a sensitometer (the FWH model made by Fuji Photo Film Co., Ltd., color temperature of the light source 3,200 K). Moreover, exposures were effected in order to measure the resolving power (CTF) and then the development processing shown below was carried out. The samples underwent density measurements and the results shown in Table 3 were obtained.

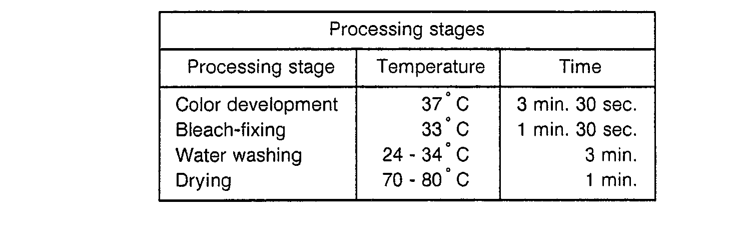

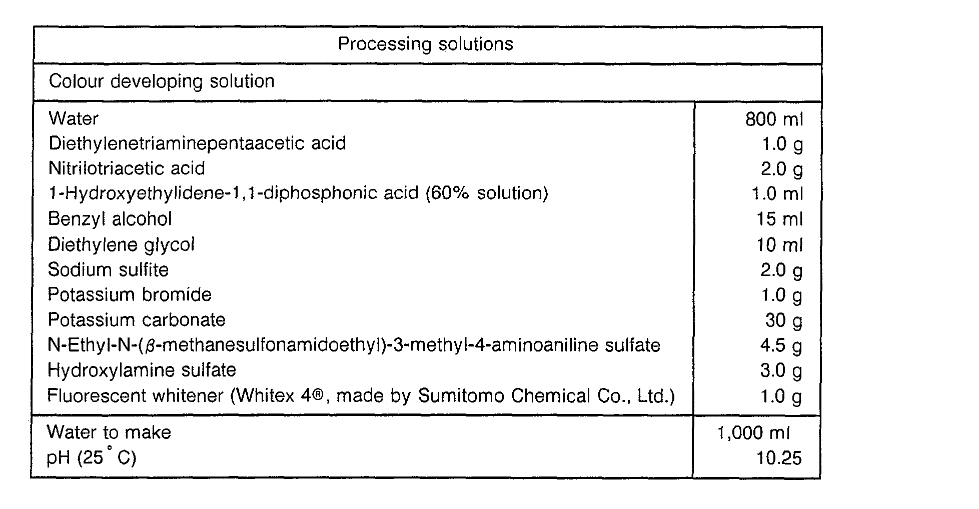

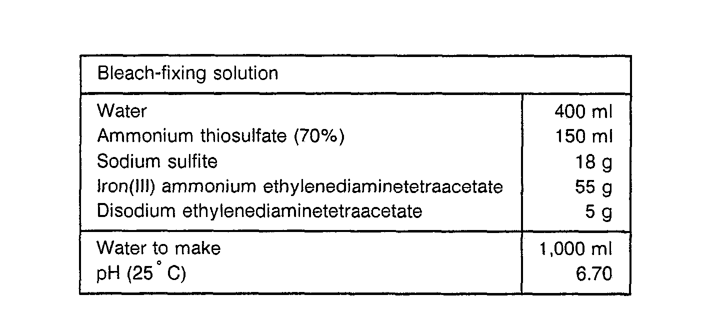

### Washing solution

Tap water was deionized with an ion exchange resin such that the concentration of each calcium and magnesium was not higher than 3 ppm, and then 20 ppm of sodium dichloroisocyanurate was added. The pH of this solution was 6.6.

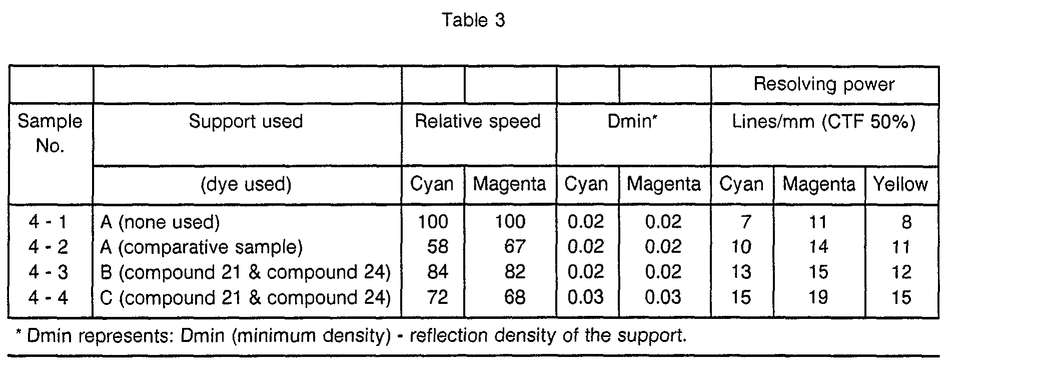

The results show that if dyes of this invention are used in an antihalation layer, there is little reduction in the comparative speed and residual colour is not pronounced. However, it is possible to improve the resolving power markedly.

When using the support samples B and C, similar results were obtained for rapidly processable color printing papers which had been provided with a high silver chloride emulsion (such as those having a multilayer structure described in European Patents 273,429, 273,430 and 325,235).

### Example 5

The multilayer color photosensitive material sample 5-1, composed of various layers with the compositions shown below, was prepared on an undercoated cellulose triacetate film support.

### Photosensitive layer compositions

The coated amounts are shown in units of g_{/}m² of silver for silver halides and colloidal silver, in units of gim² for couplers, additives and gelatin, and in figures of moles per mole of silver halide in the same layer for sensitizing dyes. Moreover, the codes denoting additives have the meanings given below. However, when these have more than one effect, they are recorded using one of these as representative.

UV = ultraviolet absorber, Solv = high-boiling organic solvent, ExF = dye, ExS = sensitizing dye, ExC = cyan coupler, ExM = magenta coupler, ExY = yellow coupler and Cpd = additive.

Structures for the compounds are given following the description of the layers.

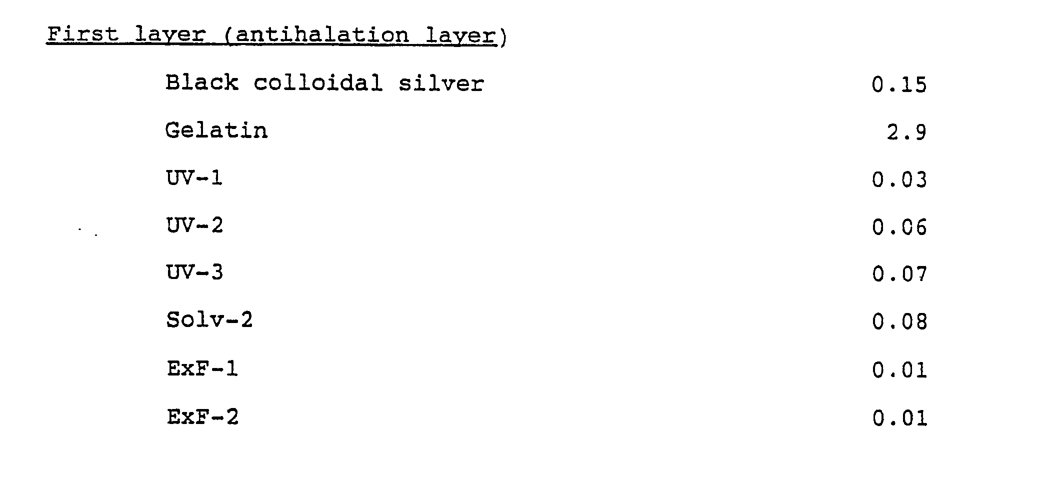

### Second layer (low-speed red-sensitive emulsion layer)

Silver iodobromide emulsion (AgI 4 mol%, uniform AgI type, sphere equivalent diameter 0.4 µm, sphere equivalent diameter variation coefficient 37%, tabular grains, diameter/thic-kness ratio 3.0) coated silver 0.4

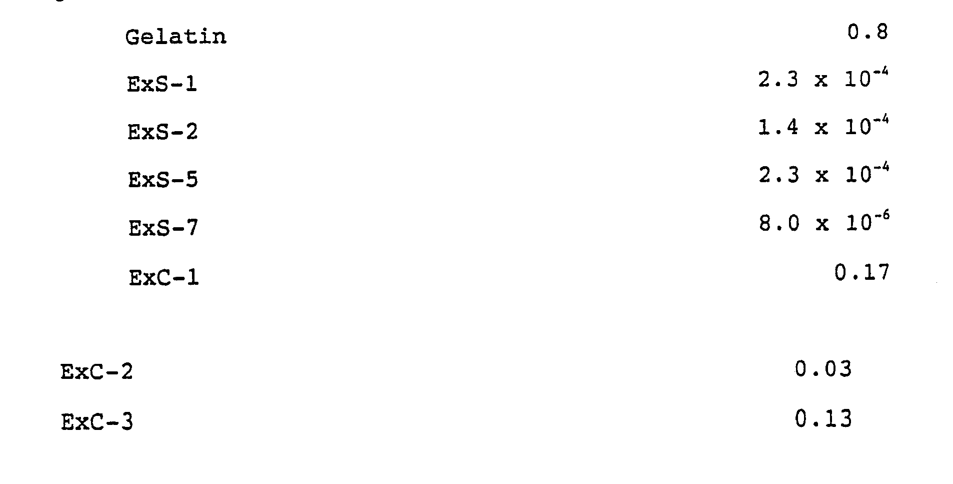

### Third layer (medium-speed red-sensitive emulsion layer)

Silver iodobromide emulsion (AgI 6 mol%, high- internal AgI type with a core/shell ratio of 2:1, sphere equivalent diameter 0.65 µm, sphere equivalent diameter variation coefficient 25%, tabular grains, diameter/thickness ratio 2.0) coated silver 0.65

Silver iodobromide emulsion (AgI 4 mol%, uniform - AgI type, sphere equivalent diameter 0.4 µm, sphere equivalent diameter variation coefficient 37%, tabular

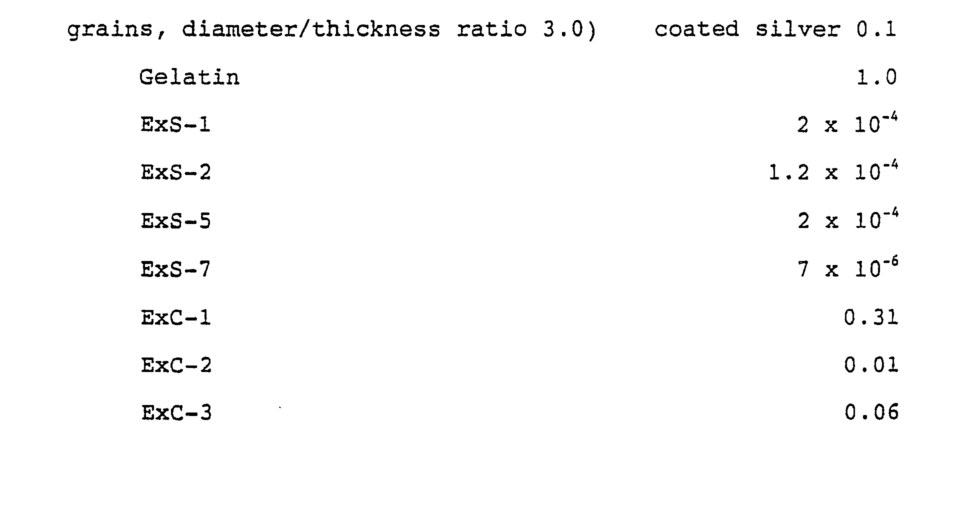

### Fourth layer fhigh-speed red-sensitive emulsion layer)

Silver iodobromide emulsion (AgI 6 mol%, high- internal AgI type with a core/shell ratio of 2:1, sphere equivalent diameter 0.7 µm, sphere equivalent diameter variation coefficient 25%, tabular grains,

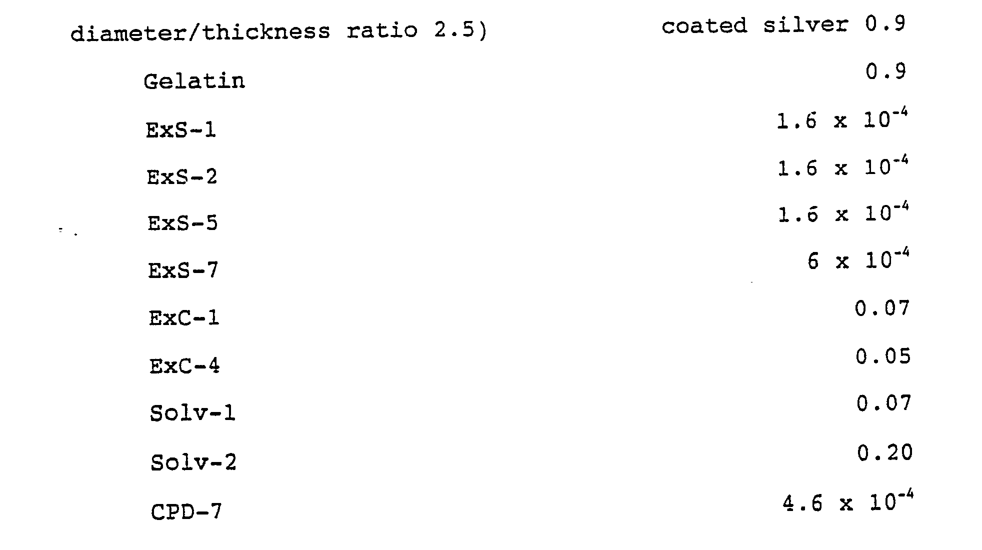

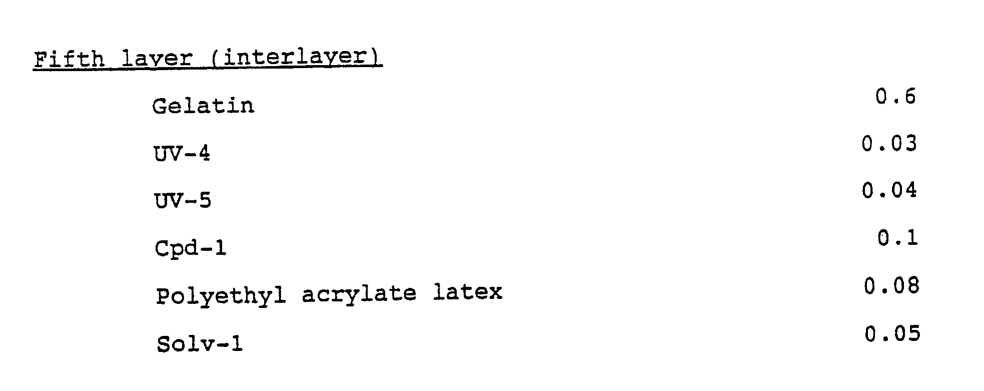

### Sixth layer (low-speed green-sensitive emulsion layer)

Silver iodobromide emulsion (AgI 4 mol%, uniform AgI type, sphere equivalent diameter 0.4 µm, sphere equivalent diameter variation coefficient 37%, tabular grains, diameter/thickness ratio 2.0) coated silver 0.18

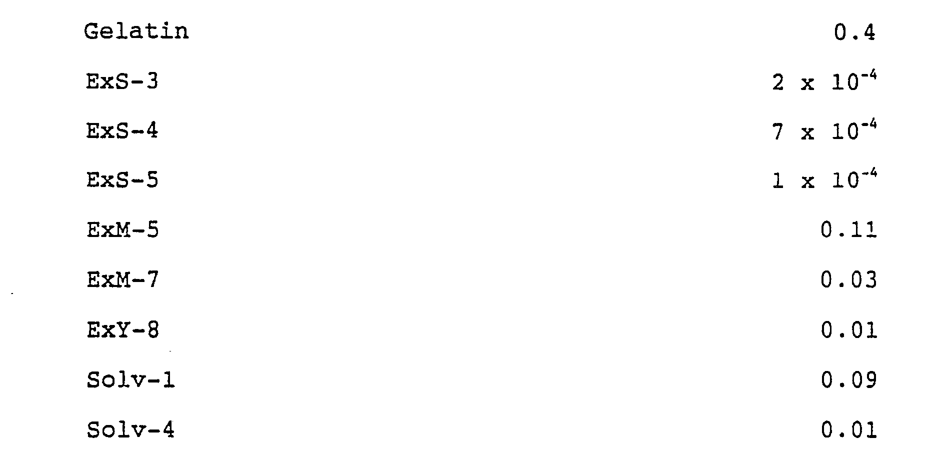

### Seventh layer (medium-speed green-sensitive emulsion laver)

Silver iodobromide emulsion (AgI 4 mol%, high- surface AgI type with a core/shell ratio of 1:1, sphere equivalent diameter 0.5 µm, sphere equivalent diameter variation coefficient 20%, tabular grains, diameter/

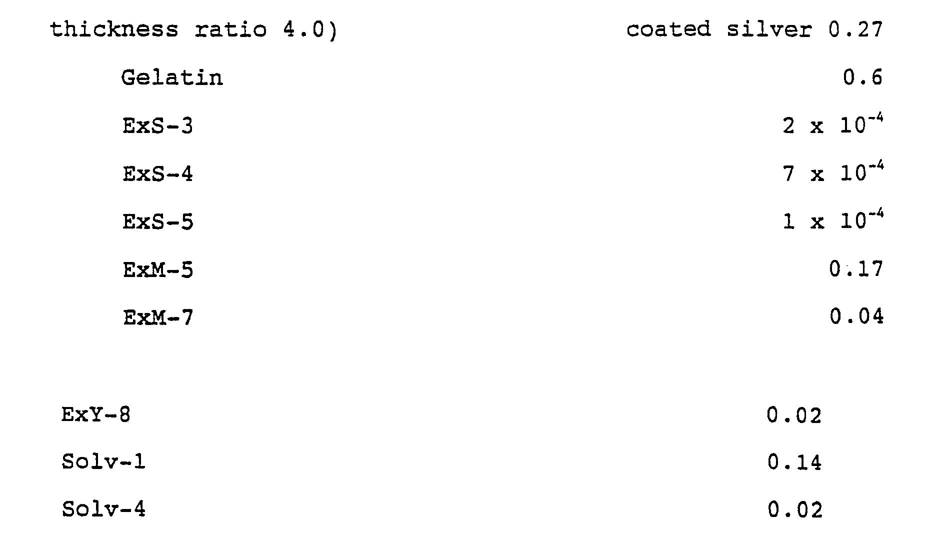

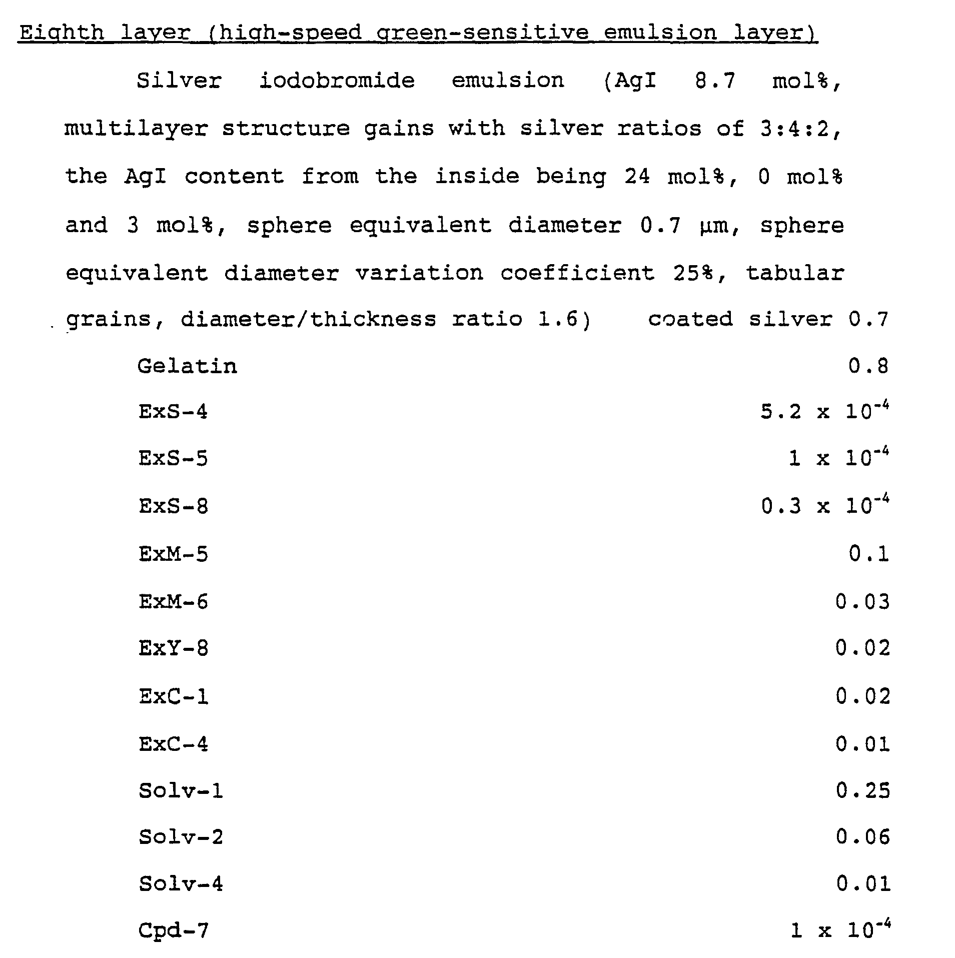

### Ninth layer (interlayer)

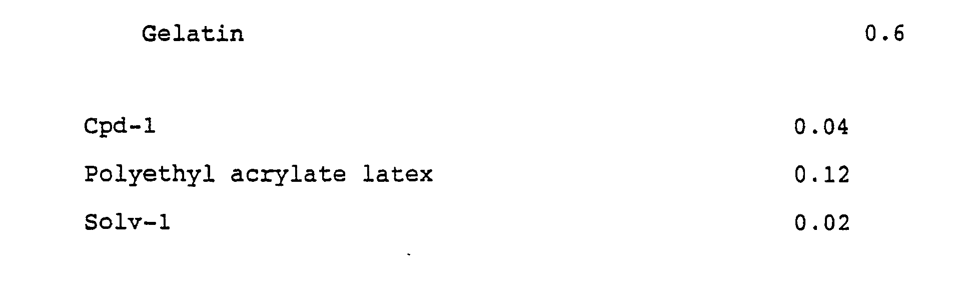

### Tenth layer (donor layer with an interlaver effect in the red-sensitive layers)

Silver iodobromide emulsion (AgI 6 mol%, high- internal AgI type with a core/shell ratio of 2:1, sphere equivalent diameter 0.7 µm, sphere equivalent diameter variation coefficient 25%, tabular grains, diameter/thickness ratio 2.0) coated silver 0.68

Silver iodobromide emulsion (AgI 4 mol%, uniform AgI type, sphere equivalent diameter 0.4 µm, sphere equivalent diameter variation coefficient 37%, tabular grains, diameter/thic-kness ratio 3.0) coated silver 0.19

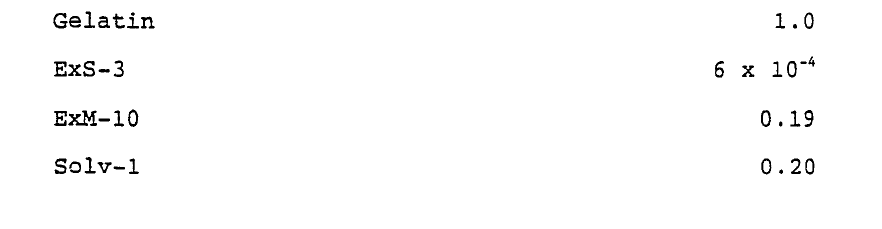

### Eleventh laver (yellow filter laver)

In the eleventh layer, Cpd-2, Cpd-1 and Solv-1 were dissolved together by heating at 60°C in ethyl acetate, emulsified and dispersed in an aqueous gelatin solution containing sodium dodecylbenzenesulfonate using a household mixer thus mixing the silver halide emulsion.

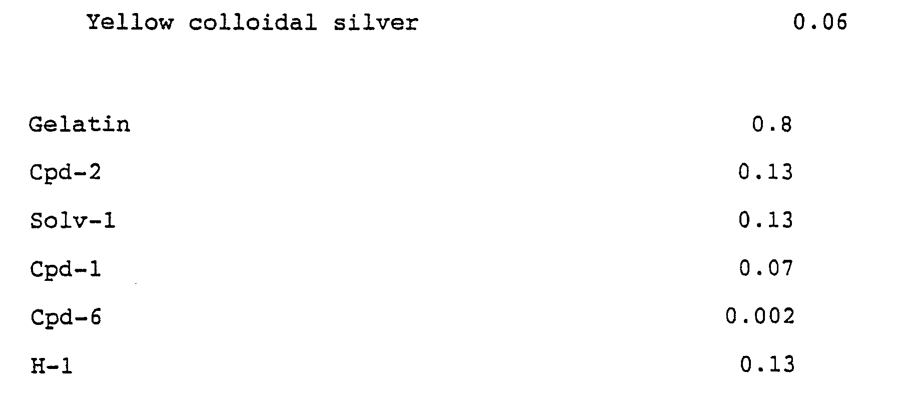

### Twelfth laver (low-speed blue-sensitive emulsion layer)

Silver iodobromide emulsion (AgI 4.5 mol%, uniform AgI type, sphere equivalent diameter 0.7 µm, sphere . equivalent diameter variation coefficient 15%, tabular grains, diameter/thic-kness ratio 7.0) coated silver 0.3

Silver iodobromide emulsion (AgI 3 mol%, uniform AgI type, sphere equivalent diameter 0.3 µm, sphere equivalent diameter variation coefficient 30%, tabular grains, diameter/thic-kness ratio 7.0) coated silver 0.15

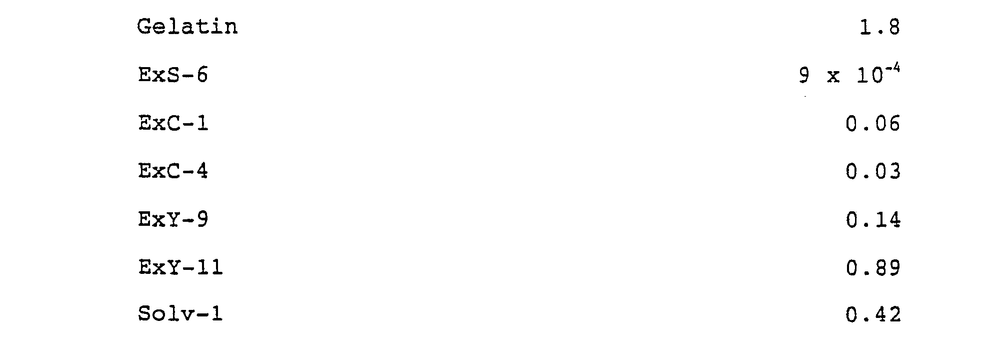

### Thirteenth laver (interlaver)

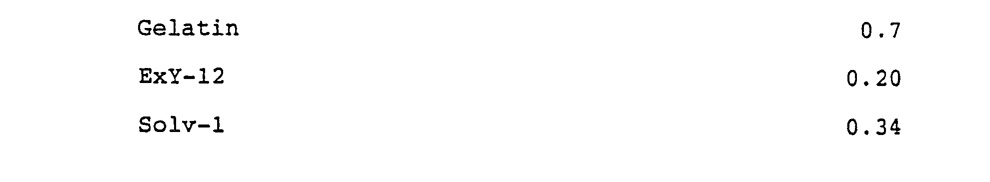

### Fourteenth layer (high-speed blue-sensitive emulsion layer)

Silver iodobromide emulsion (AgI 10 mol%, high- internal AgI type, sphere equivalent diameter 1.0 µm, sphere equivalent diameter variation coefficient 25%, multilayer twin-crystal tabular grains,

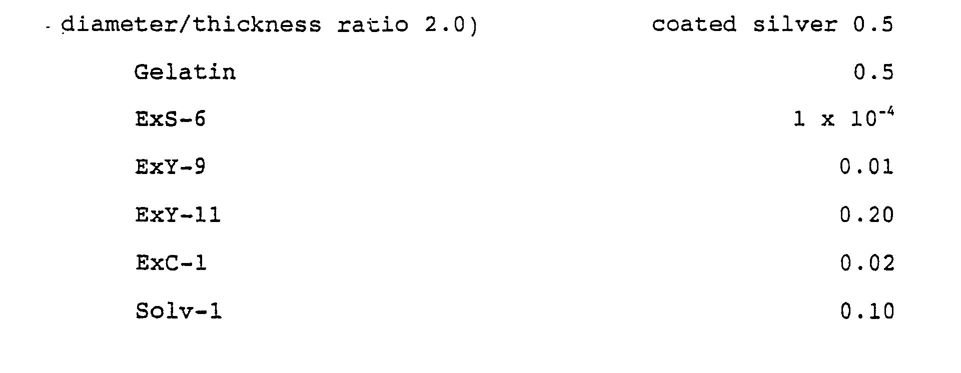

### Fifteenth layer (first protective layer)

Fine-grained silver iodobromide emulsion (AgI 2 mol%, uniform AgI type, sphere equivalent diameter

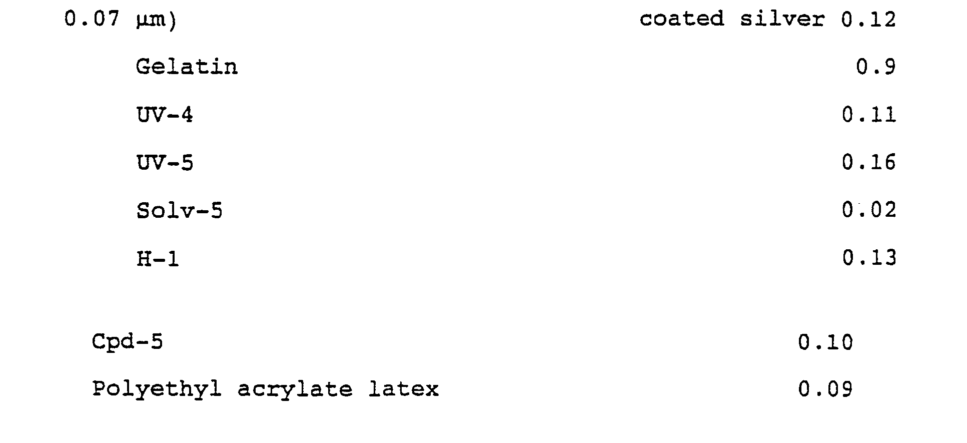

### Sixteenth laver (second protective laver)

Fine grained silver iodobromide emulsion (AgI 2 mol%, uniform AgI type, sphere equivalent diameter

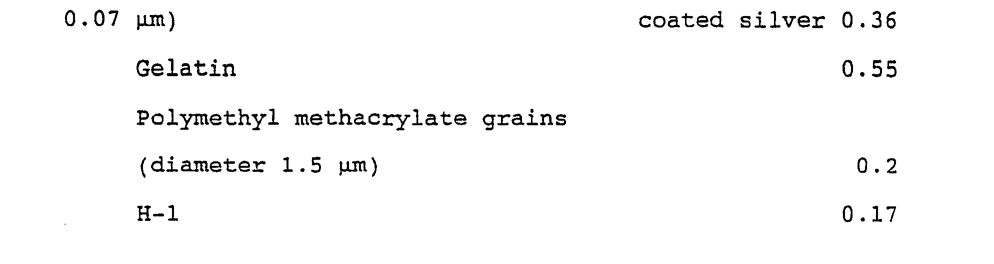

In addition to the above components, the emulsion stabilizer Cpd-3 (0.07 g/m²) and the surfactant Cpd-4 ).03 g/m²) as an auxiliary coating agent were added to each of the layers.

### Compounds used in the layers

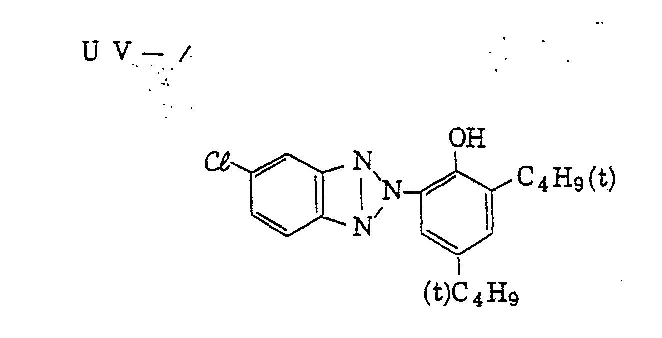

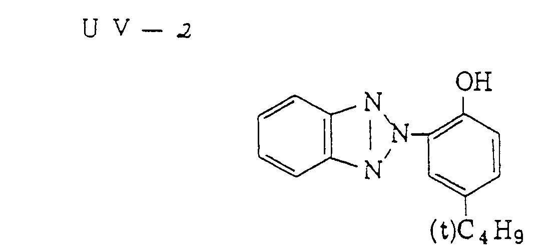

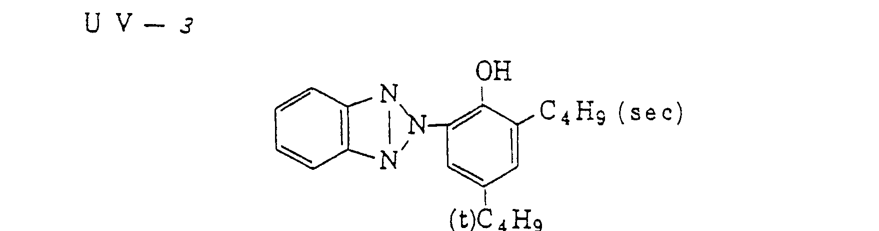

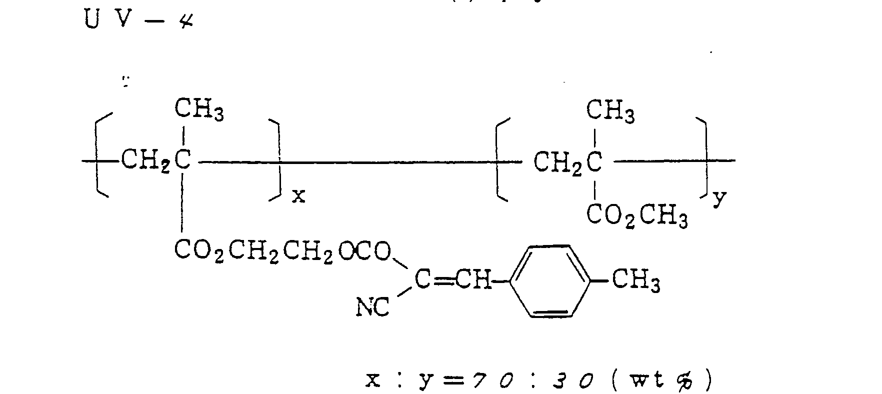

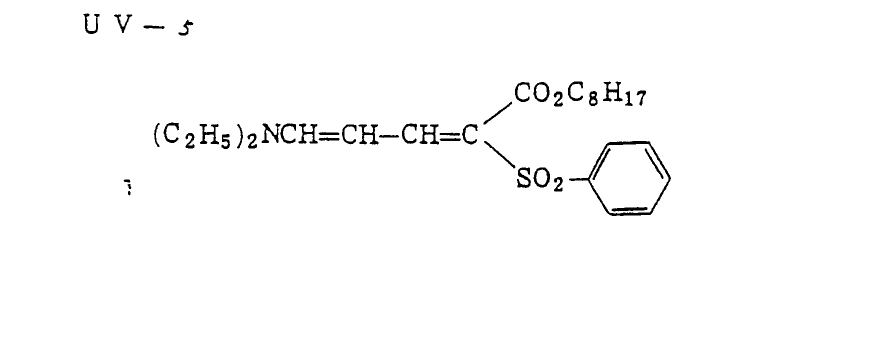

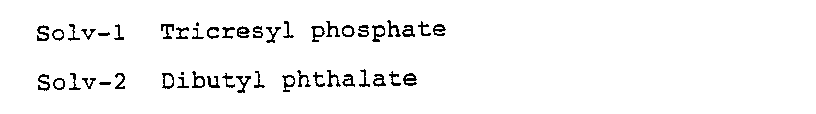

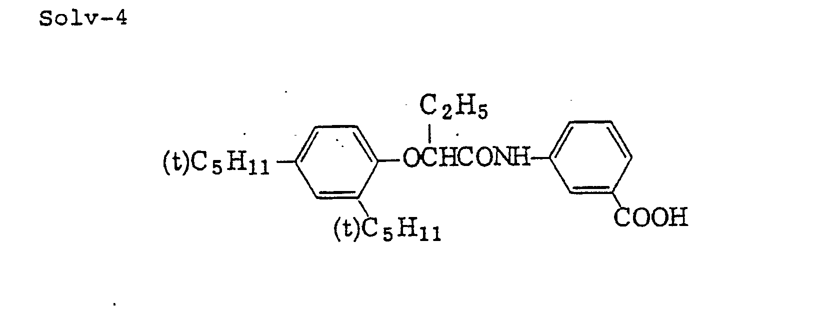

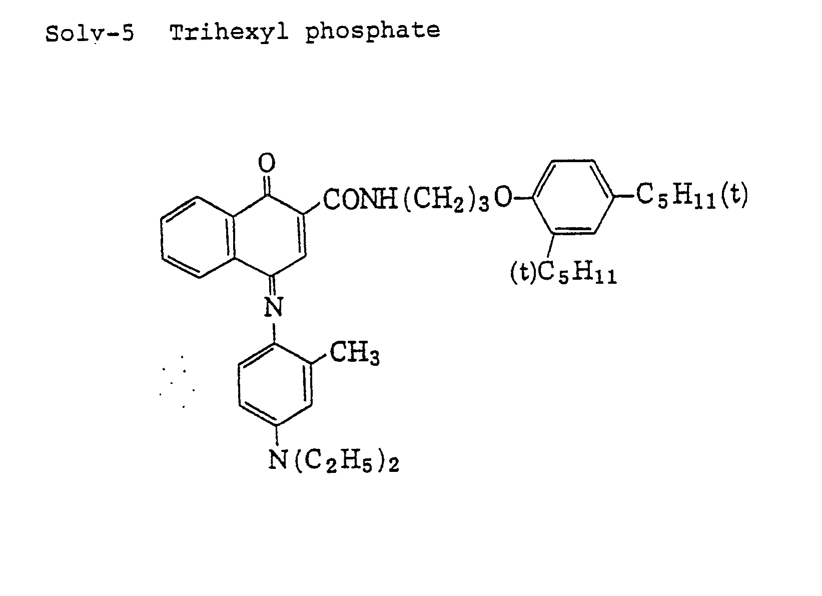

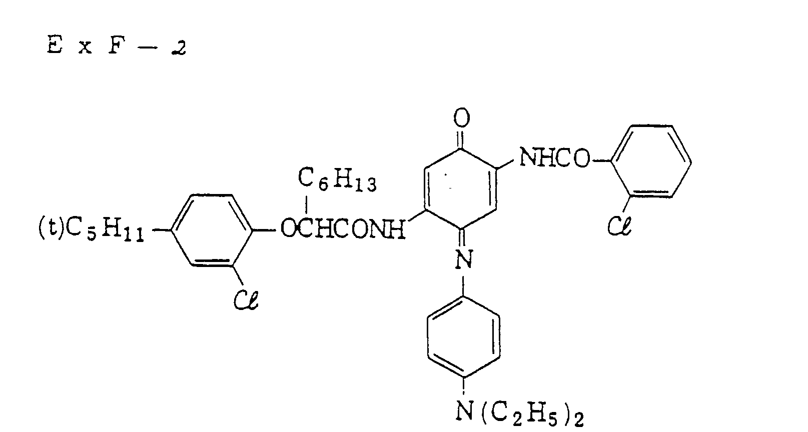

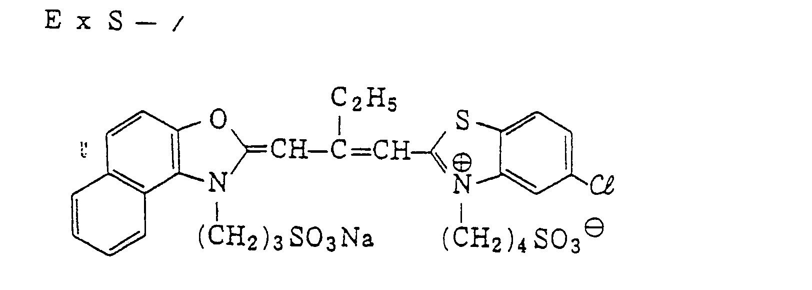

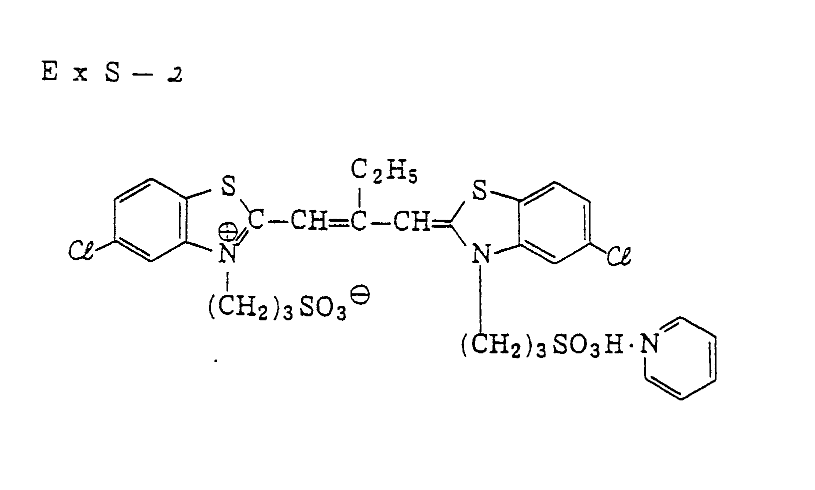

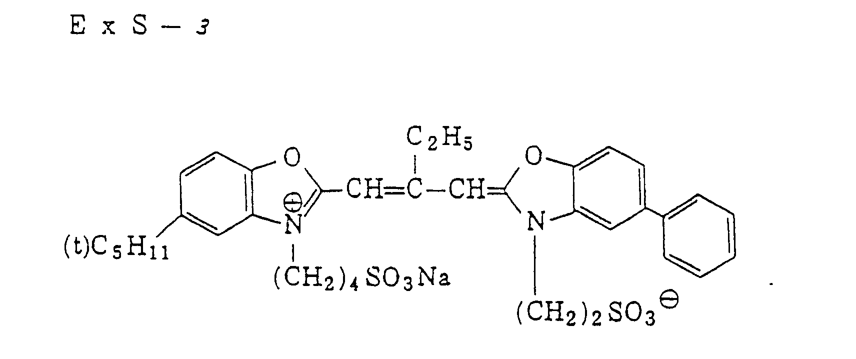

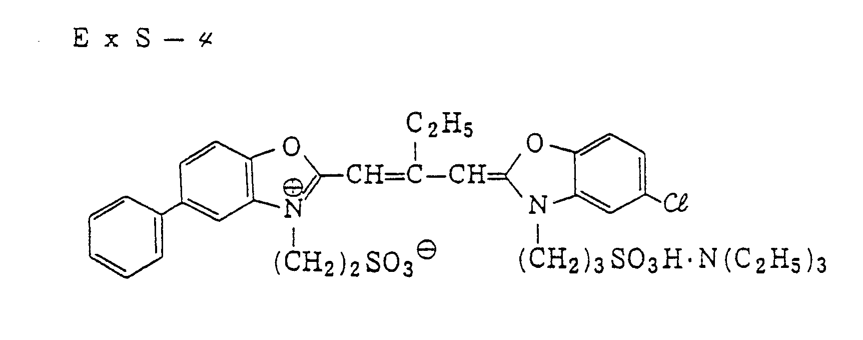

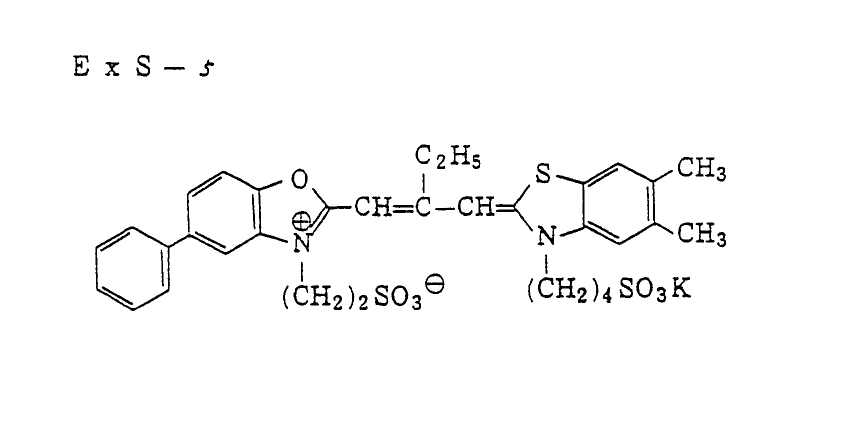

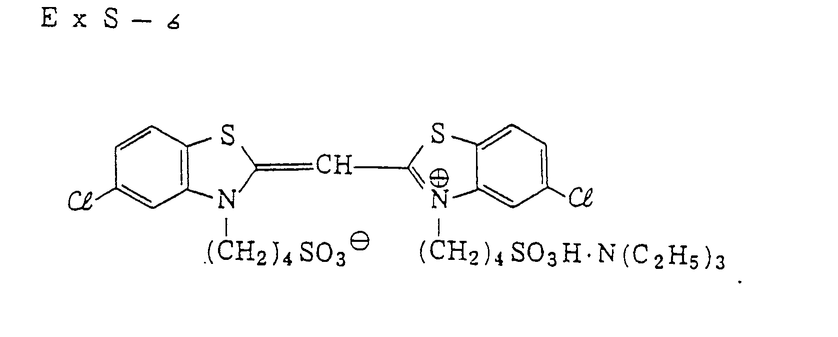

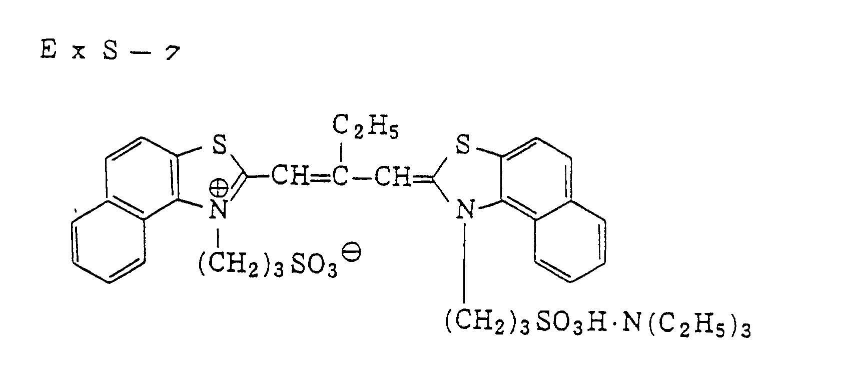

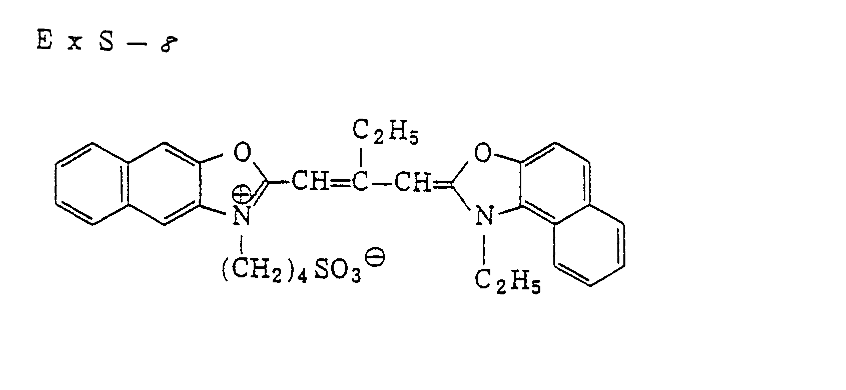

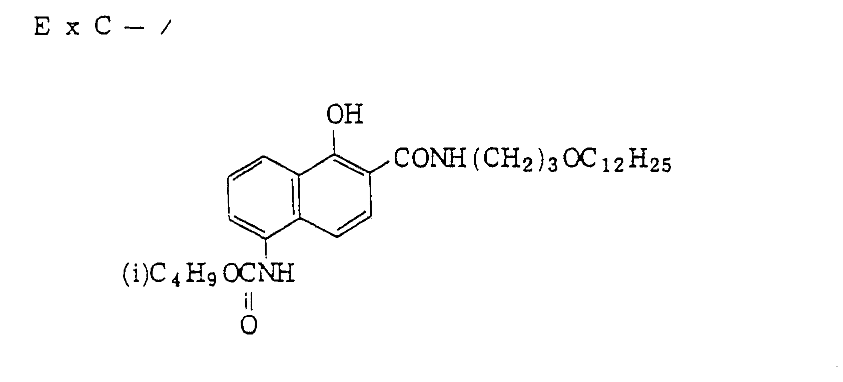

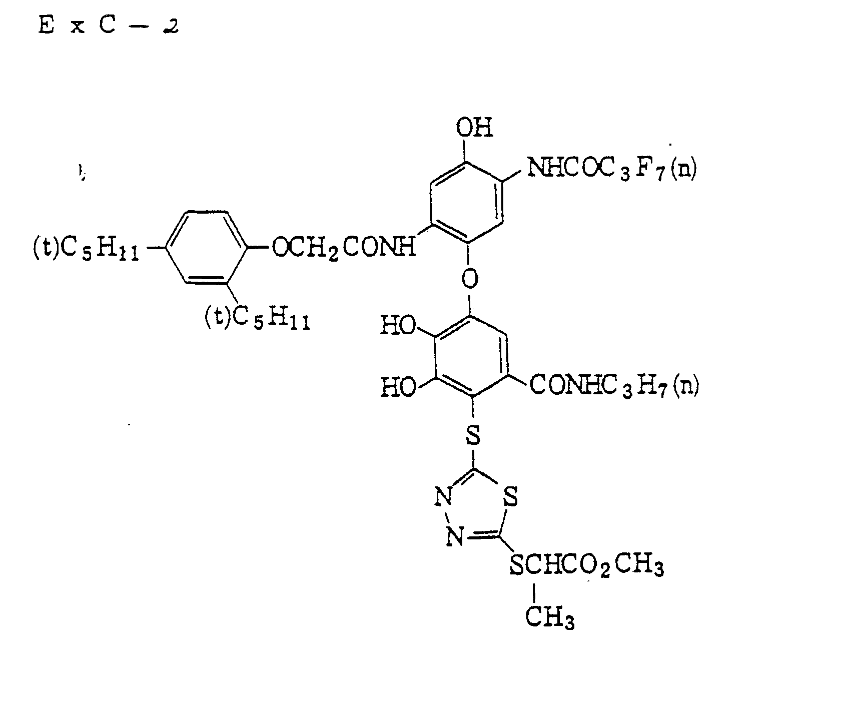

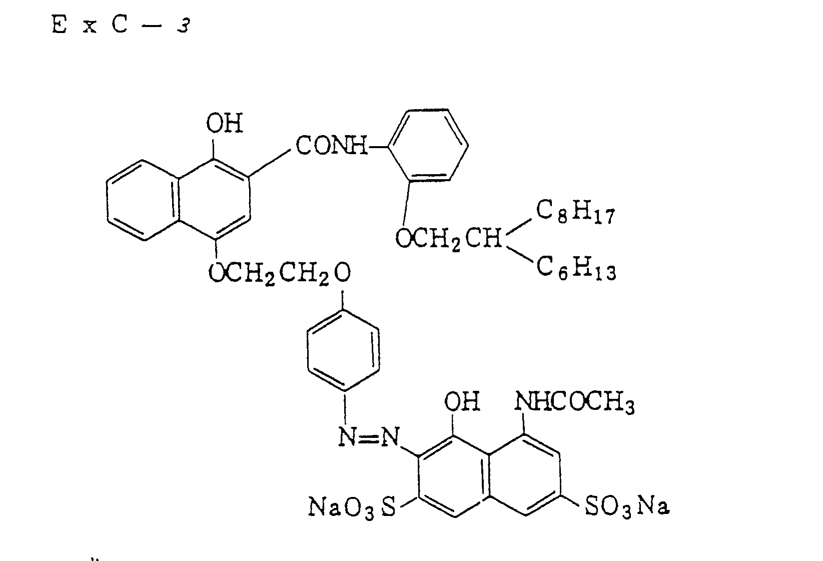

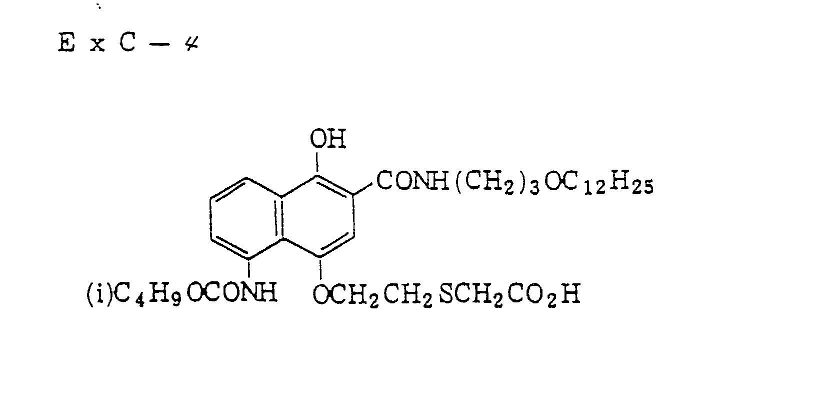

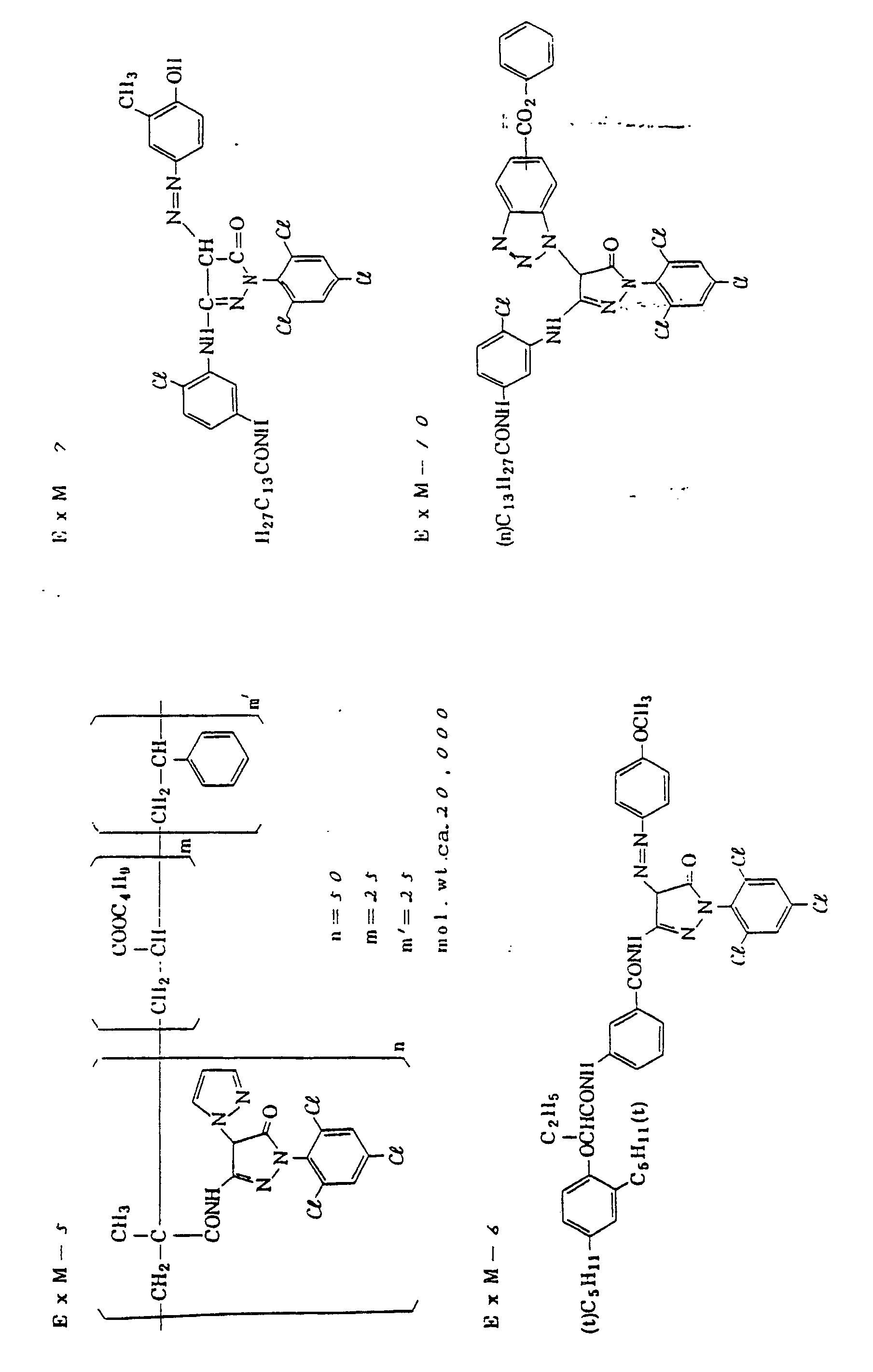

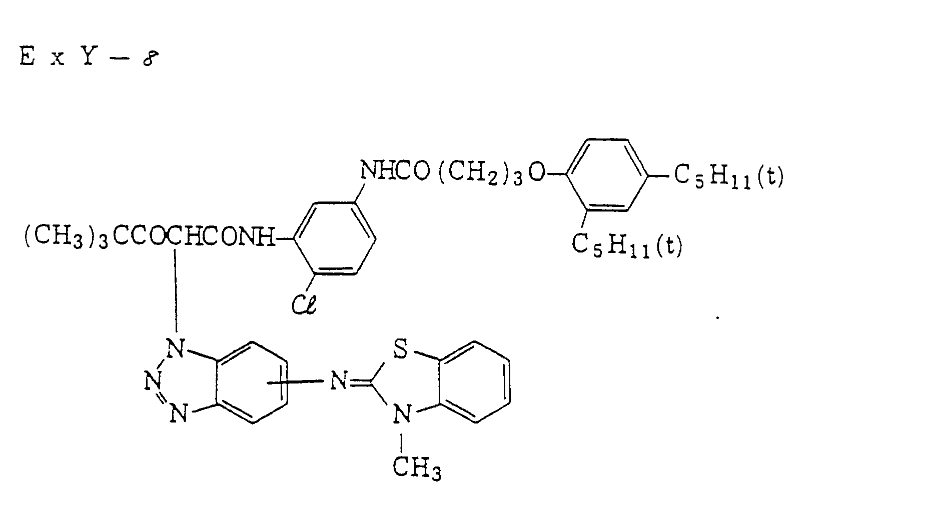

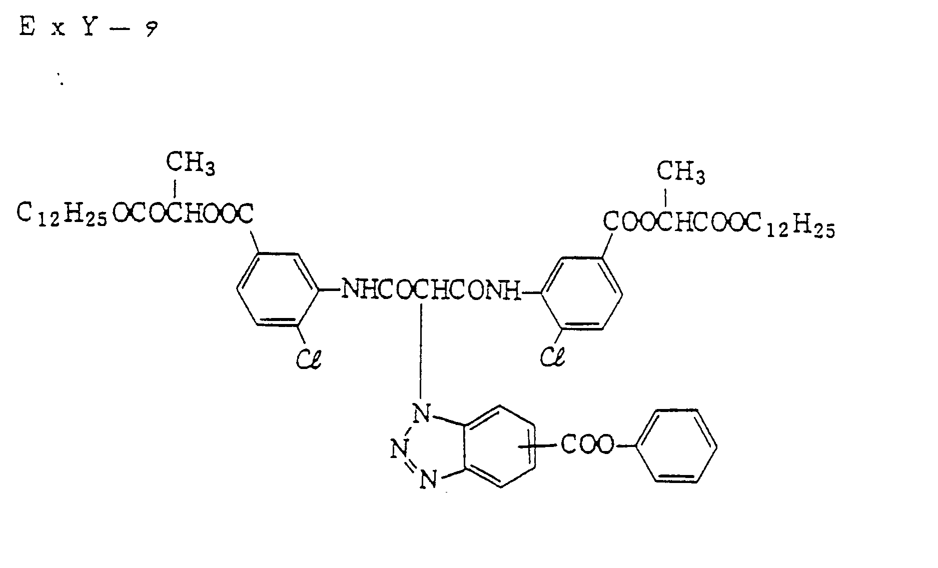

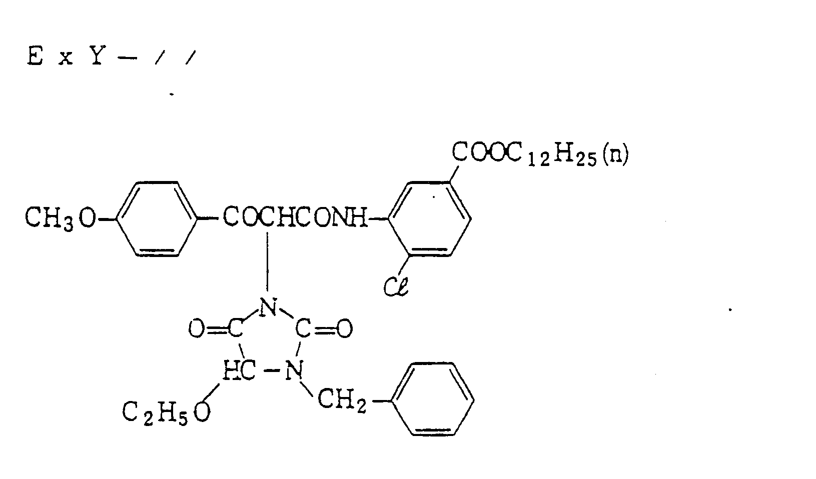

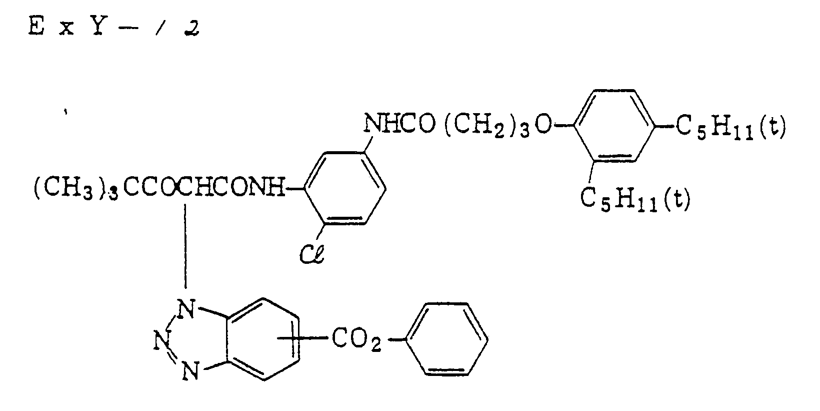

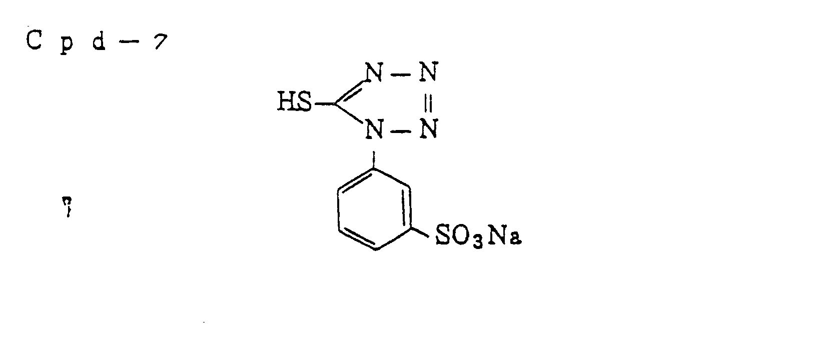

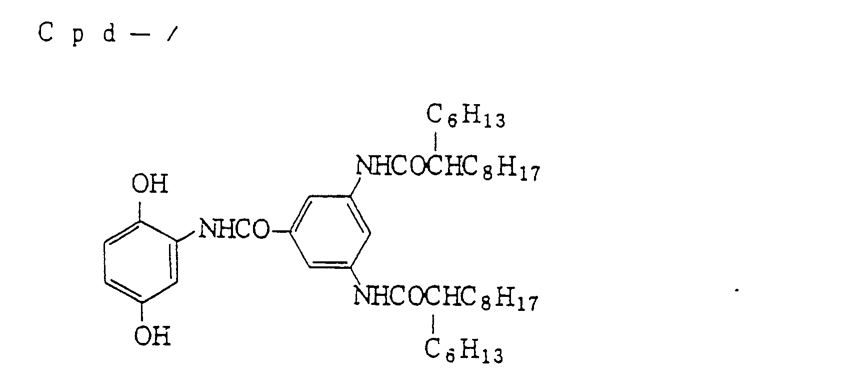

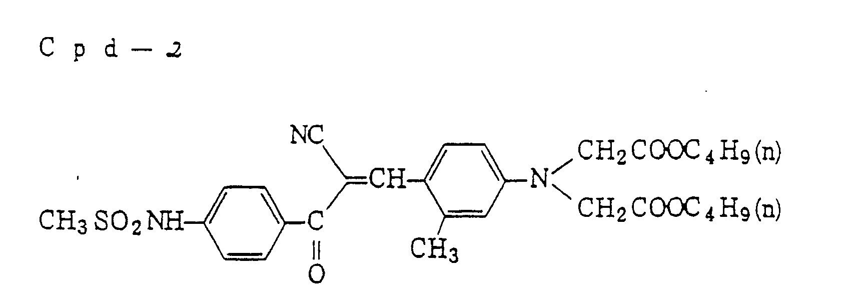

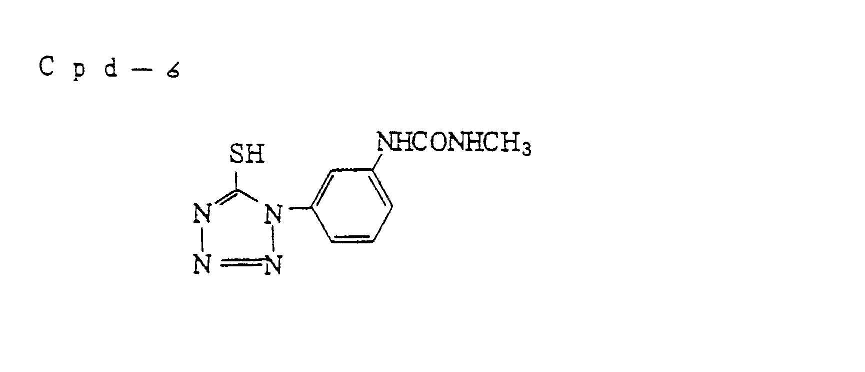

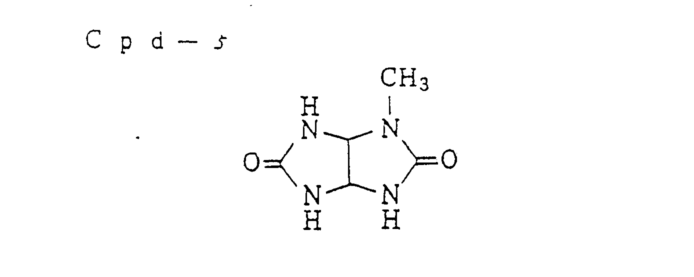

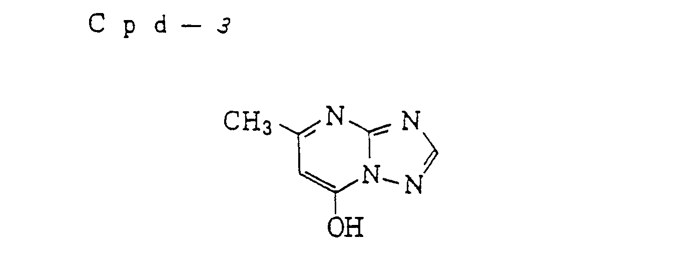

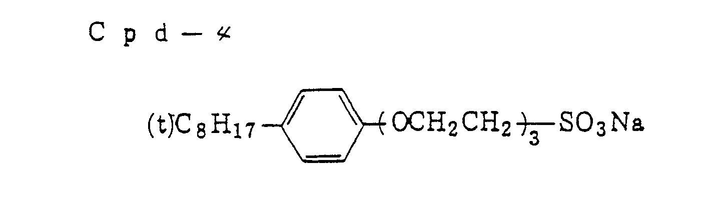

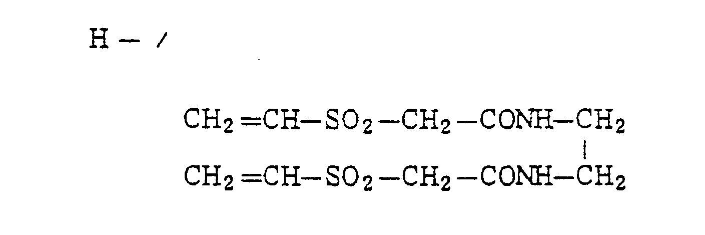

### Preparation of sample 5-2

Instead of Cpd-2 in the eleventh layer of sample 5-1, compound 1 of this invention was substituted in a molar amount equal to that of Cpd-2. A dispersion method for compound 1 of this invention is given below. The dispersion of Cpd-1 and Solv-2 excluding Cpd-2 was obtained by the same method as that for the preparation of sample 5-1. Apart from this, the preparation was the same as that for sample 501.

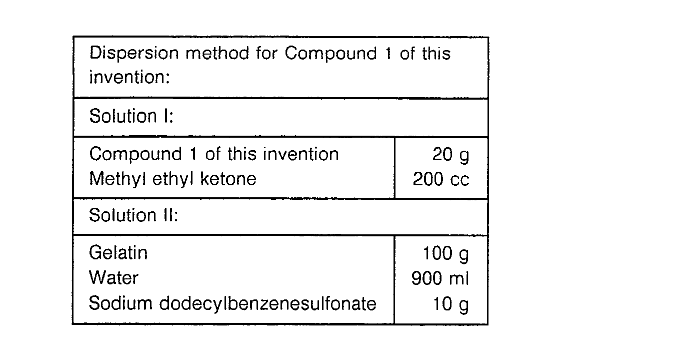

A fine dispersion of Compound 1 was obtained by introducing Solution I into the chamber of an injecting device and ejecting this into Solution II from a 0.2 mm nozzle. The methyl ethyl ketone and sodium dodecylbenzenesulfonate were removed from this dispersion using an ultrafiltration membrane.

### Preparation of sample 5-3

Sample 5-3 was prepared in the same way as sample 5-2 except that compound 3 of this invention was used instead of compound 1 of this invention in the eleventh layer of sample 5-2.

The color photographic material samples 5-1 to 5-3 as described above were exposed using a light emitted from a tungsten lamp with an exposure amount of 25 CMS while adjusting the color temperature at 4,800 K by means of a filter and then processed using the method described in Table 4.

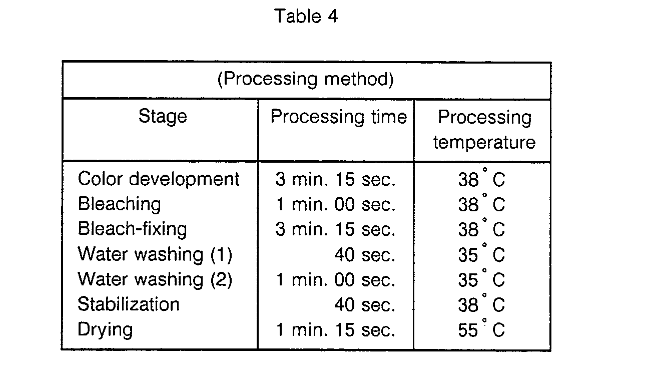

The compositions of the processing solutions are given below.

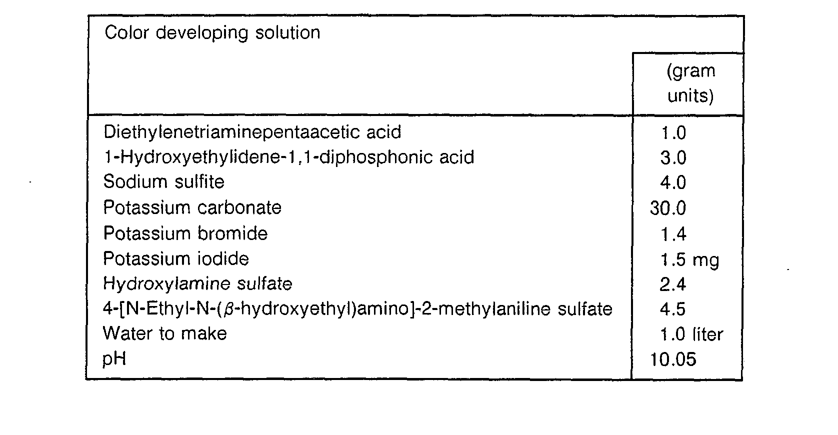

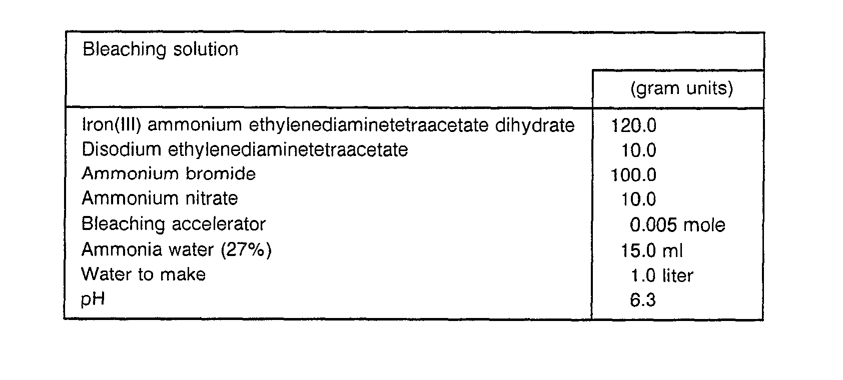

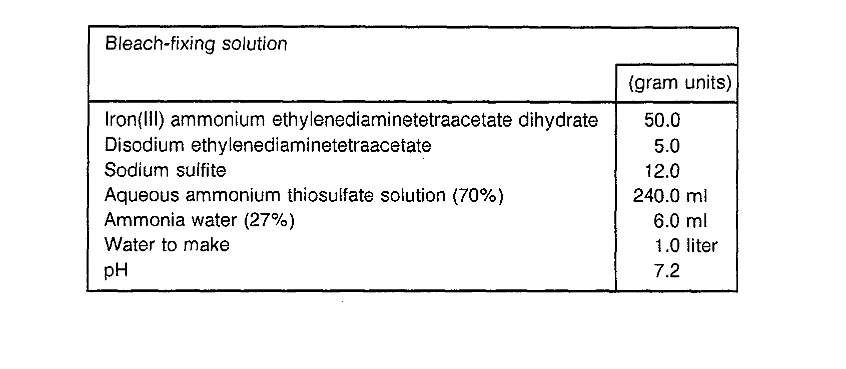

### Washing solution

Tap water was treated using calcium and magnesium ion concentrations of 3 mg/l or less by passing through a mixed bed column charged with an H-type strongly acidic cation exchange resin (Amberlite® IR- ₁20 B made by the Rohm and Haas Co. Ltd.) and an OH-type anion exchange resin (Amberlite® IR-400 made by the same company), and then 20 mg/I of sodium dichloroisocyanurate and 1.5 g/I of sodium sulfate were added. The pH of this solution was in the region 6.5 - 7.5.

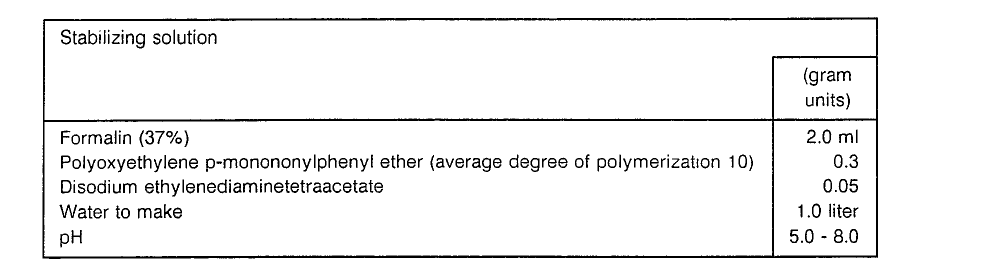

The results obtained are shown in Table 5 below.

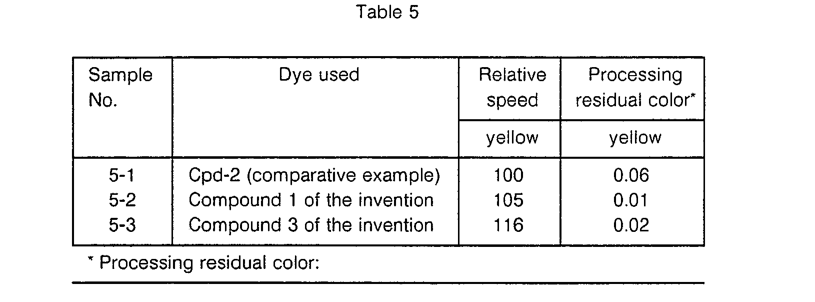

(The Dmin (minimum density) obtained with the processing of this example) - (the Dmin obtained by further processing for 10 minutes in 30 g/I of sodium sulfite)

Table 5 shows that by using the dyes of this invention in a yellow filter layer, it is possible to obtain color photographic materials in which the speed reduction is small and the processing residual color is slight.

### Example 6

The same procedures as in Example 4 were followed, except that the blue-sensitive emulsion, green-sensitive emulsion and red-sensitive emulsion were respectively replaced by a silver chlorobromide emulsion (AgBr 0.6 mol%, cubic grains, average grain size 0.8 u., variation coefficient 0.08), a silver chlorobromide emulsion (AgBr 1.2 mol%, cubic grains, average grain size 0.42 µ, variation coefficient 0.07) and a silver chlorobromide emulsion (AgBr 1.5 mol%, cubic grains, average grain size 0.45 µ, variation coefficient 0.07). Thus, there were prepared samples 6-1 to 6-4 which are respectively corresponsing to samples 4-1 to 4-4.

Each of the blue-sensitive, green-sensitive and red-sensitive emulsions had a spectral dye or dyes and Cpd-10 set forth below, in which the silver bromide was present while forming a local phase in part of the grain.

### Blue sensitive emulsion layer

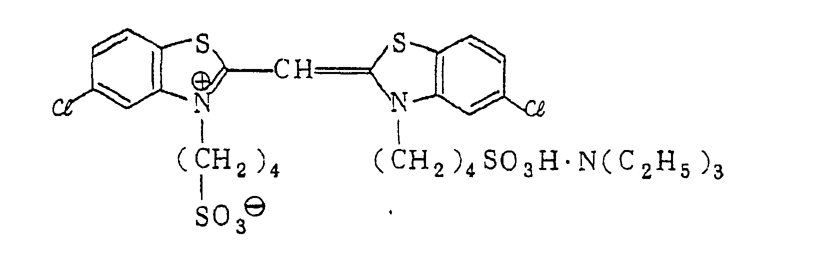

(2.5 x 10-⁴ mole per mole of silver halide) and 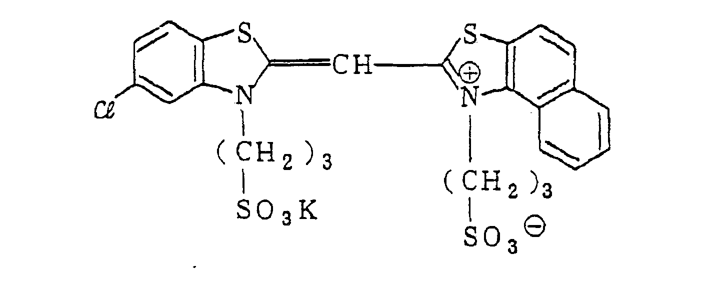 (2.5 x 10-⁴ mole per mole of silver halide)

### Green-sensitive emulsion layer

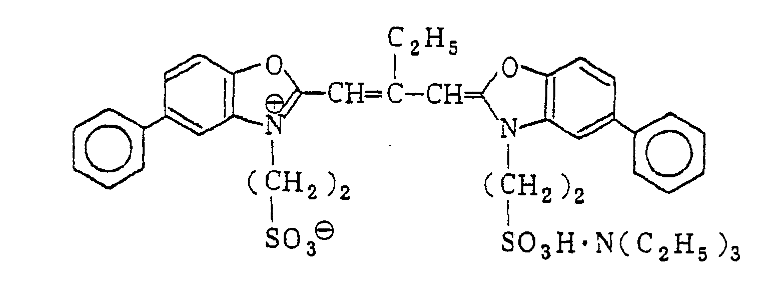

(4.0 x 10⁻⁴ mole per mole of silver halide) and 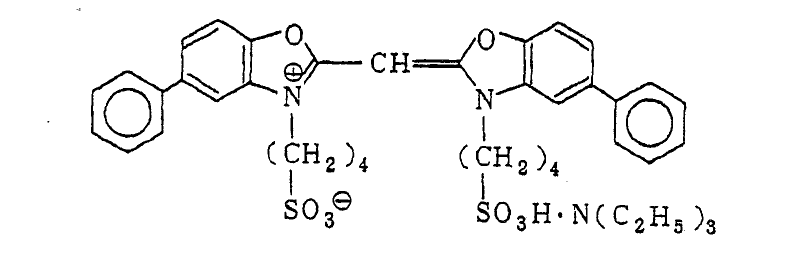 (7.0 x 10-⁵ mole per mole of silver halide)

### Red-sensitive emulsion layer

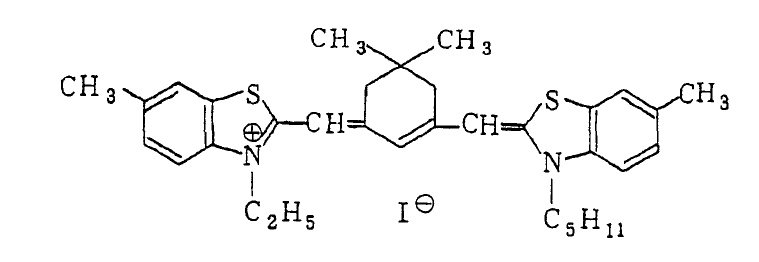

(0 .9 x 10⁻⁴ mole per mole of silver halide) (Cpd - 10)

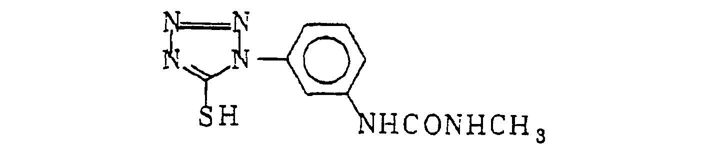

This compound was added to each of the emulsions in an amount of 5 x 10⁻⁴ mole per mole of silver halide.

The color photographic material samples 6-1 to 6-4 were processed with the following processing solutions under the conditions set forth below and tested in the same manner as in Example 4. The results obtained are shown in Table 6.

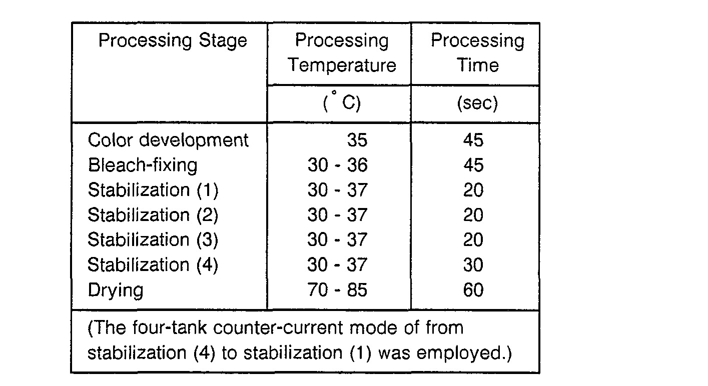

The compositions of the processing solutions are given below.

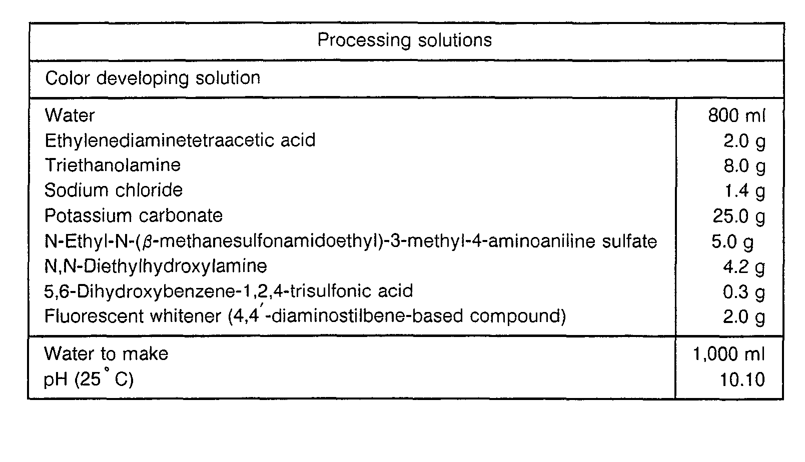

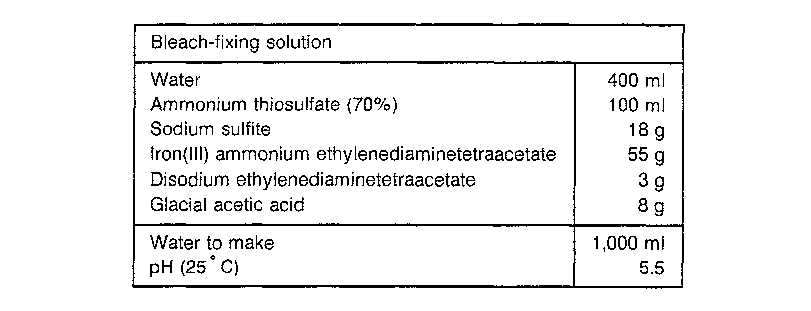

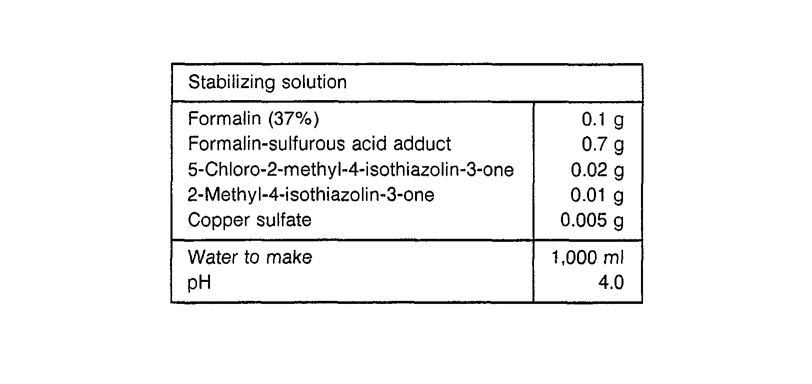

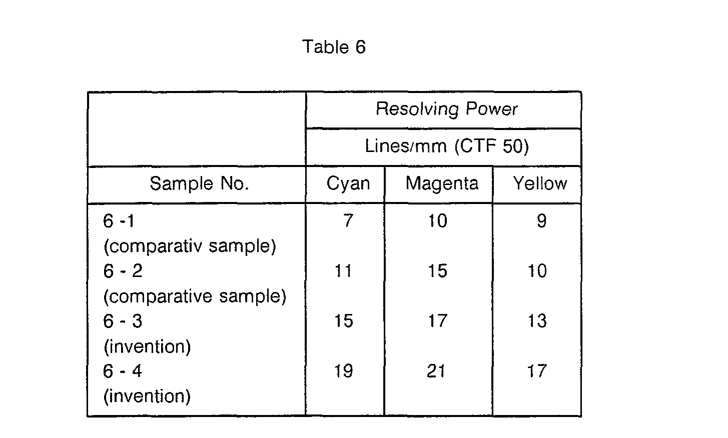

It is clear from Table 6 that samples 6-3 and 6-4 were high in sensitivity of each of the red-sensitive and green-sensitive layers. Further, samples 6-3 and 6-4 had a low Dmin comparable to sample 6-2 and were higher in resolving power than any other samples.

While the invention has been described in detail and with reference to specific embodiments thereof, it will be apparent to one skilled in the art that various changes and modifications can be made therein without departing from the spirit and scope thereof.

## Claims

1. A silver halide photographic material comprising a support having thereon at least a photographic emulsion layer and a non-photosensitive hydrophilic colloid layer, said emulsion layer or colloid layer containing at least one type of dye represented by the following general formula (I): 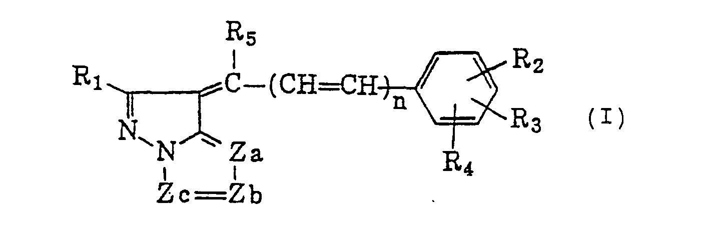 wherein:
R, represents an alkyl group, aryl group, alkoxy group, aryloxy group, acyl group, carboxyl group, alkoxycarbonyl group, aryloxycarbonyl group, amido group, carbamoyl group, alkylcarbamoyl group, dialkylcarbamoyl group, alkylsulfonamido group, arylsulfonamido group, sulfamoyl group, alkylsulfamoyl group, dialkylsulfamoyl group, arylsulfamoyl group, mono- or dialkylamino group, arylamino group, ureido group, alkylsulfonyl group, arylsulfonyl group, hydroxyl group, cyano group or halogen atom;
R₂, R₃ and R4 respectively represent a hydrogen atom, halogen atom, alkyl group, alkoxy group, alkylamino group, dialkylamino group, arylamino group or diarylamino group;.
R₅ represents a hydrogen atom, alkyl group or benzyl group;
Za, Zb and Zc each represents -N = or 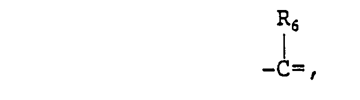 wherein Rs represents an alkyl group or aryl group;
n represents 0 or 1; and at least one carboxyl group, alkylsulfonamido group or arylsulfonamido group is contained in the molecule.

2. The silver halide photographic material of claim 1, wherein said dye is dispersed in the form of a fine powder.

3. The silver halide photographic material of claim 1, wherein said dye is present in a hydrophilic colloid layer of said material.

4. The silver halide photographic material of claim 1, wherein:
R, represents an alkyl group with 1 - 4 carbon atoms, aryl group with 6 - 10 carbon atoms, alkoxy group with 1 - 4 carbon atoms, aryloxy group with 6 - 10 carbon atoms, acyl group with 2 - 10 carbon atoms, carboxyl group, alkoxycarbonyl group with 2 - 6 carbon atoms, aryloxycarbonyl group with 7 -10 carbon atoms, amido group with 1 - 6 carbon atoms, carbamoyl group, alkylcar-bamoyl group with 2 - 6 carbon atoms, dialkylcarbamoyl group with 3 - 7 carbon atoms, alkylsulfonamido group with 1 - 6 carbon atoms, arylsulfonamido group with 6 - 10 carbon atoms, sulfamoyl group, alkylsulfamoyl group with 1 - 6 carbon atoms, dialkylsulfamoyl group with 2 -6 carbon atoms, arylsulfamoyl group with 6 - 10 carbon atoms, mono-or dialkylamino group with 1 - 6 carbon atoms, arylamino group, ureido group, alkylsulfonyl group with 1 - 6 carbon atoms, arylsulfonyl group, hydroxyl group, cyano group, or halogen atom;
R₂, R₃ and R₄ each independently represents a hydrogen atom, halogen atom, alkoxy group with 1 - 4 carbon atoms, alkyl group with 1 - 4 carbon atoms, alkyl-amino group with 1 - 6 carbon atoms, dialkylamino group with 1 6 carbon atoms, arylamino group, or diarylamino group; and R₂, R₃ and R4. may form 5- to 6- membered rings via nitrogen atoms;
R₅ represents a hydrogen atom, alkyl group with 1 - 4 carbon atoms, or benzyl group; and Za, Zb and Zc each represents -N = or 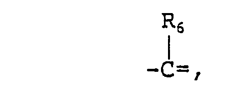 wherein R₆ represents an alkyl group with 1 - 10 carbon atoms or aryl group with 6 - 10 carbon atoms.

5. The silver halide photographic material of claim 1, wherein said dye represented by general formula (I) is used as a filter dye or an antihalation dye in an optical density range of 0.05 to 3.5.

6. The silver halide photographic material of claim 1, wherein said dye represented by general formula (I) is dispersed as fine crystal particles of an average size of about 10 u.m or less.

7. The silver halide photographic material of claim 6, wherein said dye represented by general formula (I) is dispersed as fine crystal particles of an average size of about 1 µm or less.

8. The silver halide photographic material of claim 1, wherein said dye represented by general formula (I) is used in an amount of about 1 to 1,000 mg per square meter of surface area of photosensitive material.
